# EUROPÄISCHE PATENTSCHRIFT

(11) **EP 2 449 014 B1**
(45) Veröffentlichungstag und Bekanntmachung des Hinweises auf die Patenterteilung: **16.05.2018**
(21) Anmeldenummer: 10726541.5
(22) Anmeldetag: 01.07.2010
(51) Int. Cl.: C08K 3/38, C09K 21/04

(54) **BOROPHOSPHATE, BORAT-PHOSPHATE UND METALLBOROPHOSPHATE ALS NEUE FLAMMSCHUTZADDITIVE FÜR KUNSTSTOFFE**
BOROPHOSPHATE, BORATE PHOSPHATE, AND METAL BOROPHOSPHATE AS NOVEL FLAME PROOFING ADDITIVES FOR PLASTICS
BOROPHOSPHATES, PHOSPHATES DE BORATE ET MÉTALLOBOROPHOSPHATES COMME NOUVEAUX ADDITIFS IGNIFUGES POUR MATIÈRES PLASTIQUES

(30) Priorität: 02.07.2009 EP 09164369
(43) Veröffentlichungstag der Anmeldung: 09.05.2012
(73) Patentinhaber: BASF SE, 67056 Ludwigshafen am Rhein (DE)
(72) Erfinder: EWALD, Bastian, 67061 Ludwigshafen (DE); HIBST, Hartmut, 69198 Schriesheim (DE)
(86) Internationale Anmeldenummer: PCT/EP2010/059366
(87) Internationale Veröffentlichungsnummer: WO 2011/000913

(56) Entgegenhaltungen:
- WO-A1-95/25066

## Beschreibung

Die vorliegende Erfindung betrifft eine Mischung, enthaltend mindestens einen Kunststoff K, bevorzugt einen thermoplastischen oder duroplastischen Kunststoff, und 0,1 bis 50 Gew.-%, bezogen auf die gesamte Mischung, mindestens einer Verbindung A, ausgewählt aus der Gruppe bestehend aus Borophosphaten, Borat-Phosphaten, Metalloborophosphaten und Mischungen davon, ein Verfahren zur Herstellung dieser Mischung durch Vermischen des mindestens einen Kunststoffes K mit mindestens einer Verbindung A und die Verwendung einer solchen Verbindung A als Flammschutzmittel in Kunststoffen.

Die folgende Definition der Begriffe "Borophosphate", "Borat-Phosphate" und "Metalloborophosphate" ist dem Artikel Structural Chemistry of Borophosphates, and Related Compounds, B. Ewald, Y.-X. Huang und R. Kniep, Z. Anorg. Chem. 2007, 633, 1517-1540, entnommen.

Borat-Phosphate enthalten isolierte und/oder kondensierte Boratanionen neben isolierten und/oder kondensierten Phophatanionen. Daneben können beliebige weitere Anionen vorliegen, z. B. Carbonat, Sulfat, Halogenid, Hydroxid, Silikat etc.

In Borophosphaten sind mindestens eine Borat- und eine Phosphateinheit aneinander kondensiert, wobei daneben weitere isolierte und/oder kondensierte Boratanionen sowie isolierte und/oder kondensierte Phosphatanionen vorliegen können. Daneben können beliebige weitere Anionen vorliegen, z. B. Carbonat, Sulfat, Halogenid, Hydroxid, Silikat etc.

Liegt in der Struktur mindestens je Borateinheit, eine Phosphateinheit und ein Metallkomplexanion mit der Koordinationszahl 4 im anionischen Teil der Struktur vor, so handelt es sich um ein Metalloborophosphat, unabhängig vom Kondensationsgrad der Baueinheiten. Daneben können beliebige weitere Anionen vorliegen, z. B. Carbonat, Sulfat, Halogenid, Hydroxid, Silikat etc.

Zusätzlich können die Oxo/Hydroxoliganden (O, OH) der Borat-, Phosphat-Metallat-, Borophosphat- und Metalloborophosphatanionen substituiert sein, zum Beispiel durch Halogene (F, Cl, Br, I) oder organische Gruppen wie lineare, verzweigte oder zyklische Alkylreste oder aromatische Gruppen. Daneben können beliebige weitere Anionen vorliegen, z. B. Carbonat, Sulfat, Halogenid, Hydroxid, Silikat etc.

Entsprechende Bor-enthaltende Verbindungen und Mischungen enthaltend Kunststoffe und Bor-enthaltende Verbindungen sind aus dem Stand der Technik bereits bekannt. Ebenfalls sind entsprechende Phosphor-enthaltende Verbindungen, z. B. Ammoniumpolyphosphate (Clariant) und Mischungen davon bekannt.

In DE 195 25 341 A1 werden ein Verfahren zur Herstellung von Borophosphaten und deren Verwendung als feuerhemmende Anstriche bzw. Imprägnierungen von leicht brennbaren Stoffen, beispielsweise Papier, Holz, Pappe, Textilien etc., offenbart. Es wird auch offenbart, dass Borophosphate, beispielsweise Ca-borophosphate, zum Schutz gegen Flammen in Kunststoffe eingearbeitet werden können. In dieser Schrift werden keine Kunststoffe, und neben Ca-borophosphaten keine weiteren Verbindungen und keine Mengen der einzelnen Komponenten offenbart.

WO 95/25066 offenbart kristalline Borophosphate, ihre Herstellung und Verwendung, u. a. als Katalysatoren oder Flammschutzmittel in Kunststoffen. Als Verbindungen werden insbesondere Kaliumborophosphat, Calciumborophosphat, Na₂[B₇P₃O₁₉] * H₂O, Na₂[B_{3,9}P_{0,1}(OH)₃O_{5,2}] * 3 H₂O, Lüneburgit [Mg₃B₂(OH)₆(PO₄)₂(H₂O)₆], Strontiumborophosphat, Nickelborophosphat und Ba₃[BP₃O₁₂] genannt. Für die Verwendung in Kunststoffen werden keine Mengen angegeben.

In dem Artikel Structural Chemistry of Borophosphates, and Related Compounds, B. Ewald, Y.-X. Huang und R. Kniep, Z. Anorg. Chem. 2007, 633, 1517-1540, werden zahlreiche Borophosphate, Borat-Phosphate und Metalloborophosphate offenbart. Es wird jedoch nicht offenbart, dass diese Verbindungen als Flammschutzmittel geeignet sind.

In dem Artikel R. Kniep, G. Gözel, B. Eisemann, C. Röhr, M. Asbrand und M Kizilyalli, Angew. Chem. Int. Ed. Engl. 1994, 33, Nr. 7, 749 werden ebenfalls verschiedene Borophosphate der Formeln M^{II}[BPO₅] mit M^{II} = Ca oder Sr und Ba₃[P₃O₁₂] offenbart, wobei nicht offenbart wird, dass diese Verbindungen als Flammschutzmittel in Kunststoffen geeignet sind.

Aufgabe der vorliegenden Erfindung gegenüber dem Stand der Technik ist es, flammgeschützte Kunststoffe, beispielsweise thermoplastische oder duroplastische Kunststoffe, bereit zu stellen, die die Nachteile der bekannten Kunststoffe, beispielsweise verschlechterte mechanische Kennwerte bzw. die Notwendigkeit, wenigstens zwei Verbindungen oder mehr gemeinsam als Additive zumischen zu müssen, nicht aufweisen. Eine weitere Aufgabe der vorliegenden Erfindung ist es, flammgeschützte Kunststoffe bereit zu stellen, die als Flammschutzmittel lediglich eine geringe Anzahl an Additiven aufweisen,, möglichst in geringer Menge, und nicht mehrere Additive aufweisen müssen, wie aus dem Stand der Technik bekannt. Des Weiteren sollen die erfindungsgemäßen Mischungen mehrere flammschützende Eigenschaften in einer Verbindung, die ansonsten durch Zugabe von zwei einzelnen Verbindungen erzielt würde, kombinieren, um auf diese Weise den Gesamtgehalt an Additiven zu reduzieren. So sollen beispielsweise bessere mechanische Eigenschaften erzielt werden.

Darüber hinaus sind einige Flammschutzmittel des Standes der Technik aufgrund der hohen Verarbeitungstemperatur der Thermoplasten in ihrer Anwendung limitiert, d. h. sie zersetzen sich bereits bei Temperaturen im Bereich der Verarbeitungstemperatur. So können die Temperaturen bei der Verarbeitung von PBT und PA bei bis zu 200 bis 270 bzw. 250 bis 320 °C liegen. Bekannte Flammschutzadditive wie Al(OH)₃ können sich in diesem Bereich bereits signifikant zersetzen (Wasserabgabe).

Diese Aufgaben werden gelöst durch die erfindungsgemäße Mischung, enthaltend mindestens einen Kunststoff K und 1,0 bis 30 Gew.-%, bezogen auf die gesamte Mischung, und mindestens eine Verbindung A, ausgewählt aus der Gruppe bestehend aus Borophosphaten, Borat-Phosphaten, Metalloborophosphaten und Mischungen davon.

In einer bevorzugten Ausführungsform wird als Kunststoff mindestens ein thermoplastischer oder duroplastischer Kunststoff eingesetzt.

### Thermoplastischer oder duroplastischer Kunststoff K

Grundsätzlich zeigt sich der vorteilhafte Effekt bei Kunststoffen, bevorzugt thermoplastische oder duroplastische Kunststoffe, jeglicher Art. Eine Aufzählung geeigneter thermoplastischer Kunststoffe findet sich beispielsweise im Kunststoff-Taschenbuch (Hrsg. Saechtling), Auflage 1989, wo auch Bezugsquellen genannt sind. Verfahren zur Herstellung solcher thermoplastischer Kunststoffe sind dem Fachmann an sich bekannt.

In einer bevorzugten Ausführungsform der erfindungsgemäßen Mischung ist der mindestens eine Kunststoff K ausgewählt aus der Gruppe bestehend aus Polyoxymethylenhomo- oder -copolymerisaten, Polycarbonaten, Polyestern, Polyolefinen, Poly(meth)acrylaten, Polyamiden, vinylaromatischen Polymeren, Polyarylenethern, Epoxy-Harzen und Mischungen davon. Diese bevorzugten thermoplastischen oder duroplastischen Kunststoffe werden im Folgenden erläutert.

### Polyoxymethylenhomo- oder -copolymerisate

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf. Die Homopolymeren werden im Allgemeinen durch Polymerisation von Formaldehyd oder Trioxan hergestellt, vorzugsweise in der Gegenwart von geeigneten Katalysatoren.

Bevorzugt werden Polyoxymethylencopolymere, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 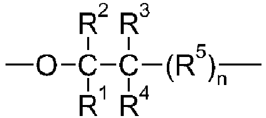 enthalten, wobei R¹ bis R⁴ unabhängig voneinander ein Wasserstoffatom, eine C₁- bis C₄- Alkylgruppe oder eine halogensubstituierte Alkylgruppe mit 1 bis 4 C-Atomen und R⁵ eine -CH₂-, -CH₂O-, eine C₁- bis C₄- Alkyl- oder C₁- bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 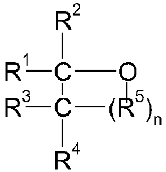 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3- Dioxolan und 1,3-Dioxepan als cyclische Ether genannt sowie lineare Oligo- oder Polyformale wie Polydioxolan oder Polydioxepan als Comonomere genannt.

Weitere geeignete Kunststoffe K sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 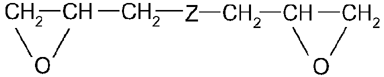 und/oder 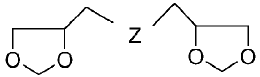 wobei Z eine chemische Bindung, -O-, -ORO- (R= C₁- bis C₈-Alkylen oder C₃- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben.

Die bevorzugten Polyoxymethylencopolymere haben Schmelzpunkte von mindestens 150 °C und Molekulargewichte (Gewichtsmittelwert) Mw im Bereich von 5000 bis 200000, vorzugsweise von 7000 bis 150000 g/mol.

Endgruppenstabilisierte Polyoxymethylenpolymerisate, die an den Kettenenden C-C-Bindungen aufweisen, werden besonders bevorzugt.

### Polycarbonate und Polyester

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im Allgemeinen - wie auch im Folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4- Dihydroxydiphenyl sowie Mischungen der vorgenannten Dihydroxyverbindungen. Besonders bevorzugte Polycarbonate sind solche auf der Basis von Bisphenol A oder Bisphenol A zusammen mit bis zu 30 mol-% der vorstehend genannten aromatischen Dihydroxyverbindungen.

Die relative Viskosität dieser Polycarbonate liegt im Allgemeinen im Bereich von 1,1 bis 1,5, insbesondere 1,28 bis 1,4 (gemessen bei 23 °C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, iso- bzw. n-Propyl und n-, iso- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, iso- bzw. n-Propyl und n-, iso- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethylanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt, wobei auch Polyethylenterephthalat als Rezyklat bis zu 50 Gew.-%, bezogen auf A), eingesetzt werden kann.

Die Viskositätszahl der Polyester (A) liegt im Allgemeinen im Bereich von 60 bis 220, vorzugsweise von 100 bis 150, gemessen in einer 0,5 gew.- %igen Lösung in einem Phenol/o-Dichlorbenzolgemisch (Gew.-Verh. 1:1) bei 25 °C.

Insbesondere bevorzugt sind Polyester, deren Carboxylendgruppengehalt bis zu 100 mmol/kg, bevorzugt bis zu 50 mmol/kg und insbesondere bis zu 40 mmol/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 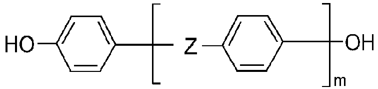 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff oder Schwefelatom oder eine chemische Bindung darstellt und in der m den Wert 0 bis 2 hat. Die Dihydroxyverbindungen können an den Phenylengruppen auch C₁-C₆-Alkyl- oder Alkoxygruppen und Fluor, Chlor oder Brom als Substituenten tragen.

Als Stammkörper dieser Verbindungen seinen beispielsweise Dihydroxydiphenyl, Di-(hydroxyphenyl)alkan, Di-(hydroxyphenyl)cycloalkan, Di-(hydroxyphenyl)sulfid, Di-(hydroxyphenyl)ether, Di-(hydroxyphenyl)keton, Di-(hydroxyphenyl)sulfoxid, a,a'-Di-(hydroxyphenyl)-dialkylbenzol, Di-(hydroxyphenyl)sulfon, Di-(hydroxybenzoyl)benzol Resorcin und Hydrochinon sowie deren kernalkylierte oder kernhalogenierte Derivate genannt.

Von diesen werden 4,4'-Dihydroxydiphenyl, 2,4-Di-(4'-hydroxyphenyl)-2-methylbutan a,a'-Di-(4-hydroxyphenyl)-p-diisopropylbenzol, 2,2-Di(3'-methyl-4'-hydroxyphenyl)propan und 2,2-Di-(3'-chlor-4'-hydroxyphenyl)propan, sowie insbesondere 2,2-Di-(4'-hydroxyphenyl)propan 2,2-Di(3',5'-dichlordihydroxyphenyl)propan, 1,1-Di-(4'-hydroxyphenyl)cyclohexan, 3,4'-Dihydroxybenzophenon, 4,4'-Dihydroxydiphenylsulfon und 2,2-Di(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel®(DuPont).

Als bevorzugte Dicarbonsäuren sind Naphthalindicarbonsäure, Terephthalsäure und Isophthalsäure oder deren Mischungen zu nennen. Bis zu 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4- Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im Allgemeinen im Bereich von 60 bis 200 ml/g, gemessen in einer 0,5 gew.-%igen Lösung in einem Phenol/o-Dichlorbenzolgemisch (Gew.-Verh. 1:1) bei 23 °C.

### Polyolefine

Hier sind ganz allgemein Polyethylen und Polypropylen sowie Copolymerisate auf der Basis von Ethylen oder Propylen, ggf. auch mit höheren alpha-Olefinen zu nennen. Entsprechende Produkte sind unter den Handelsnamen Lupolen® bzw. Hostalen®/Moplen® von BASELL erhältlich.

In einer bevorzugten Ausführungsform wird als Polyolefin mindestens ein Copolymer eingesetzt, aufgebaut aus Ethylen und Vinylacrylat. Diese werden beispielsweise in der Ummantelung von Kabeln eingesetzt. Dem Fachmann sind diese Copolymere bekannt.

### Poly(meth)acrylate

Hierunter sind insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter der Bezeichnung Plexiglas® erhältlich sind.

### Polyamide

Geeignete Polyamide weisen im Allgemeinen eine Viskositätszahl von 70 bis 350, vorzugsweise 110 bis 240 ml/g auf bestimmt in einer 0,5 gew.-%igen Lösung in 96 gew.-%iger Schwefelsäure bei 25 °C auf gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 4 bis 12, insbesondere 6 bis 8 Kohlenstoffatomen, sowie m-Xylylendiamin, Di-(4-aminophenyl)methan, Di-(4-aminocyclohexyl)methan, 2,2-Di-(4-aminophenyl)propan, 2,2-Di-(4-aminocyclohexyl)-propan oder 3,3'-Dimethyl-4,4'-diamino-dicyclohexylmethan, 4,4'-Diaminodicyclohexylmethan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Weitere geeignete Polyamide sind ausgesucht aus der Gruppe bestehend aus Polyamid-9, beispielsweise hergestellt aus 9-Amino-nonansäure, Polyamid-10, beispielsweise hergestellt aus 10-Amino-decansäure, PA 6/9, beispielsweise hergestellt aus Hexamethylendiamin/Azelainsäure, PA 6/12, beispielsweise hergestellt aus Hexamethylendiamin/Dodecandisäure, PA 11, beispielsweise hergestellt aus 11-Aminoundecansäure), PA 12, beispielsweise hergestellt aus Laurinlactam oder omega -Aminodecansäure, PA 4/6, beispielsweise hergestellt aus Tetramethylendiamin/Adipinsäure, PA 12/12, beispielsweise hergestellt aus Dodecandiamin/Dodecandisäure, PA 6/12, beispielsweise hergestellt aus Caprolactam/Laurinlactam, und Mischungen davon.. Polymaid-10 wird beispielsweise hergestellt aus. Diese Polyamide sind dem Fachmann an sich bekannt.

Die Herstellung der bevorzugten teilaromatischen Copolyamide mit niedrigem Triamingehalt kann nach den in den EP-A 129 195 und 129 196 beschriebenen Verfahren erfolgen.

Selbstverständlich können auch Mischungen (Blends) derartiger Polymere eingesetzt werden.

### Vinylaromatische Polymere

Das gewichtsmittlere Molekulargewicht Mw dieser an sich bekannten und im Handel erhältlichen Polymeren liegt im Allgemeinen im Bereich von 1.500 bis 2.000.000, vorzugsweise im Bereich von 70.000 bis 1.000.000 g/mol.

Nur stellvertretend seien hier vinylaromatische Polymere aus Styrol, Chlorstyrol, [alpha]- Methylstyrol und p-Methylstyrol genannt; in untergeordneten Anteilen (vorzugsweise nicht mehr als 50, insbesondere nicht mehr als 35 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, dass auch Mischungen dieser Polymeren eingesetzt werden können. Die Herstellung erfolgt vorzugsweise nach dem in der EP-A-302 485 beschriebenen Verfahren.

Bevorzugte ASA-Polymerisate sind aufgebaut aus einer Weich- oder Kautschukphase aus einem Pfropfpolymerisat aus:

| | |
|---|---|
| A₁ | 50 bis 90 Gew.-% einer Pfropfgrundlage auf Basis von A₁₁ 95 bis 99,9 Gew.-% eines C₂-C₁₀-Alkylacrylats und |
| A₁₂ | 0,1 bis 5 Gew.-% eines difunktionellen Monomeren mit zwei olefinischen, nicht konjugierten Doppelbindungen, und |
| A₂ | 10 bis 50 Gew.-% einer Pfropfauflage aus |
| A₂₁ | 20 bis 90 Gew.-% Styrol oder substituierten Styrolen der allgemeinen Formel I oder deren Mischungen, und |
| A₂₂ | 10 bis 80 Gew.-% Acrylnitril, Methacrylnitril, Acrylsäureestern oder Methacrylsäureestern oder deren Mischungen, |

in Mischung mit einer Hartmatrix auf Basis eines SAN-Copolymeren A₃) aus:

| | |
|---|---|
| A₃₁ | 50 bis 90, vorzugsweise 55 bis 90 und insbesondere 65 bis 85 Gew.-% Styrol und/oder substituierten Styrolen der allgemeinen Formel I und |
| A₃₂ | 10 bis 50, vorzugsweise 10 bis 45 und insbesondere 15 bis 35 Gew.-% Acrylnitril und/oder Methacrylnitril. |

Bei der Komponente A₁) handelt es sich um ein Elastomeres, welches eine Glasübergangstemperatur von unter -20, insbesondere unter -30 °C aufweist.

Für die Herstellung des Elastomeren werden als Hauptmonomere A₁₁) Ester der Acrylsäure mit 2 bis 10 C-Atomen, insbesondere 4 bis 8 C-Atomen eingesetzt. Als besonders bevorzugte Monomere seien hier tert-, iso- und n-Butylacrylat sowie 2-Ethylhexylacrylat genannt, von denen die beiden letztgenannten besonders bevorzugt werden. Neben diesen Estern der Acrylsäure werden 0,1 bis 5, insbesondere 1 bis 4 Gew.-%, bezogen auf das Gesamtgewicht A₁₁ + A₁₂ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage A₁ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen. Die genauen Polymerisationsbedingungen, insbesondere Art, Dosierung und Menge des Emulgators werden vorzugsweise so gewählt, dass der Latex des Acrylsäureesters, der zumindest teilweise vernetzt ist, eine mittlere Teilchengröße (Gewichtsmittel) im Bereich von etwa 200 bis 700, insbesondere von 250 bis 600 nm aufweist. Vorzugsweise hat der Latex eine enge Teilchengrößenverteilung, d.h. der Quotient Q = (d₉₀-d₁₀)/d₅₀ ist vorzugsweise kleiner als 0,5, insbesondere kleiner als 0,35.

Der Anteil der Pfropfgrundlage A₁ am Pfropfpolymerisat A₁+A₂ beträgt 50 bis 90, vorzugsweise 55 bis 85 und insbesondere 60 bis 80 Gew.-%, bezogen auf das Gesamtgewicht von A₁+A₂.

Auf die Pfropfgrundlage A₁ ist eine Pfropfhülle A₂ aufgepfropft, die durch Copolymerisation von

| | |
|---|---|
| A₂₁ | 20 bis 90, vorzugsweise 30 bis 90 und insbesondere 30 bis 80 Gew.-% Styrol oder substituierten Styrolen der allgemeinen Formel |

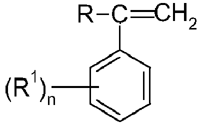

wobei R Alkylreste mit 1 bis 8 C-Atomen, Wasserstoffatome oder Halogenatome und R¹ Alkylreste mit 1 bis 8 C-Atomen, Wasserstoffatome oder Halogenatome darstellen und n den Wert O, 1, 2 oder 3 hat, und

| | |
|---|---|
| A₂₂ | 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist. |

Beispiele für substituierte Styrole sind alpha-Methylstyrol, p-Methylstyrol, p-Chlorstyrol und p-Chlor-alpha-Methylstyrol, wovon Styrol und alpha-Methylstyrol bevorzugt werden.

Bevorzugte Acryl- bzw. Methacrylsäureester sind solche, deren Homopolymere bzw. Copolymerisate mit den anderen Monomeren der Komponente A₂₂) Glasübergangstemperaturen von mehr als 20 °C aufweisen; prinzipiell können jedoch auch andere Acrylsäureester eingesetzt werden, vorzugsweise in solchen Mengen, so dass sich insgesamt für die Komponente A₂ eine Glasübergangstemperatur Tg oberhalb 20 °C ergibt.

Besonders bevorzugt werden Ester der Acryl- oder Methacrylsäure mit C₁-C₈-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger Tg zu bilden, vorzugsweise in nicht zu hohem Anteil eingesetzt wird.

Die Pfropfhülle A₂) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat A₁ + A₂ weist im allgemeinen eine mittlere Teilchengröße von 100 bis 1.000 nm, im besonderen von 200 bis 700 nm, (d₅₀-Gewichtsmittelwert) auf. Die Bedingungen bei der Herstellung des Elastomeren D₁) und bei der Pfropfung werden daher vorzugsweise so gewählt, dass Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat (A₁+A₂) zählen im Rahmen dieser Erfindung auch die bei der Pfropfmischpolymerisation zur Herstellung der Komponente A₂) entstehenden freien, nicht gepfropften Homo- und Copolymerisate.

Nachstehend seien einige bevorzugte Pfropfpolymerisate angeführt:
1: 60 Gew.-% Pfropfgrundlage A₁ aus

| | |
|---|---|
| A₁₁ | 98 Gew.-% n-Butylacrylat und |
| A₁₂ | 2 Gew.-% Dihydrodicyclopentadienylacrylat und |

40 Gew.-% Pfropfhülle A₂ aus

| | |
|---|---|
| A₂₁ | 75 Gew.-% Styrol und |
| A₂₂ | 25 Gew.-% Acrylnitril |

2: Pfropfgrundlage wie bei 1 mit 5 Gew.-% einer ersten Pfropfhülle aus Styrol und 35 Gew.-% einer zweiten Pfropfstufe aus

| | |
|---|---|
| A₂₁ | 75 Gew.-% Styrol und |
| A₂₂ | 25 Gew.-% Acrylnitril |

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente A₃) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000 g/mol.

Das Gewichtsverhältnis von (A₁ + A₂):A₃ liegt im Bereich von 1:2,5 bis 2,5:1, vorzugsweise von 1:2 bis 2:1 und insbesondere von 1:1,5 bis 1,5:1.

Geeignete SAN-Polymere als Komponente A) sind vorstehend (siehe A₃₁ und A₃₂) beschrieben.

Die Viskositätszahl der SAN-Polymerisate, gemessen gemäß DIN 53 727 als 0,5 gew.-%ige Lösung in Dimethylformamid bei 23 °C liegt im Allgemeinen im Bereich von 40 bis 100, vorzugsweise 50 bis 80 ml/g. ABS-Polymere als Polymer (A) in den erfindungsgemäßen mehrphasigen Polymermischungen weisen den gleichen Aufbau wie vorstehend für ASA-Polymere beschrieben auf. Anstelle des Acrylatkautschukes A₁) der Pfropfgrundlage beim ASA-Polymer werden üblicherweise konjugierte Diene, eingesetzt, so dass sich für die Pfropfgrundlage A₄ vorzugsweise folgende Zusammensetzung ergibt:

| | |
|---|---|
| A₄₁ | 70 bis 100 Gew.-% eines konjugierten Diens und |
| A₄₂ | 0 bis 30 Gew.-% eines difunktionellen Monomeren mit zwei olefinischen nichtkonjugierten Doppelbindungen oder eine vinylaromatische Verbindung oder eine Mischung aus beiden |

Pfropfauflage A₂ und die Hartmatrix des SAN-Copolymeren A₃) bleiben in der Zusammensetzung unverändert. Derartige Produkte sind im Handel erhältlich. Die Herstellverfahren sind dem Fachmann bekannt

Das Gewichtsverhältnis von (A₄ + A₂):A₃ liegt im Bereich von 3:1 bis 1 :3, vorzugsweise von 2:1 bis 1 :2.

Besonders bevorzugte Zusammensetzungen der thermoplastischen Formmassen enthalten als Komponente A) eine Mischung aus:

| | | |
|---|---|---|
| A₁) | 10 bis 90 Gew.-% | eines Polybutylenterephthalates |
| A₂) | 0 bis 40 Gew.-% | eines Polyethylenterephthalates |
| A₃) | 1 bis 40 Gew.-% | eines ASA- oder ABS-Polymeren oder deren Mischungen |

Derartige Produkte sind als Ultradur® S von der BASF SE erhältlich.

Weitere bevorzugte Zusammensetzungen der Komponente A) enthalten

| | | |
|---|---|---|
| A₁) | 10 bis 90 Gew.-% | eines Polycarbonates |
| A₂) | 0 bis 40 Gew.-% | eines Polyesters, vorzugsweise Polybutylenterephthalat, |
| A₃) | 1 bis 40 Gew.-% | eines ASA- oder ABS-Polymeren oder deren Mischungen |

Derartige Produkte sind als Terblend® der BASF SE erhältlich.

Ein weiteres erfindungsgemäß bevorzugtes vinylaromatisches Polymer ist ein Copolymer, welches aus den unterschiedlichen Monomerarten Acrylnitril, 1,3-Butadien und Styrol aufgebaut ist. Dieses Acrylnitril-Butadien-Styrol-Copolymerisat (ABS-Copolymerisat) ist dem Fachmann an sich bekannt. Die Mengenverhältnisse können dabei von 15 bis 35 Gew.-% Acrylnitril, 5 bis 30 Gew.-% Butadien und 40 bis 60 Gew.-% Styrol, jeweils bezogen auf das Copolymerisat, variieren.

### Polyarylenether

Unter Polyarylenethern A) sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyanooder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁-bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Diese können neben -O-, z.B. über -S-, -SO-, -SO₂-, -CO-, -N=N-, -COO-, einen Alkylenrest oder eine chemische Bindung miteinander verknüpft sein. In den Polyarylenethern (B) können die Arylengruppen auch über unterschiedliche Gruppen miteinander verknüpft sein.

Zu den bevorzugten Polyarylenethern zählen solche mit wiederkehrenden Einheiten der allgemeinen Formel I

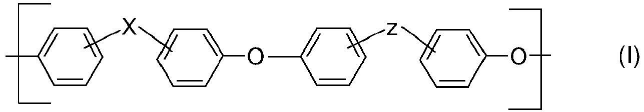

Ebenso können deren kernsubstituierten Derivate verwendet werden. Als Substituenten kommen vorzugsweise C₁-C₆-Alkyl, wie Methyl, Ethyl oder t-Butyl, C₁-C₆-Alkoxy, wie Methoxy oder Ethoxy, Aryl, insbesondere Phenyl, Chlor oder Fluor in Betracht. Die Variable X kann -SO₂-, -SO-, -S-, -O-, CO, -N=N-, -RC=CR^{a}-, -CR^{b}R^{c}- oder eine chemische Bindung sein. Die Variable Z kann für -SO₂-, -SO-, -CO-, -O-, -N=N- oder - RC=CR^{a} stehen. Hierbei stellen R und R^{a} jeweils Wasserstoff, C₁-C₆-Alkyl, z.B. Methyl, n-Propyl oder n-Hexyl, C₁-C₆-Alkoxy, darunter Methoxy, Ethoxy oder Butoxy oder Aryl, insbesondere Phenyl dar. Die Reste R^{b} und R^{c} können jeweils Wasserstoff oder eine C₁- bis C₆-Alkylgruppe, insbesondere Methyl, darstellen. Sie können aber auch zu einem C₄- bis C₁₀-Cycloalkylring, bevorzugt Cyclopentyl- oder Cyclohexylring, miteinander verknüpft sein, der seinerseits mit einer oder mehreren Alkylgruppen, vorzugsweise Methyl substituiert sein kann. Daneben können R^{b} und R^{c} auch eine C₁- bis C₆-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Im Folgenden sind einige der bevorzugten wiederkehrenden Einheiten I aufgeführt:

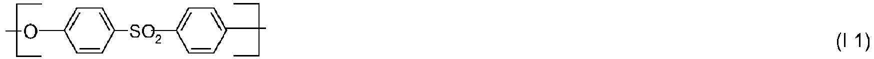

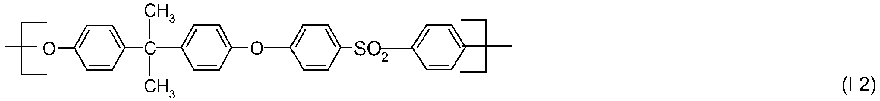

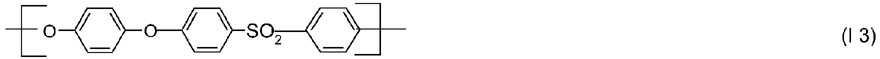

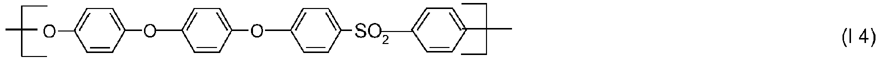

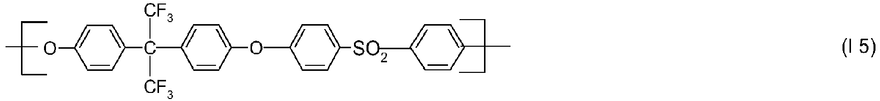

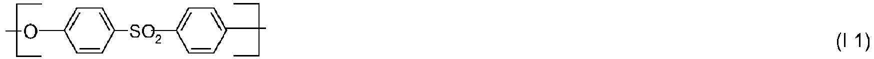

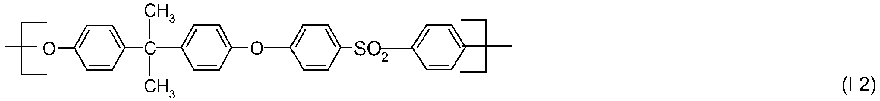

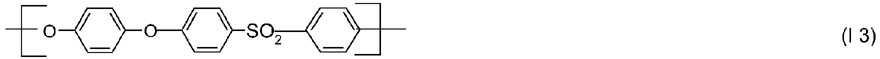

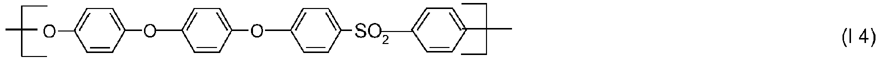

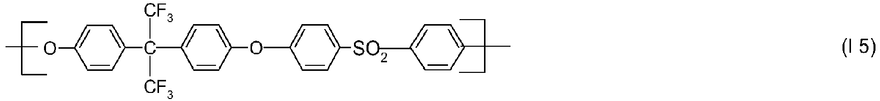

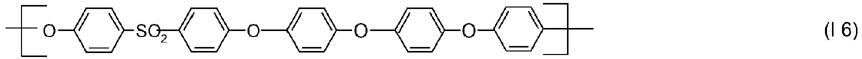

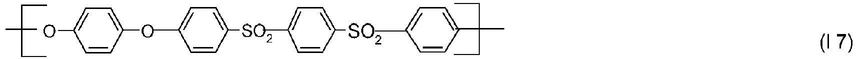

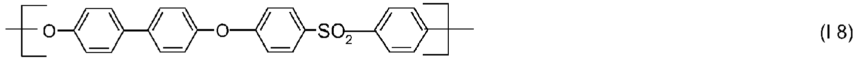

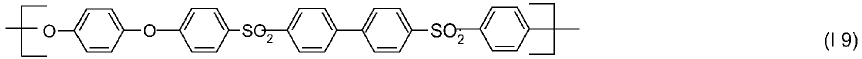

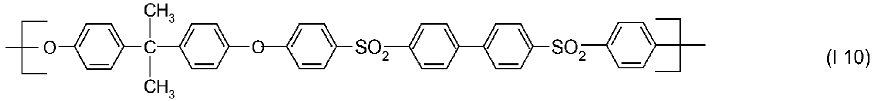

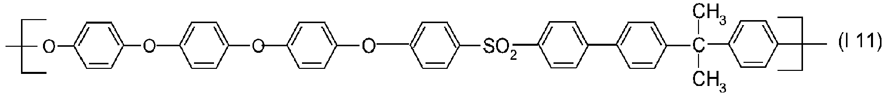

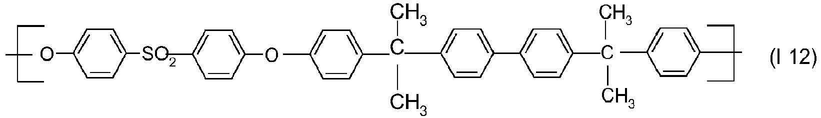

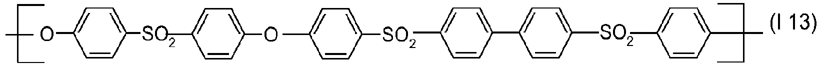

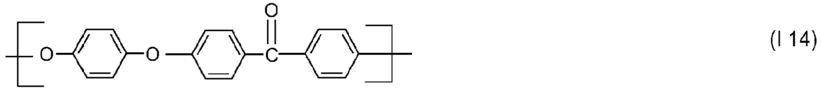

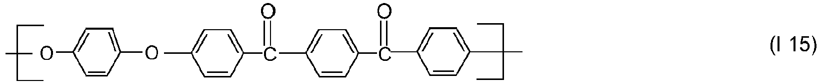

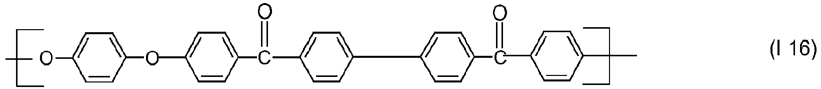

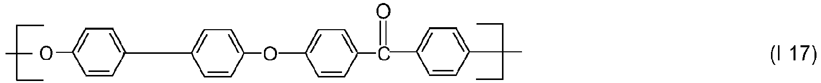

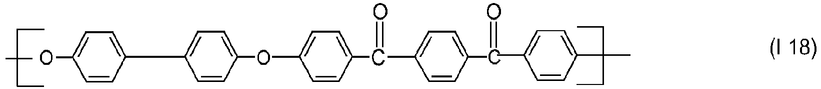

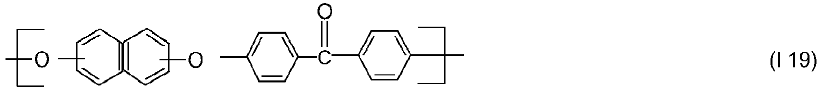

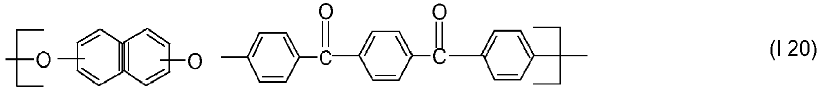

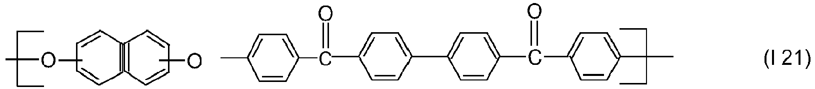

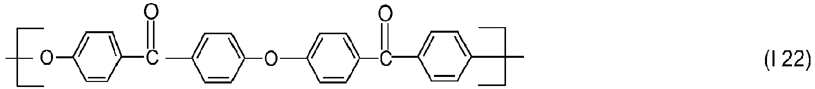

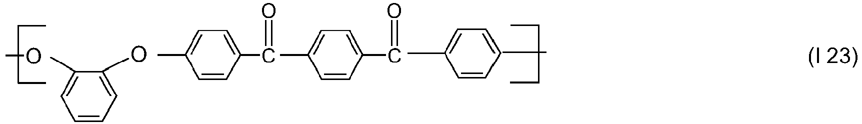

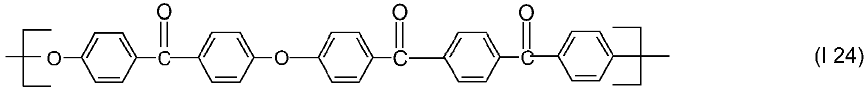

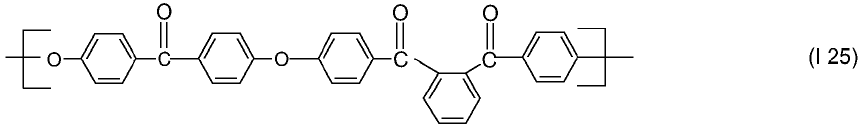

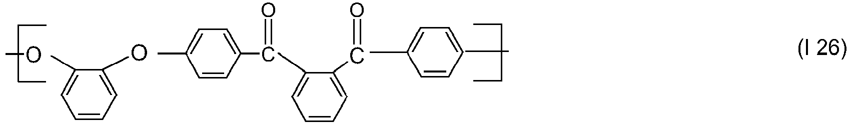

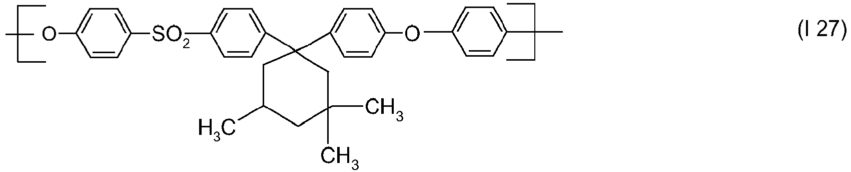

Ganz besonders werden Polyarylenether bevorzugt, die als wiederkehrende Einheiten (I₁), (I₂), (I₂₄) oder (I₂₅) enthalten. Dazu zählen beispielsweise Polyarylenethersulfone mit 0 bis 100 mol-%, bevorzugt 5 bis 95 mol-% Struktureinheiten (h) und 0 bis 100 mol-%, bevorzugt 5 bis 95 mol-% Struktureinheiten (I2) enthalten.

Die Polyarylenether können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte der Blöcke bzw, der Pfropfarme in den Copolymeren liegt in der Regel im Bereich von 1000 bis 30000 g/mol. Die Blöcke unterschiedlicher Struktur können alternierend oder statistisch angeordnet sein. Der Gewichtsanteil der Polyarylenethersegmente in den Co- oder Blockcopolymere beträgt im Allgemeinen mindestens 3, vorzugsweise mindestens 10 Gew.-%. Der Gewichtsanteil der Polyarylenethersulfone oder -ketone kann bis zu 97 Gew.-% betragen. Bevorzugt werden Co- oder Blockcopolymere mit einem Gewichtsanteil an Polyarylenethersegmenten mit bis zu 90 Gew.-%. Besonders bevorzugt werden Co- oder Blockcopolymere mit 20 bis 80 Gew.-% Polyarylenethersegmenten.

Im Allgemeinen weisen die Polyarylenether mittlere Molekulargewichte Mn (Zahlenmittel) im Bereich von 10 000 bis 60 000 g/mol und Viskositätszahlen von 30 bis 150 ml/g auf. Die Viskositätszahlen werden je nach Löslichkeit der Polyarylenether (A) bzw. (B) entweder in 1 gew.-%iger N-Methylpyrrolidon-Lösung, in Mischungen aus Phenol und o-Dichlorbenzol oder in 96 %iger Schwefelsäure bei jeweils 20 °C bzw. 25 °C gemessen.

Die Polyarylenether sind an sich bekannt oder können nach an sich bekannten Methoden hergestellt werden.

So lassen sich beispielsweise Polyphenylenether durch oxidative Kupplung von Phenolen herstellen. Polyarylenethersulfone oder -ketone entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden.

Bevorzugt werden die Monomeren in der Schmelze oder in einem inerten hochsiedenden Lösungsmittel durchgeführt. Zu diesen zählen Chlorbenzol, Dichlorbenzol, Xylol und Trichlorbenzol. Daneben kommen Sulfone oder Sulfoxide, darunter vor allem Dimethylsulfon, Diethylsulfon, 1,1-Dioxotetrahydrothiophen (Sulfolan) oder Diphenylsulfon, Dimethylsulfoxid oder Diethylsulfoxid, bevorzugt Dimethylsulfoxid, in Betracht. Zu den bevorzugten Lösungsmitteln zählen auch N-Alkylpyrrolidone, insbesondere N-Methylpyrrolidon. Weiterhin können N-substituierte Säureamide, beispielsweise N,N-Dimethylformamid oder N,N-Dimethylacetamid eingesetzt werden. Es ist auch möglich, Mischungen unterschiedlicher Lösungsmittel zu verwenden.

Bevorzugte Verfahrensbedingungen zur Synthese von Polyarylenethersulfonen oder - ketonen sind beispielsweise in der EP-A-1 13 1 12 und 135 130 beschrieben.

Die bevorzugten Polyarylenether weisen in der Regel einen Schmelzpunkt von mindestens 320 °C (Polyarylenethersulfone) bzw. von mindestens 370 °C (Polyarylenetherketone) auf.

Erfindungsgemäß können die Formmassen Polyarylenethersulfone oder -ketone enthalten, die durch Umsetzen eines Polyarylenethersulfons oder -ketons mit einer reaktiven Verbindung erhältlich sind. Die reaktiven Verbindungen enthalten neben einer C-C-Doppel- oder Dreifachbindung eine bzw. mehrere Carbonyl-, Carbonsäure-, Carboxylat-, Säureanhydrid-, Säureimid-, Carbonsäureester-, Amino-, Hydroxyl-, Epoxi-, Oxazolin-, Urethan-, Harnstoff-, Lactamen oder Halogenbenzylgruppe.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C₁-C₁₆-Alkanolen, die Mono- oder Diamide dieser Säuren wie N-Phenylmaleinimid, Maleinsäurehydrazid. Bevorzugt werden alpha, beta-ungesättigte Dicarbonsäuren bzw. deren Anhydride, Di-Ester und Mono-Ester der nachstehenden allgemeinen Struktur IV und V verwendet. 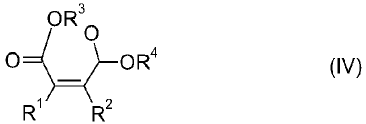 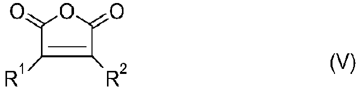 wobei R¹, R², R³ und R⁴ unabhängig voneinander Wasserstoff sowie C₁-C₁₃-AlkylGruppen sein können.

Besonders geeignete Verbindungen sind Maleinsäureanhydrid, Fumarsäure und Itaconsäure.

Die Polymeren und die reaktive Verbindung können z.B. in einem aromatischen Lösungsmittel miteinander umgesetzt werden. Als besonders geeignete Lösungsmittel haben sich Chlorbenzol, o-Dichlorbenzol und N-Methylpyrrolidon erwiesen. Dabei wird im Allgemeinen ein üblicher Radikalinitiator eingesetzt. Die Umsetzung wird im Allgemeinen bei 75 bis 150 °C ausgeführt. Das Reaktionsprodukt wird durch Fällung mit einem üblichen Fällungsmittel, wie niedermolekularer Alkohol und Keton, oder durch Entfernen des Lösungsmittels (z.B. im Entgasungsextruder, Dünnschichtverdampfer), gewonnen.

Die Reaktionsteilnehmer können aber beispielsweise auch bei einer Temperatur von 270 - 350 °C in der Schmelze in einem kontinuierlich oder absatzweise arbeitenden Mischaggregat (z.B. Ein- oder Zweiwellenextruder, Kneter) umgesetzt werden.

Die reaktive Verbindung wird dabei vorzugsweise in flüssiger Form, insbesondere innerhalb der Knetzone eines Mischaggregats zur Schmelze des Polymeren zudosiert.

Bevorzugt werden modifizierte Polyarylenethersulfone oder -ketone eingesetzt, die durch Umsetzen von 80 bis 99,9 Gew.-%, insbesondere 90 bis 99 Gew.-% des unmodifizierten Polyarylenethersulfonen oder-ketonen, mit 0,1 bis 20 Gew.-%, insbesondere 1 bis 10 Gew.-% der reaktiven Verbindung erhalten worden sind.

Besonders bevorzugt werden als Komponente mit 0,1 bis 1,5 Gew.-% Maleinsäureanhydrid gepfropfte Polyarylenethersulfone. Dabei werden Polyarylen-ethersulfone, enthaltend 5 bis 95 mol-% Einheiten I₁ und 5 bis 95 mol-% Einheiten I₂ bevorzugt.

Polyarylenethersulfone mit 80 bis 95, vorzugsweise 85 bis 95 mol-% Einheiten der Formel I₂ und I₁ und entsprechend 5 bis 20, vorzugsweise 5 bis 15 mol-% Einheiten der Formel I₁ bzw. I₂ seien hier insbesondere erwähnt.

Als Radikalstarter können in der Regel die in der Fachliteratur (z.B. J. K. Kochi, "Free Radicals", J. Wiley, New York, 1973) beschriebenen Verbindungen Verwendung finden.

Üblicherweise werden die Radikalstarter in Mengen von etwa 0,01 bis etwa 1 Gew.-%, bezogen auf die eingesetzten Polyarylenethersulfone oder -ketone verwendet. Selbstverständlich können auch Mischungen unterschiedlicher Radikalstarter eingesetzt werden.

Entsprechend modifizierte Polyphenylenether sind u. a. aus der WO 87/00540 bekannt, welche insbesondere in Mischungen mit Polyamid eingesetzt werden können.

Als duropolastischer Kunststoff wird erfindungsgemäß bevorzugt ein Epoxy-Harz eingesetzt. Epoxy-Harze sind dem Fachmann an sich bekannt.

Im Rahmen der vorliegenden Erfindung werden unter Epoxyharzen aromatische und/oder heteroaromatische Epoxyharze, Epoxy-Komposite oder Epoxyblends umfassend aromatische und/oder heteroaromatische Verbindungen, welche Epoxy-Gruppen enthalten, verstanden. Diese aromatischen und/oder heteroaromatischen Verbindungen können polyfunktionale Epoxid-Verbindungen enthalten, in denen wenigstens zwei Epoxy-Gruppen der allgemeinen Formel (A) 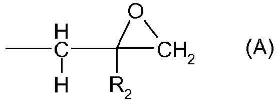 vorliegen, welche direkt an ein Kohlenstoff-, Sauerstoff-, Stickstoff- oder Schwefelatom angebunden sind und in denen R² Wasserstoff oder Methyl darstellt.

Beispiele für polyfunktionale, aromatische und/oder heteroaromatische Epoxid-Verbindungen sind:
I) Polyglycidyl-Ester und Poly(beta-methylglycidyl)ester, erhältlich durch Reaktion einer aromatischen und/oder heteroaromatischen Verbindung mit wenigstens zwei Carboxyl-Gruppen im Molekül mit Epichlorohydrin-, Glyceroldichlorhydrin und/oder Beta-methylepichlorhydrin. Die Reaktion wird in Gegenwart von Basen durchgeführt. Geeignete aromatische und/oder heteroaromatische Verbindungen mit wenigstens zwei Carboxyl-Gruppen im Molekül sind Phthalsäure, Isophthalsäure, Trimellit-Säure und Pyromellit-Säure.
II) Polyglycidyl-Ether oder Poly(beta-methylglycidyl)ether, erhältlich durch Reaktion einer aromatischen und/oder heteroaromatischen Verbindung mit wenigstens zwei freien phenolischen Hydroxyl-Gruppen mit einem geeignet substituierten Epichlorhydrin unter alkalischen Bedingungen oder in Gegenwart eines sauren Katalysators mit anschließender Behandlung unter alkalischen Bedingungen. Ether dieses Typs sind beispielsweise erhältlich aus mononuklearen Phenolen, wie Resorcinol oder Hydrochinon, oder sie basieren auf polynuklearen Phenolen, wie Bis(4-hydroxyphenyl)methan, 2,2-Bis(4-hydroxyphenyl)propan, 2,2-Bis(3,5-dibromo-4-hydroxyphenyl)-propan oder 4,4'-Dihydroxyphenylsulfon; oder diese Ether basieren auf Kondensaten von Phenolen mit Formaldehyd, welche unter sauren Bedingungen erhalten werden, so wie Phenol-Novolak®.
III) Poly(N-glycidyl)-Verbindungen, erhältlich durch Dehydrochlorierung der Aktionsprodukte von Epichlorhydrin mit aromatischen und/oder heteroaromatischen Aminen, enthaltend wenigstens zwei Amino-Wasserstoffatome. Diese Amine sind beispielsweise Anilin, Toluidin, Bis(4-aminophenyl)methan, m-Xylylendiamin oder Bis(4-methylaminophenyl)methan, und des Weiteren N,N,O-triglycidyl-m-aminophenol oder N,N,O-triglycidyl-p-aminophenol.
IV) Poly(S-glycidyl)-Verbindungen, wie Di-S-glycidyl-Derivate, erhältlich aus aromatischen und/oder heteroaromatischen Dithiolen, wie Bis(4-mercaptom ethylphenyl)ether.

Polyfunktionale aromatische und/oder heteroaromatische Epoxid-Verbindungen sind bekannt. Viele von diesen sind kommerziell erhältlich von Huntsman Advanced Materials (Markenname Araldite®), Dow Chemicals (Markenname DER®), Mitsubishi Gas Chemical Company (Markenname Tetrad®), Shell (Markenname Cardura®) und Hexion Specialty Chemicals (Hexion®), Tactix®, Epon® and Epikot®). Beispiele für geeignete polyfunktionale Epoxide sind:
a) flüssige Bisphenol-A-diglycidylether, wie ARALDITE® GY 240, ARALDITE® GY 250, ARALDITE® GY 260, ARALDITE® GY 266, ARALDITE® LY 1556, ARALDITE® GY 2600, ARALDITE® MY 790, DER® 332, DER® 331, Hexion® EPR 158, Tactix® 123, Tactix® 138, Epon® 826;
b) feste Bisphenol-A-diglycidylether, wie ARALDITE® GT 6071, ARALDITE® GT 7071, ARALDITE® GT 7072, ARALDITE® GT 6063, ARALDITE® GT 7203, ARALDITE® GT 6064, ARALDITE® GT 7304, ARALDITE® GT 7004, ARALDITE® GT 6084, ARALDITE GT® 1999, ARALDITE® GT 7077, ARALDITE® GT 6097, ARALDITE® GT 7097, ARALDITE GT® 7008, ARALDITE® GT 6099, ARALDITE® GT 6608, ARALDITE® GT 6609, ARALDITE® GT 6610, ARALDITE® CT 200, ARALDITE® 6100 ES, Epikote® 1001, Epikote® 109, DER® 661, DER® 667, DER® 668, DLS 1065 ES;
c) flüssige Bisphenol-F-diglycidylether, wie ARALDITE® GY 281, ARALDITE® GY 282, ARALDITE® PY 302, ARALDITE® PY 306;
d) feste Polyglycidylether von Tetraphenylethan, wie CG Epoxy Resin®0163
e) feste und flüssige Polyglycidylether von Phenol-Formaldehyd Novolak® wie EPN 1138, EPN 1139, GY 1180, PY 307, Epon® 828, Tactix® 556;
f) feste und flüssige Polyglycidylether von o-Kresol-Formaldehyd Novolak®, wie ECN 1235, ECN 1273, ECN 1280, ECN 1299;
g) flüssige Glycidylether von Carbonsäuren, wie Shell Cardura® E Terephthalsäureester, Trimellitsäureester, ARALDITE® PY 284;
h) feste heterozyklische Epoxyharze (Triglycidylisocyanurate), wie ARALDITE® PT 810;
i) flüssige N,N,O-Triglycidylether von p-Aminophenol, wie ARALDITE® MY 0510;
j) Tetraglycidyl-4-4'-methylenbenzamin oder N,N,N',N'-Tetraglycidyldiaminophenylmethan, wie ARALDITE® MY 720, ARALDITE® MY 721;
k) Tetraglycidyl-Derivat von m-Xylidendiamin, wie Tetrad®-X;
l) Triglycidyl-Derivat von 1,1,2-Tris(4-hydroxyphenyl)ethan, wie Tactix® 742.

Falls gewünscht, kann auch eine Mischung von aromatischen und/oder heteroaromatischen Epoxy-Verbindungen oder verschiedenen Strukturen verwendet werden.

Geeignete polyfunktionale, aromatische und/oder heteroaromatische Verbindungen umfassen wenigstens zwei Gruppen der allgemeinen Formel

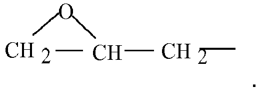

Besonders bevorzugte Komponenten sind mit den folgenden Verbindungen oder Typen und/oder Mischungen dieser angegeben: 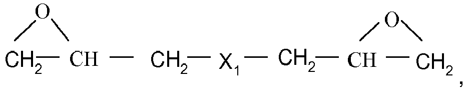 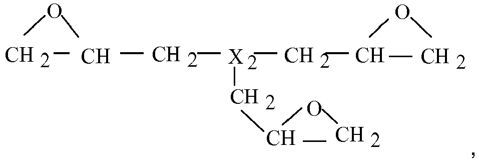 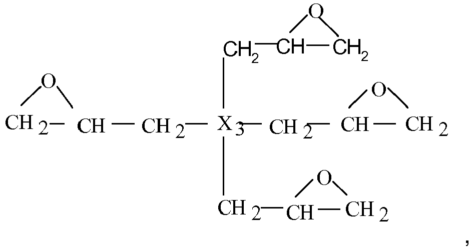 wobei X₁, X₂ und X₃ Phenylen oder Naphthylen sind, welche unsubstituiert oder substituiert sein können, und X₂ ist zusätzlich ein unsubstituiertes oder substituiertes Radikal der Formel

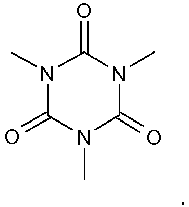

Geeignete Substituenten für die oben genannten Radikale sind -O-, -S-, -C(=O)-, - C(=O)-O-, -S(=O)=, -S(O₂)-, -C(CF₃)₂-, Alkyl, Alkylen, Aryl, Arylen, Alkoxy, Aryloxy oder Halogen. Identische oder verschiedene Substituenten können ein- oder zweimal vorliegen, wobei die Substituenten gegebenenfalls weiter substituiert sind.

Ein Beispiel für ein geeignetes Alkyl-Radikal ist ein C₁-C₁₈-Alkyl-Radikal, wie Methyl, Ethyl, n-Propyl, iso-Propyl, n-Butyl, sec-Butyl, tert.-Butyl, n-Hexyl, n-Octyl, 2-Ethylhexyl, n-Nonyl, n-Decyl, n-Undecyl, n-Dodecyl, n-Tridecyl, n-Tetradecyl, n-Hexadecyl oder n-Octadecyl und ihre verzweigten Isomere.

Beispielhafte Alkylen- und Alkoxy-Radikale können aus den oben genannten Alkyl-Radikalen durch Abspaltung eines weiteren Wasserstoffatoms oder durch Addition eines Sauerstoffatoms erhalten werden.

Beispiele für geeignete Aryl-Radikale sind solche mit 6 bis 20 Kohlenstoffatomen, wie Phenylen, Biphenylen oder Naphthylen.

Geeignete Arylen- und Aryloxy-Radikale können formal aus den oben genannten Aryl-Radikalen durch Abtrennung eines weiteren Wasserstoff-Atoms oder durch Addition eines Sauerstoff-Atoms erhalten werden. Bevorzugt sind Radikale mit den folgenden Formeln für X₁: 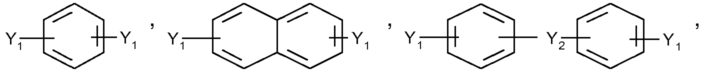 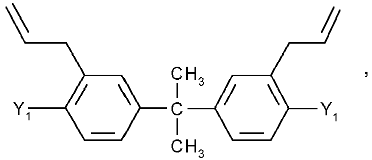 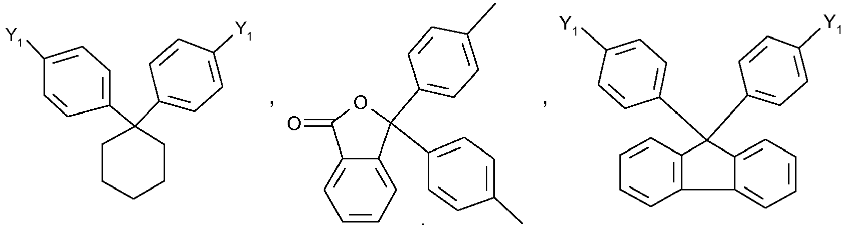 oder 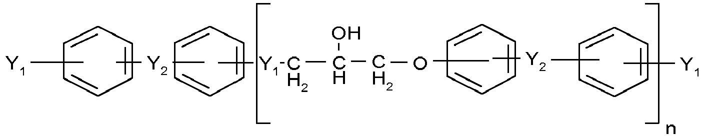
Für X₂: 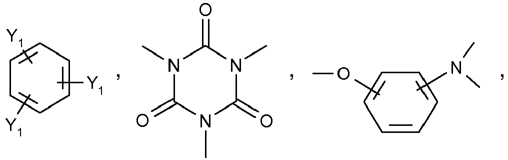 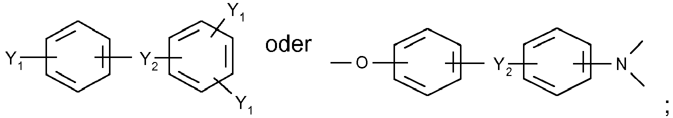
Für X₃:

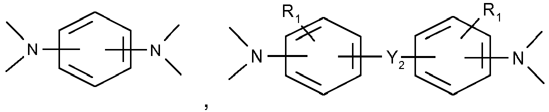

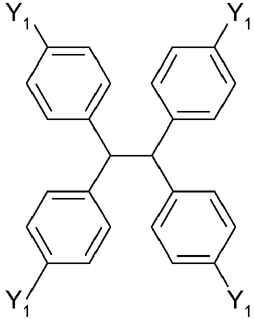

in denen Y₁ eine direkte Bindung oder die Gruppen -O-, -S- oder-C(=O)-O-, Y₂ eine direkte Bindung oder die Gruppen -SO₂, -CO-, -S-, -SO-, -CH₂-, -C(CH₃)₂- oder -C(CF₃)₂-
und n 1 bis 10 ist.

Die aromatischen Gruppen sind unsubstituiert oder ein oder mehrere Male substituiert durch Alkyl, Aryl, Alkoxy, Aryloxy oder Halogen, wie oben detailliert beschrieben.

Besonders bevorzugt sind die folgenden Verbindungen:

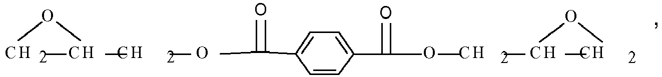

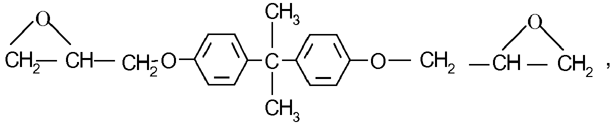

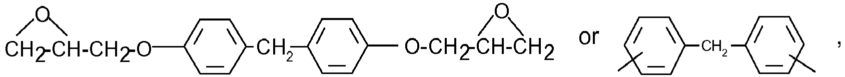

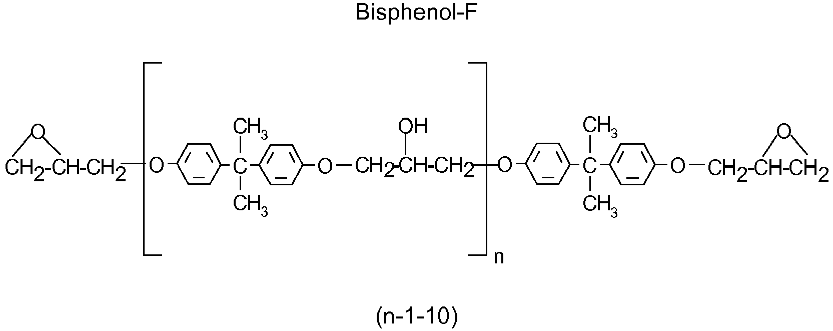

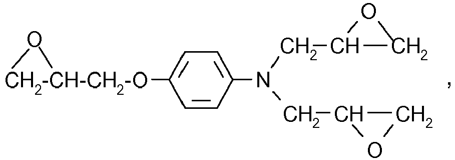

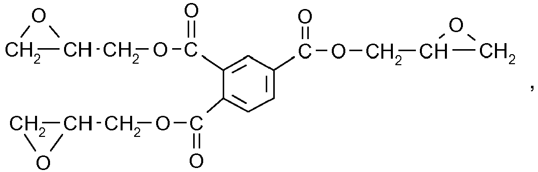

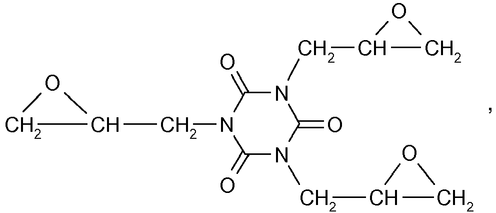

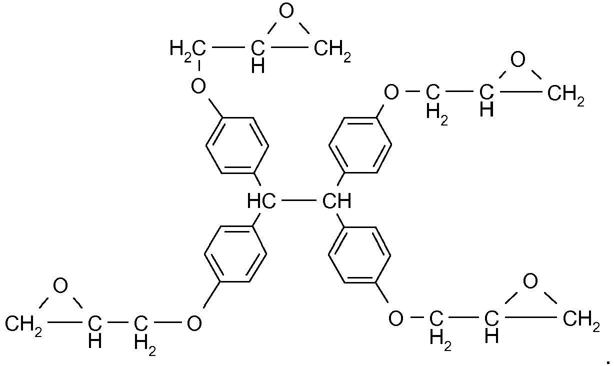

Gemäß einer bevorzugten Ausführungsform kann auch eine härtende Komponente in der aromatischen und/oder heteroaromatischen Epoxy-Harz-Zusammensetzung oder in der Zusammensetzung, enthaltend aromatische und/oder heteroaromatische Epoxy-Harz-Zusammensetzungen und weitere polymerisierbare Monomere, vorliegen. Eine geeignete Härter-Verbindung kann jede dem Fachmann bekannte Härter-Verbindung für aromatische und/oder heteroaromatische Epoxyharze sein. Amin- und Anhydrid-Härter sind besonders bevorzugt, sowie Polyamine, beispielsweise Ethylendiamin, Diethylentriamin, Triethylentriamin, Hexamethylendiamin, Methandiamin, N-Aminoethylpiperazin, Diaminodiphenylmethan (DDM), Alkyl-substituierte Derivate von DDM, Isofurondiamin (IPD), Diaminodiphenylsulfon (DDS), 4,4'-Methylendianilin (MDA), oder m-Phenylendiamin (MPDA), Polyamide, Alkyl/Alkenylimidazole, Dicyandiamide (DICY), 1,6-Hexamethylene-bis-cyanoguanidin, oder Säure-Anhydride, beispielsweise Dodecenyl-Bernsteinsäure-Anhydrid, Hexahydrophthalsäureanhydrid, Tetrahydrophthalsäureanhydrid, Phthalsäureanhydrid, Pyromelitsäureanhydrid und Derivate davon.

### Verbindung A

Die erfindungsgemäße Mischung enthält neben dem mindestens einen Kunststoff K, 0,1 bis 50 Gew.-%, bezogen auf die gesamte Mischung, mindestens eine Verbindung A, ausgewählt aus der Gruppe bestehend aus Borophosphaten, Borat-Phosphaten, Metalloborophosphaten und Mischungen davon.

Bevorzugt werden Verbindungen A, ausgewählt aus der genannten Gruppe, eingesetzt, die eine Zersetzungstemperatur aufweisen, die oberhalb der Verarbeitungstemperatur der als Kunststoff K bevorzugt eingesetzten Thermoplasten liegt, beispielsweise 0 bis 1500 °C, bevorzugt 100 bis 900 °C, besonders bevorzugt 101 bis 700 °C, ganz besonders bevorzugt 150 bis 600 °C. Für die bevorzugten thermoplastischen Kunststoffe K, insbesondere Polyester, beispielsweise Polybutylenterephthalat, oder Polyamide, beispielsweise Polyamid-6, Polyamid-66, müssen die bevorzugt eingesetzten Verbindungen A eine Zersetzungstemperatur von im Allgemeinen größer 150 °C, bevorzugt größer 200 °C, besonders bevorzugt größer 250 °C, insbesondere größer 280 °C.

Besonders bevorzugt werden Verbindungen A eingesetzt, die halogenfrei sind.

Weiter bevorzugt werden Verbindungen A eingesetzt, die unter Normalbedingungen, als amorphes Pulver, kristallin oder glasartig vorliegen.

In einer weiteren besonders bevorzugten Variante der vorliegenden Erfindung werden Verbindungen A eingesetzt, die OH-Gruppen, Wasser, organische Moleküle oder Kombinationen davon enthalten, welche im Brandfall abgegeben werden.

In einer bevorzugten Ausführungsform der erfindungsgemäßen Mischung ist die mindestens eine Verbindung A ein Borophosphat, ausgewählt aus der Gruppe bestehend aus Mg₃(H₂O)₆[{BPO₄(OH)₃}₂], Mn[BPO₄(OH)₂], Fe[BPO₄(OH)₂], Co[BPO₄(OH)₂], Fe[B₂P₂O₇(OH)₅], Fe[B₂P₂O₇(OH)₅]·H₂O, Ga[B₂P₂O₇(OH)₅], Al[B₂P₂O₇(OH)₅]·H₂O, Al[B₂P₂O₇(OH)₅], Ca[BPO₅], Sr[BPO₅], Ba[BPO₅], Li₃[B₆PO₁₃], Li₃[BP₂O₈], Na₃[B₆PO₁₃], Na₃[BP₂O₈], K₃[B₆PO₁₃], K₃[BP₂O₈], Rb₃[B₆PO₁₃], Cs₃[BP₂O₃], Pb[BPO₅], Mg(H₂O)₂[BPO₄(OH)₂], (Mg₁₋ₓNiₓ)(H₂O)₂[BPO₄(OH)₂] (x = 0 - 1, insbesondere 0.1, 0.25, 0.3, 0.4, 0.5, 0.6 0,7 0,75 0,8 0,9, 1.0), Cu(H₂O)₂[B₂P₂O₃(OH)₂], Mg(H₂O)₂[B₂P₂O₃(OH)₂]·H₂O, (Mg₁₋ₓCoₓ)(H₂O)₂[B₂P₂O₈(OH)₂]·H₂O mit (x = 0 - 1, insbesondere 0.1, 0.25, 0.3, 0.4, 0.5, 0.6, 0.7, 0.75, 0.8, 0.9, 1.0), [Co(en)₃][B₂P₃O₁₁(OH)₂] (en = Ethylendiamin), Rb₂Co₃(H₂O)₂[B₄P₆O₂₄(OH)₂], (C₂H₁₀N₂)Mg[B₂P₃O₁₂(OH)], (C₄N₂H₁₂)Mn[B₂P₃O₁₂(OH)], (C₂H₁₆N₂)(*M*)[B₂P₃O₁₂(OH)] (M = Mn, Fe, Co, Ni, Cu, Zn, Mg, Ca, Cd), (C₂H₁₆N₂)Cd[B₂P₃O₁₂(OH)], (C₄H₁₆N₃)Cd[B₂P₃O₁₂(OH)]Cl, Na₅[B₂P₃O₁₃], Sr₆BP₅O₂₀, Ca₆BP₅O₂₀, Mg₆BP₅O₂₀, Ba₆BP₅O₂₀, Ca₆[BP₄O₁₆][PO₄], Sr₆[BP₄O₁₆][PO₄], Mg₆[BP₄O₁₆][PO₄], Ba₆[BP₄O₁₆][PO₄] Mn(C₃H₁₂N₂)[B₂P₃O₁₂(OH)], Mn(C₄H₁₂N₂)[B₂P₃O₁₂(OH)], Co(C₄H₁₂N₂)[B₂P₃O₁₂(OH)], Zn(C₄H₁₂N₂)[B₂P₃O₁₂(OH)], Mn(C₆H₁₄N₂)_{0.5}(C₄H₁₂N₂)[B₂P₃O₁₂(OH)], Rb₃[B₂P₃O₁₁(OH)₂], (NH₄)₂(C₃H₁₂N₃)₃[V₂P₂BO₁₂]₆·15H₂O, [TETA]₄H[(NH₄)(VO)₁₂{BP₂O₁₀}₆]·14H₂O (TETA = Triethylentetraamin), [TETA]₄H[(NH₄)(VO)₁₂{BP₂O₁₆}₆]·16H₂O (TETA = Triethylentetraamin), [TETA]₄H[K(VO)₁₂{BP₂O₁₆}₆]·14H₂O (TETA = Triethylentetraamin), [TE-TA]₄H[K(VO)₁₂{BP₂O₁₆}₆]·16H₂O (TETA = Triethylentetraamin), (NH₄)ₓ(CₙH₂ₙ₊₁NH₃)_{y}[(NH₄)V₂P₂BO₁₂]₆ (n = 1, 2, 3, 4, 5, 6, 7, 8, 9, 10, 11, 12, 13, 14, 15, 16, 17, 18, 19, 20), (C₄H₁₂N₂)₆[(VO)₂BP₂O₁₆]₄·zH₂O (z = 1, 2, 3, 4, 5, 6, 7, 8, 9, 10, 11, 12, 13, 14, 15, 16, 17, 18, 19, 20), Na₁₄[Na{(VO)₂BP₂O₁₀}₅]·nH₂O (n = 1, 2, 3, 4, 5, 6, 7, 8, 9, 10, 11, 12, 13, 14, 15, 16, 17, 18, 19, 20), (NH₄)₁₇[(NH₄), {(VO)₂BP₂O₁₀}₆]·nH₂O (n = 1, 2, 3, 4, 5, 6, 7, 8, 9, 10, 11, 12, 13, 14, 15, 16, 17, 18, 19, 20), (A)₁₇[(A) {(VO)₂BP₂O₁₀}₆]·nH₂O (A = NH₄, Li, Na, K, Cs, Rb, Ag, TI) (n = 1, 2, 3, 4, 5, 6, 7, 8, 9, 10, 11, 12, 13, 14, 15, 16, 17, 18, 19, 20), [C₂H₁₀N₂]₂[(VO)₅(H₂O){BP₂O₁₀}₂]·1,5H₂O, Na₂[VB₃P₂O₁₂(OH)]·2.92H₂O, (NH₄)₂(C₂H₁₆N₂)₆[Sr(H₂O)₅]₂[V₂BP₂O₁₂]₆·10H₂O, (NH₄)₂(C₃H₁₂N₂)₆[Sr(H₂O)₄]₂[V₂BP₂O₁₂]₆·17H₂O, (NH₄)₂(C₃H₁₂N₃)₈[V₂P₂BO₁₂]₆·15H₂O, [TETA]₄H[(NH₄)(VO)₁₂{BP₂O₁₀}₆]·14H₂O (TETA = Triethylentetraamin), [TETA]₄H[(NH₄)(VO)₁₂{BP₂O₁₆}₆]·16H₂O (TETA = Triethylentetraamin), [TETA]₄H[K(VO)₁₂{BP₂O₁₆}₆]·14H₂O (TETA = Triethylentetraamin), [TETA]₄H[K(VO)₁₂{BP₂O₁₆}₆]·16H₂O (TETA = Triethylentetraamin), (NH₄)ₓ(CₙH₂ₙ₊₁NH₃)_{y}[(NH₄)V₂P₂BO₁₂]₆ (n = 1, 2, 3, 4, 5, 6, 7, 8, 9, 10, 11, 12, 13, 14, 15, 16, 17, 18, 19, 20), (C₄H₁₂N₂)₆[(VO)₂BP₂O₁₆]₄·zH₂O (z = 2, 6, 14), (NH₄)₁₇[(NH₄){(VO)₂BP₂O₁₀}₆]·nH₂O (n = 1, 2, 3, 4, 5, 6, 7, 8, 9, 10, 11, 12, 13, 14, 15, 16, 17, 18, 19, 20), [C₂H₁₆N₂]₂[(VO)₅(H₂O){BP₂O₁₆}₂]·1.5H₂O, (C₂H₁₆N₂)₂[B₂P₄O₁₄(OH)₂], (N₂C₃H₅)₃₈(H₃O)_{1.2}[(VO)₄B₂P₅O₂₂]·0.3H₂O, (C₆H₁₄N₂)₂[VOB₂P₅O₁₆(OH)₅]·H₂O·H₃PO₄, (NH₄)₅[V₃BP₃O₁₉]·H₂O, (C₃N₂H₅)₈[Mo₁₂B₂P₈O₅₉(OH)₃]·4H₂O, [C₆H₁₄N₂]₂[VOB₃P₄O₁₅(OH)₅]·4H₂O, (lmH₂)[Mo^{V}₅Mo^{VI}₇O₃₀(BPO₄)₂(O₃P-Ph)₆] (Im = Imidazol, Ph = Phenyl), Na₂[VB₃P₂O₁₂(OH)]·2.92H₂O, (NH₄)₃(C₄H₁₄N₂)_{4.5}[Sr(H₂O)₅]₂[Sr(H₂O)₄][V₂BP₂O₁₂]₆·10H₂O, (NH₄)ₓ(CₙH₂ₙ₊₁NH₃)_{y}[(NH₄)V₂P₂BO₁₂]₆ (x = 1, 2, 3, 4, 5, 6, 7, 8, 9, 10, 11, 12, 13, 14, 15, 16, 17, 18, 19, 20) (n = 1, 2, 3, 4, 5, 6, 7, 8, 9, 10, 11, 12, 13, 14, 15, 16, 17, 18, 19, 20), (C₂H₁₆N₂)₂[Na(VO)₁₀{BP₂O₃(OH)₂}₅]·22.5H₂O, CsV₃(H₂O)₂[B₂P₄O₁₆(OH)₄], Li-Cu₂[BP₂O₈(OH)₂], (C₃H₁₂N₂)Fe^{III}₆[B₄P₈O₃₂(OH)₈], K₅{W₄O₁₀[BP₂O₃(OH)₂][HPO₄]₂}·0.5H₂O, Mg₂[BP₂O₇(OH)₃], NaAl[BP₂O₇(OH)₃], NaV[BP₂O₇(OH)₃], NaFe[BP₂O₇(OH)₃], NaGa[BP₂O₇(OH)₃], Naln[BP₂O₇(OH)₃], Ca-Ni[BP₂O₇(OH)₃], NH₄V[BP₂O₈(OH)], NH₄Fe[BP₂O₈(OH)], NH₄(Fe₁₋ₓVₓ)[BP₂O₈(OH)] (x = 0.1, 0.2, 0.3, 0.4, 0.47, 0.5, 0.53, 0.6, 0.7, 0.8, 0.9), NH₄Al[BP₂O₃(OH)], NH₄Ga[BP₂O₈(OH)], RbV[BP₂O₈(OH)], RbFe[BP₂O₈(OH)], Rb(Fe₁₋ₓVₓ)[BP₂O₈(OH)] (x = 0.1, 0.2, 0.3, 0.4, 0.47, 0.5, 0.53, 0.6, 0.7, 0.8, 0.9), RbAl[BP₂O₈(OH)], RbGa[BP₂O₈(OH)], CsV[BP₂O₈(OH)], CsFe[BP₂O₈(OH)], Cs(Fe₁₋ₓVₓ)[BP₂O₈(OH)] (x = 0.1, 0.2, 0.3, 0.4, 0.47, 0.5, 0.53, 0.6, 0.7, 0.8, 0.9), CsAl[BP₂O₈(OH)], CsGa[BP₂O₈(OH)], Pb₂[BP₂O₈(OH)], NH₄Sc[BP₂O₈(OH)], NH₄Fe[BP₂O₈(OH)], NH₄ln[BP₂O₃(OH)], KSc[BP₂O₈(OH)], RbSc[B₂P₃O₁₁(OH)₃], CsSc[B₂P₃O₁₁(OH)₃], KFe[BP₂O₈(OH)], Kln[BP₂O₈(OH)], RbSc[BP₂O₈(OH)], RbSc[BP₂O₈(OH)], CsFe[BP₂O₃(OH)], Rbln[BP₂O₃(OH)], PbCo[BP₂O₈(OH)], PbZn[BP₂O₈(OH)], Sc(H₂O)₂[BP₂O₃]·H₂O, Fe(H₂O)₂[BP₂O₃]·H₂O, ln(H₂O)₂[BP₂O₃]·H₂O, Sc(H₂O)₂[BP₂O₈], In(H₂O)₂[BP₂O₃], ln[BP₂O₃]·0.8H₂O, NH₄Mg(H₂OMBP₂O₈]·H₂O, NH₄(M)(H₂O)₂[BP₂O₃]·H₂O (M = Mn, Fe, Co, Ni, Cu, Zn, Mg, Ca, Cd), (Li-K)Mg(H₂O)₂[BP₂O₃]·H₂O, (A)(Mn-Zn)(H₂O)₂[BP₂O₃]·H₂O A = NH₄, Li, Na, K, Rb, Cs, Ag, TI), (NH₄)(M)(H₂O)₂[BP₂O₃]·H₂O (M = Mn, Fe, Co, Ni, Cu, Zn, Mg, Ca, Cd), NH₄Mg(H₂O)₂[BP₂O₈]·H₂O, (H₃O)Zn(H₂O)₂[BP₂O₈]-H₂O, NaCd(H₂O)₂[BP₂O₈]-0.8H₂O, (NH₄)Cd(H₂O)₂[BP₂O₈]·0.72H₂O, (NH₄)Cd(H₂O)₂[BP₂O₈]-H₂O, KFe(H₂O)₂[BP₂O₃]·0.5H₂O, KFe(H₂O)₂[BP₂O₃]·H₂O, Rb₃₋₂ₓMgₓ(H₂O)₂[BP₂O₈]-zH₂O (z= 0-1, beispielsweise 0.1, 0.2, 0.3, 0.4, 0.5, 0.6, 0.7, 0.8, 0.9, insbesondere z = 1) (x = 0-1.5, beispielsweise 0.1, 0.2, 0.3, 0.4, 0.5, 0.6, 0.7, 0.8, 0.9, 1.0, 1.5, insbesondere x = 1, 1.5), Rb₃₋₂ₓMnₓ(H₂O)₂[BP₂O₈]·zH₂O (z= 0-1, beispielsweise 0.1, 0.2, 0.3, 0.4, 0.5, 0.6, 0.7, 0.8, 0.9, insbesondere z = 1) (x = 0-1.5, beispielsweise 0.1, 0.2, 0.3, 0.4, 0.5, 0.6, 0.7, 0.8, 0.9, 1.0, 1.5, insbesondere x = 1, 1.5), Rb₃₋₂ₓCoₓ(H₂O)₂[BP₂O₈]·zH₂O (z= 0-1, beispielsweise 0.1, 0.2, 0.3, 0.4, 0.5, 0.6, 0.7, 0.8, 0.9, insbesondere z = 1) (x = 0-1, beispielsweise 0.1, 0.2, 0.3, 0.4, 0.5, 0.6, 0.7, 0.8, 0.9, 1.0, 1.5 insbesondere x = 1, 1.5), Rb₃₋₂ₓFeₓ(H₂O)₂[BP₂O₈]·zH₂O (z = 0-1, beispielsweise 0.1, 0.2, 0.3, 0.4, 0.5, 0.6, 0.7, 0.8, 0.9, insbesondere z = 1) (x = 0-1.5, beispielsweise 0.1, 0.2, 0.3, 0.4, 0.5, 0.6, 0.67, 0.7, 0.75, 0.8, 0.9, 1.0, 1.5, insbesondere x = 1, 0.67, 0.75, 1.5), Cs₃₋₂ₓMgₓ(H₂O)₂[BP₂O₈]-zH₂O (z= 0-1, beispielsweise 0.1, 0.2, 0.3, 0.4, 0.5, 0.6, 0.7, 0.8, 0.9, insbesondere z = 1) (x = 0-1, beispielsweise 0.1, 0.2, 0.3, 0.4, 0.5, 0.6, 0.7, 0.8, 0.9, 1.0, insbesondere x = 1, 1.5), Cs₃₋₂ₓMnₓ(H₂O)₂[BP₂O₈]-zH₂O (z= 0-1, beispielsweise 0.1, 0.2, 0.3, 0.4, 0.5, 0.6, 0.7, 0.8, 0.9, insbesondere z = 1) (x = 0-1.5, beispielsweise 0.1, 0.2, 0.3, 0.4, 0.5, 0.6, 0.7, 0.8, 0.9, 1.0, 1.5, insbesondere x = 1, 1.5), Cs₃₋₂ₓCoₓ(H₂OMBP₂O₈]·zH₂O (z= 0-1, beispielsweise 0.1, 0.2, 0.3, 0.4, 0.5, 0.6, 0.7, 0.8, 0.9, insbesondere z = 1) (x = 0-1.5, beispielsweise 0.1, 0.2, 0.3, 0.4, 0.5, 0.6, 0.67, 0.7, 0.75, 0.8, 0.9, 1.0, 1.5, insbesondere x = 1, 0.67, 0.75, 1.5), Cs₃₋₂ₓFeₓ(H₂O)₂[BP₂O₈]-zH₂O (z = 0-1, beispielsweise 0.1, 0.2, 0.3, 0.4, 0.5, 0.6, 0.7, 0.8, 0.9, insbesondere z = 1) (x = 0-1, beispielsweise 0.1, 0.2, 0.3, 0.4, 0.5, 0.6, 0.67, 0.7, 0.75, 0.8, 0.9, 1.0, 1.5, insbesondere x = 1, 0.67, 0.75, 1.5), (H₃O)_{0.5}CO_{1.25}(H₂O)[BP₂O₈]·H₂O, (H₃O)_{0.5}Mn_{1.25}(H₂O)[BP₂O₈]·H₂O, (NH₄)_{0.4}Fe^{II}_{0.55}Fe^{III}_{0.5}(H₂O)₂[BP₂O₈]·0.6H₂O, (NH₄)_{0.5}Fe^{II}_{0.5}Fe^{III}_{0.5}(H₂O)₂[BP₂O₈]·0.5H₂O, {(NH₄)₃₋₂ₓCOₓ}(H₂O)₂[BP₂O₈]·zH₂O mit (x = 0-1.5, beispielsweise 0, 0.1, 0.2, 0.3, 0.4, 0.5, 0.6, 0.7, 0.8, 0.9, 1.0, 1.5, insbesondere x = 1, 1.5) (z = 0-1, insbesondere z = 0, 0.1, 0.2, 0.3, 0.4, 0.5, 0.6, 0.7, 0.8, 0.9, 1.0), Ca_{0.5}Ni(H₂O)₂[BP₂O₈]·H₂O, (Mg₁₋ₓ(Mg-Ba)ₓ)_{1.5}(H₂O)₂[BP₂O₈]·zH₂O (x = 0-1, beispielsweise 0, 0.1, 0.2, 0.3, 1/3, 0.4, 0.5, 0.6, 2/3, 0.7, 0.8, 0.9, 1.0, insbesondere x = 1, 0, 1/3, 2/3) (z = 0-1, insbesondere z = 0, 0.1, 0.2, 0.3, 0.4, 0.5, 0.6, 0.7, 0.8, 0.9, 1.0), (Mg₁₋ₓMnₓ)_{1.5}(H₂O)₂[BP₂O₈]·zH₂O (x = 0-1, 0, 0.1, 0.2, 0.3, 1/3, 0.4, 0.5, 0.6, 2/3, 0.7, 0.8, 0.9, 1.0, insbesondere x = 1, 0, 1/3, 2/3) (z = 0-1, insbesondere z = 0, 0.1, 0.2, 0.3, 0.4, 0.5, 0.6, 0.7, 0.8, 0.9, 1.0), (Mg₁₋ₓFeₓ)_{1.5}(H₂O)₂[BP₂O₈]·zH₂O (x = 0-1, insebsondere 0, 0.1, 0.2, 0.3, 1/3, 0.4, 0.5, 0.6, 2/3, 0.7, 0.8, 0.9, 1.0, insbesondere x = 1, 0, 1/3, 2/3) (z = 0-1, insbesondere z = 0, 0.1, 0.2, 0.3, 0.4, 0.5, 0.6, 0.7, 0.8, 0.9, 1.0), (Mg₁₋ₓCoₓ)_{1.5}(H₂O)₂[BP₂O8]·zH₂O (x = 0-1, 0, 0.1, 0.2, 0.3, 1/3, 0.4, 0.5, 0.6, 2/3, 0.7, 0.8, 0.9, 1.0, insbesondere x = 1, 0, 1/3, 2/3) (z = 0-1, insbesondere z = 0, 0.1, 0.2, 0.3, 0.4, 0.5, 0.6, 0.7, 0.8, 0.9, 1.0), (Mg₁₋ₓZnₓ)_{1.5}(H₂OMBP₂O₈]·zH₂O (x = 0-1, 0, 0.1, 0.2, 0.3, 1/3, 0.4, 0.5, 0.6, 2/3, 0.7, 0.8, 0.9, 1.0, insbesondere x = 1, 0, 1/3, 2/3) (z = 0-1, insbesondere z = 0, 0.1, 0.2, 0.3, 0.4, 0.5, 0.6, 0.7, 0.8, 0.9, 1.0), Na₃[BP₂O₃], (C₂H₁₆N₂)₂[B₂P₄O₁₄(OH)₂], K₆Cu₂[B₄P₈O₂₈(OH)₆], Zn₃(C₆H₁₄N₂)₄[B₆P₁₂O₃₉(OH)₁₂][HPO₄], Na₄Cu₃[B₂P₄O₁₅(OH)₂]·2HPO₄, (C₄H₁₂N₂)₃Fe^{III}₆(H₂O)₄[B₆P₁₂O₅₆(OH)₂]·2H₂O, Na₂[BP₂O₇(OH)], (Na_{1,89}Ag_{0,11})₂[BP₂O₇(OH)], (N₂C₃H₅)_{3.8}(H₃O)_{1.2}[(VO)₄B₂P₅O₂₂]·0.3H₂O, (C₆H₁₄N₂)₂[VOB₂P₅O₁₆(OH)₅]·H₂O·H₃PO₄, (NH₄)₅[V₃BP₃O₁₉]·H₂O, [Co(en)₃][enH₂][V₃BP₃O₁₉]·4.5H₂O (en = Ethylendiamin), (NH₄)₄Mn₉[BP₃O₁₁(OH)₂]₂[HPO₄]₂[PO₄]₂, [Co(en)₃][V₃BP₃O₁₉][H₂PO₄]·4H₂O (en = Ethylendiamin), Mg₂(H₂O)[BP₃O₉(OH)₄], Ba₃[BP₃O₁₂], Pb₃[BP₃O₁₂], K₃[BP₃O₉(OH)₃], Pb₆[BP₄O₁₆][PO₄], Sr₆[BP₄O₁₆][PO₄], (C₃N₂H₅)₈[MO₁₂B₂P₈O₅₉(OH)₃]·4H₂O, Co₅[BPO₆][PO₄]₂, Cr₂[BP₃O₁₂], Fe₂[BP₃O₁₂], V₂[BP₃O₁₂], [C₆H₁₄N₂]₂[VOB₃P₄O₁₅(OH)₅]·4H₂O, Na₂Cu[B₃P₂O₁₁(OH)]·0.67H₂O, Na₂Mg[B₃P₂O₁₁(OH)]·0.67H₂O, Na₂(Mn-Zn)[B₃P₂O₁₁(OH)]·0.67H₂O, Na₅(H₃O)Mg₃[B₃P₂O₁₁(OH)]₃·2H₂O, Na₅(H₃O)(Mn-Zn)₃[B₃P₂O₁₁(OH)]₃·2H₂O, (NH₄)₂[B₃PO₇(OH)₂], (NH₄)[B₃PO₆(OH)₃]·0.5H₂O, Li[B₃PO₆(OH)₃], K₃[B₅PO₁₆(OH)₃], K[B₆PO₁₀(OH)₄], Na₃[B₆PO₁₃], (C₂H₁₀N₂)[BPO₄F₂], (NH₄)[BPO₄F], (lmH₂)[Mo^{V}₅Mo^{VI}₇O₃₀(BPO₄)₂(O₃P-Ph)₆] (Im = Imidazol, Ph = Phenyl), Zn[BPO₄(OH)₂], Ni[BPO₄(OH)₂], und Mischungen davon.

In einer besonders bevorzugten Ausführungsform der erfindungsgemäßen Mischung ist die mindestens eine Verbindung A ein halogenfreies Borophosphat, ausgewählt aus der oben genannten Gruppe.

In einer weiteren besonders bevorzugten Ausführungsform der erfindungsgemäßen Mischung ist die mindestens eine Verbindung A ein Borophosphat, welches OH-Gruppen, Wasser, organische Moleküle oder Kombinationen davon enthält, welche im Brandfall abgegeben werden.

In einer weiteren bevorzugten Ausführungsform der erfindungsgemäßen Mischung ist die mindestens eine Verbindung A ein Borophosphat, welches kein Metallatom im kationischen Teil der Verbindung enthält, ganz besonders ausgewählt aus der Gruppe bestehend aus n-Alkylamin-Borophosphate (CₙNHₓ)_{y}[BₐP_{b}O_{c}(OH)_{d}]·zH₂O (n = 1, 2, 3, 4, 5, 6 , 7, 8, 9, 10, 11, 12, 13, 14, 15) (x = 2, 3) (y = 1, 2, 3, 4, 5, 6, 7, 8) (a = 1, 2, 3, 4, 5, 6, 7, 8) (b = 1, 2, 3, 4, 5, 6, 7, 8) (c = 4, 5, 6, 7, 8, 9, 10, 11, 12, 13, 14 ,15,16, 17, 18, 19, 20) (d = 0, 1, 2, 3, 4, 5, 6, 7, 8, 9, 10, 11, 12, 13, 14 ,15,16, 17, 18, 19, 20) (z = 1, 2, 3, 4, 5, 6, 7, 8, 9, 10) sowie sekundäre, tertiäre und aromatische Amin-Borophosphate (CₙNₘHₓ)_{y}[BₐP_{b}O_{c}(OH)_{d}]·zH₂O (n = 1, 2, 3, 4, 5, 6 , 7, 8, 9, 10, 11, 12, 13, 14, 15) (m = 1, 2, 3, 4, 5, 6 , 7, 8, 9, 10, 11, 12, 13, 14, 15) (x = 2, 3) (y = 1, 2, 3, 4, 5, 6, 7, 8) (a = 1, 2, 3, 4, 5, 6, 7, 8) (b = 1, 2, 3, 4, 5, 6, 7, 8) (c = 4, 5, 6, 7, 8, 9, 10, 11, 12, 13, 14 ,15,16, 17, 18, 19, 20) (d = 0, 1, 2, 3, 4, 5, 6, 7, 8, 9, 10, 11, 12, 13, 14 ,15,16, 17, 18, 19, 20) (z = 0, 1, 2, 3, 4, 5, 6, 7, 8, 9, 10) und Mischungen davon.

In einer weiteren besonders bevorzugten Ausführungsform der erfindungsgemäßen Mischung ist mindestens eine Verbindung A ein Borophosphat enthalten, welches kein Metallatom enthält, ganz besonders ausgewählt aus der Gruppe bestehend aus, (C₂H₁₀N₂)[BPO₄F₂], (NH₄)[BPO₄F], NH₄[BPO₄F], (Melamin-H_{c})ₙ[BₓP_{y}O_{z}(OH)ₐ]·bH₂O (n = 1-10, insbesondere 1, 2, 3, 4, 5, 6, 7, 8, 9) (x = 1- 10, insbesondere 1, 2, 3, 4, 5, 6, 7, 8) (y = 1 - 10, insbesondere 1, 2, 3, 4, 5, 6, 7, 8)(b = 0, 1, 2, 3, 4, 5, 6, 7, 8, 9, 10) (c = 0, 1, 2, 3, 4, 5, 6) und Mischungen davon.

In einer insbesondere bevorzugten Ausführungsform der erfindungsgemäßen Mischung ist die mindestens eine Verbindung A ein Borophosphat, ausgewählt aus der Gruppe bestehend aus Rb₃[B₂P₃O₁₁(OH)₂], K₃[BP₃O₉(OH)₃], K₃[B₅PO₁₆(OH)₃], KAI[BP₂O₈(OH)], (C₂H₁₆N₂)[BPO₄F₂], NH₄[BPO₄F], (C₆H₁₄N₂){Zn[ZnB₂P₄O₁₅(OH)₂]·(C₆H₁₃N₂)Cl}, (C₃H₁₂N₂)Fe₆(H₂O)₄[B₄P₃O₃₂(OH)₃], (C₃H₁₂N₂)₃Fe^{III}₆(H₂O)₄[B₆P₁₂O₅₀(OH)₂]·2H₂O, (C₃H₁₂N₂)₃Fe^{III}₆(H₂O)₄[B₆P₁₂O₅₆(OH)₂]·2H₂O, Zn[BPO₄(OH)₂] und Mischungen davon.

Erfindungsgemäß einsetzbare Borophosphate können nach allen dem Fachmann bekannten Verfahren hergestellt werden, beispielsweise offenbart in dem Artikel Structural Chemistry of Borophosphates and Related Compounds, B. Ewald, Y.-X. Huang und R. Kniep, Z. Anorg. Chem. 2007, 633, 1517-1540, und insbesondere in den darin zitierten Literaturstellen.

In einer weiteren bevorzugten Ausführungsform der erfindungsgemäßen Mischung ist die mindestens eine Verbindung A ein Borat-Phosphat, ausgewählt aus der Gruppe bestehend aus Zn₃[BO₃][PO₄], Mg₃[BO₃][PO₄], Co₃[BO₃][PO₄], La₇O₆(BO₃)(PO₄)₂ Pr₇O₆[BO₃][PO₄]₂, Nd₇O₆[BO₃][PO₄]₂, Sm₇O₆[BO₃][PO₄]₂, Gd₇O₆[BO₃][PO₄]₂, Dy₇O₆[BO₃][PO₄]₂, Mn₃(OH)₂[B(OH)₄][PO₄] und Mischungen davon, besonders bevorzugt ausgewählt aus der Gruppe bestehend aus Zn₃[BO₃][PO₄], Mg₃[BO₃][PO₄], Co₃[BO₃][PO₄], Mn₃(OH)₂[B(OH)₄][PO₄] und Mischungen davon.

Erfindungsgemäß einsetzbare Borat-Phosphate können nach allen dem Fachmann bekannten Verfahren hergestellt werden, beispielsweise offenbart in dem Artikel Structural Chemistry of Borophosphates and Related Compounds, B. Ewald, Y.-X. Hunag und R. Kniep, Z. Anorg. Chem. 2007, 633, 1517-1540, und insbesondere in den darin zitierten Literaturstellen.

In der erfindungsgemäßen Mischung liegen als Verbindung A besonders bevorzugt Metalloborophosphate vor, die ein Metall ausgewählt aus der Gruppe Be, Zn, Co und Mischungen davon im anionischen Teil enthalten.

In einer bevorzugten Ausführungsform der erfindungsgemäßen Mischung ist die mindestens eine Verbindung A ein Metalloborophosphat, ausgewählt aus der Gruppe bestehend aus NH₄[ZnBP₂O₈], Rb[ZnBR₂O₈], Cs[ZnBP₂O₃], NH₄[(Zn₁₋ₓCoₓ)BP₂O₈] (x = 0, 0.1, 0.2, 0.3, 0.4, 0.5, 0.6, 0.7, 0.8, 0.9, 1.0, insbesondere x = 0, 1.0, 0.4, 0.5, 0.6) Na[ZnBP₂O₈]·H₂O, (C₄N₃H₁₆)[Zn₃B₃P₆O₂₄]·H₂O, (C₆N₄H₂₂)_{1.5}[Zn₆B₆P₁₂O₄₈]·1.5H₂O, NH₄[ZnBP₂O₈], K[ZnBP₂O₈], Na[BeBP₂O₈]·xH₂O (x = 0-1, insbesondere 0, 0.1, 0.2, 0.3, 0.4, 0.5, 0.6, 0.7, 0.8, 0.9, 1.0) K[BeBP₂O₈]·xH₂O (x = 0-1, insbesondere 0, 0.1, 0.2, 0.3, 0.4, 0.5, 0.6, 0.7, 0.8, 0.9, 1.0), NH₄[BeBP₂O₈]-xH₂O (x = 0-1, insbesondere 0, 0.1, 0.2, 0.3, 0.4, 0.5, 0.6, 0.7, 0.8, 0.9, 1.0), [*M*BP₂O₈] (*M* = B, Al, Ga) und Mischungen davon.

In der erfindungsgemäßen Mischung liegt die mindestens eine Verbindung A in einer Menge von im Allgemeinen 1,0 bis 30,0 Gew.-%, bevorzugt 2,0 bis 15,0 Gew.-%, jeweils bezogen auf die gesamte Mischung, vor.

Der mindestens eine Kunststoff K liegt in der erfindungsgemäßen Mischung in einer Menge von im Allgemeinen 70,0 bis 99,0,0 Gew.-%, bevorzugt 85,0 bis 98,0 Gew.-%, jeweils bezogen auf die gesamte Mischung, vor.

Die Summe der Mengen der mindestens einen Verbindung A und des mindestens einen Kunststoffes K, sowie gegebenenfalls weiterer vorhandener Additive, beträgt in jedem Fall 100 Gew.-%.

Die in der erfindungsgemäßen Mischung vorliegende mindestens eine Verbindung A ermöglicht es, dass die Gesamtmenge an flammhemmenden Additiven deutlich gesenkt werden kann, beispielsweise im Vergleich zu der aus dem Stand der Technik bekannten Kombination von Al(OH)₃ und einer P-Quelle.

Die erfindungsgemäß einsetzbaren Verbindungen A zeigen im Allgemeinen besonders hohe thermische Stabilitäten. Beispielsweise weist die erfindungsgemäße Verbindung K₃[BP₃O₉(OH)₃] eine thermische Stabilität bis zu ca. 340 °C auf, die Verbindung (C₂H₁₆N₂)[BPO₄F₂] weist eine thermische Stabilität bis zu ca. 310 °C, und aminhaltige Borophosphate weisen thermische Stabilitäten von beispielsweise bis zu 470 oder 500 °C auf, siehe beispielsweise Preparation and Characterization of templated borophosphates and metalloborophosphates, Ya-Xi Huang, Dissertation, TU Dresden, 2004 oder *Borophosphate der Haupt- und Nebengruppenmetalle: Synthese, Charakterisierung und Strukturchemische Klassifizierung, Bastian Ewald, Dissertation TU Dresden, 2006.* Diese Zersetzungstemperaturen erlauben den Einsatz in hoch schmelzenden Thermoplasten, z. B. PA, PBT. Eine Abgabe der volatilen, brandstickenden oder kühlenden Bestandteile bei der Zersetzung erfolgt also, wie gewünscht, erst im Brandfall und nicht bereits bei der Verarbeitung des Kunststoffs.

Die vorliegende Erfindung betrifft auch die erfindungsgemäße Mischung, wobei zusätzlich mindestens ein Flammschutzmittel vorliegt, ausgewählt aus der Gruppe bestehend aus Phosphor enthaltenden Verbindungen, Stickstoff enthaltenden Verbindungen, Metallhydroxiden, Metalloxiden, Bor enthaltenden Verbindungen, Silicaten, Silziumdioxid, Sulfaten, Carbonaten und Mischungen davon.

In einer bevorzugten Ausführungsform des erfindungsgemäßen Verfahrens ist die mindestens eine Phosphor enthaltende Verbindung ausgewählt aus der Gruppe bestehend aus Metallphosphin-Salzen der allgemeinen Formel (VI), ihren Polymeren der allgemeinen Formel (VII) 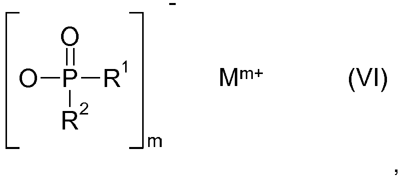 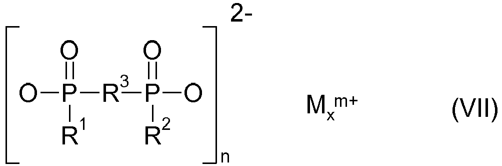 und Mischungen davon, worin R¹, R², R³, M, m, n und x unabhängig voneinander die folgenden Bedeutungen haben:
- R¹, R²: unabhängig voneinander Wasserstoff, linearer oder verzweigter C₁-C₂₆-Akylrest, substituierter oder unsubstituierter C₅-C₂₂-Arylrest,
- R³: unabhängig voneinander linearer oder verzweigter C₁-C₁₆-Alkylrest, substituierter oder unsubstituierter C₅-C₂₂-Arylrest, -Alkyrest oder -Arylalkylrest,
- M: unabhängig voneinander Erdalkalimetall wie Be, Mg, Ca, Ba, Sr, Alkalimetall wie Li, Na, K, Rb, Cs, oder Al, Zn, Ti, Zr, Si, Sn oder Stickstoff enthaltende Verbindungen wie Melamin, Piperazin, primäre Alkylamine, sekundäre Alkylamine, tertiäre Alkylamine, Melam, Melem
- m: unabhängig voneinander 1 bis 4, beispielsweise 1, 2, 3, 4,
- n: unabhängig voneinander 1 bis 3, beispielsweise 1, 2, 3,
- x: unabhängig voneinander 1 oder 2.

Die genannten Phosphor enthaltenden Verbindungen liegen in der erfindungsgemäßen Mischung bevorzugt in einer Menge von 0,1 bis 50 Gew.-%, bezogen auf die gesamte Mischung, vor.

In einer weiteren bevorzugten Ausführungsform des erfindungsgemäßen Verfahrens ist die mindestens eine Stickstoff enthaltende Verbindung ausgewählt aus der Gruppe bestehend aus Melamincyanurat, Melaminborat, Melaminphosphat, Melaminpolyphosphat, Melaminpyrophosphat, Melaminammoniumpolyphosphat, Melaminammoniumpyrophosphat und Mischungen davon.

Die genannten Stickstoff enthaltenden Verbindungen liegen in der erfindungsgemäßen Mischung bevorzugt in einer Menge von 0,1 bis 50 Gew.-%, bezogen auf die gesamte Mischung, vor.

Geeignete Metallhydroxide sind ausgewählt aus der Gruppe bestehend aus Magnesiumhydroxid, Aluminiumtrihydroxid und Mischungen davon.

Geeignete Metalloxide sind ausgewählt aus der Gruppe bestehend aus Zinkoxid, Molybdäntrioxid, Antimonoxid, Aluminiumoxidhydroxid und Mischungen davon.

Eine geeignete Bor enthaltende Verbindungen Zinkborat.

Geeignete Silicate sind ausgewählt aus der Gruppe bestehend aus Calciumsilicat, Magnesiumsilicat und Mischungen davon.

Ein geeignetes Sulfat ist Calciumsulfat.

Ein geeignetes Carbonat ist Magnesiumcarbonat.

Die genannten Metallhydroxide, Metalloxide, Bor enthaltenden Verbindungen, Silicate, Silziumdioxid, Sulfate, Carbonate und Mischungen davon liegen in der erfindungsgemäßen Mischung bevorzugt in einer Menge von 0,1 bis 10 Gew.-%, jeweils bezogen auf die gesamte Mischung, vor.

Daher betrifft die vorliegende Erfindung besonders bevorzugt die erfindungsgemäße Mischung, wobei das mindestens eine zusätzliche Flammschutzmittel ausgewählt ist aus der Gruppe bestehend aus Triphenylphosphinoxid, Aluminiumtriethylphosphinat, Zinkdiethylphosphinat, Melamincyanurat, Melaminphosphat, Melaminpolyphosphat, Melaminpyrophosphat, Melaminammoniumpolyphosphat, Melaminammoniumpyrophosphat, Melaminborat, Triphenylphosphat, Resorcinol-bis-(diphenylphosphat), Bisphenol-A-bis-(diphenylphosphat), Resorcinal-bis-(2,6-dixylylenylphosphat), Aluminiumhydroxid, Aluminiumoxidhydroxid, Magnesiumdihydroxid, Zinkoxid, Molybdäntrioxid, Antimonoxid, Aluminiumtrihydroxid, Zinkborat, Calciumsilicat, Magnesiumsilicat, Calciumsulfat, Magnesiumcarbonat, Dihydroxaphosphaphenantren, Dihydroxaphosphaphenantren-hydrochinon, Kalium-diphenylsulphonsulphonat, Polymethylphenylsiloxan, Kalium-butylperfluorosulfonat und Mischungen davon.

Die erfindungsgemäße Mischung kann in einer weiteren erfindungsgemäßen Ausführungsform ein Antitropfmittel, beispielsweise Polytetrafluorethylen (PTFE), enthalten.

Die vorliegende Erfindung betrifft daher auch die erfindungsgemäße Mischung, wobei zusätzlich ein Antitropfmittel, bevorzugt Polytetrafluorethylen (PTFE), vorliegt.

Das Antitropfmittel, beispielsweise Poplytetrafluorethylen (PTFE) liegt in der erfindungsgemäßen Mischung bevorzugt in einer Menge von 0 bis 5 Gew.-%, besonders bevorzugt 0,1 bis 5 Gew.-%, jeweils bezogen auf die gesamte Mischung, vor.

Daher betrifft die vorliegende Erfindung auch die Verwendung einer Verbindung ausgewählt aus der Gruppe bestehend aus Borophosphaten, Borat-Phosphaten, Metalloborophosphaten und Mischungen davon als Flammschutzmittel in thermoplastischen Kunststoffen. Bezüglich der Verbindungen, der thermoplastischen Kunststoffe, der Mengen, der weiteren Details und der bevorzugten Ausführungsformen gilt das bezüglich der erfindungsgemäßen Mischung Gesagte.

Die vorliegende Erfindung betrifft bevorzugt die erfindungsgemäße Verwendung, wobei zusätzlich mindestens ein Flammschutzmittel vorliegt, ausgewählt aus der Gruppe bestehend aus Phosphor enthaltenden Verbindungen, Stickstoff enthaltenden Verbindungen, Metallhydroxiden, Metalloxiden, Bor enthaltenden Verbindungen, Silicaten, Silziumdioxid, Sulfaten, Carbonaten und Mischungen davon.

Bezüglich diesen Verbindungen, den bevorzugten Ausführungsformen und den Mengen gilt das bezüglich der erfindungsgemäßen Mischung Gesagte.

In einer bevorzugten Ausführungsform betrifft die vorliegende Erfindung die erfindungsgemäße Verwendung, wobei das mindestens eine zusätzliche Flammschutzmittel ausgewählt ist aus der Gruppe bestehend aus Triphenylphosphinoxid, Aluminiumtriethylphosphinat, Zinkdiethylphosphinat, Melamincyanurat, Melaminphosphat, Melaminpolyphosphat, Melaminpyrophosphat, Melaminammoniumpolyphosphat, Melaminammoniumpyrophosphat, Melaminborat, Triphenylphosphat, Resorcinol-bis-(diphenylphosphat), Bis-phenol-A-bis-(diphenylphosphat), Resorcinal-bis-(2,6-dixylylenylphosphat), Aluminiumhydroxid, Aluminiumoxidhydroxid, Magnesiumdihydroxid, Zinkoxid, Molybdäntrioxid, Antimonoxid, Aluminiumtrihydroxid, Zinkborat, Calciumsilicat, Magnesiumsilicat, Calciumsulfat, Magnesiumcarbonat, Dihydrooxaphosphaphenantren, Dihydroxaphosphaphenantren-hydrochinon, Kalium-diphenylsulphonsulphonat, Polymethylphenylsiloxan, Kalium-butylperfluorosulfonat und Mischungen davon.

Neben dem mindestens einen Kunststoff K und der mindestens einen Verbindung A können in der erfindungsgemäßen Mischung weitere, übliche Additive vorliegen, beispielsweise Farbmittel, Schlagzähmodifier, Hitze- und Lichtstabilisatoren, Gleit- und Entformungsmittel, beispielsweise Polyethylenwachs, in üblichen Mengen, Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide und/oder niedermolekulare Polymere.

Unter einem Farbmittel versteht man im Allgemeinen alle farbgebenden Stoffe nach DIN 55944, welche in anorganische und organische Farbmittel sowie natürliche und synthetische einteilbar sind (s. Römpps Chemie Lexikon, 1981, 8. Auflage, S. 1237). Erfindungsgemäß geeignete Farbmittel sind beispielsweise ausgewählt aus der Gruppe der schwarz-, weiß-, rot-, grün-, gelb- und blaufarbigen Pigmente und werden vorzugsweise in Pulverform eingesetzt. In Kunststoffmischungen einsetzbare Farbmittel, insbesondere Farbpigmente, sind dem Fachmann bekannt. Das Farbmittel ist in der erfindungsgemäßen Mischung beispielsweise in Mengen von 0,001 bis 60, vorzugsweise 0,01 bis 30, insbesondere 0,1 bis 10, und ganz besonders 0,2 bis 5 Gew.-%, jeweils bezogen auf die gesamte Mischung, enthalten.

Geeignete Schlagzähmodifier sind dem Fachmann bekannt und sind in der erfindungsgemäßen Mischung beispielsweise in Mengen bis zu 20 Gew.-%, bevorzugt bis zu 15 Gew.-%, jeweils bezogen auf die gesamte Mischung, enthalten. Geeignet sind übliche Kautschuke, z. B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z. B. in Betracht: Acrylnitrilbutadienkautschuk, hydrierter Styrolbutadienkautschuk, Ethylen-Propylen-Dien-Kautschuk, Polybutylen- und Polyoctenamerkautschuke, lonomere, Blockcopolymere aus vinylaromatischen Monomeren mit Dienen wie Butadien oder Isopren (an sich bekannt aus EP-A 62 282) mit dem Aufbau M1M2-, M1M2M1M2- oder M1M2M1-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassen in "Ullmanns Encyklopädie der Technischen Chemie", 4. Auflage, Bd. 13, Seiten 595 bis 634, Verlag Chemie GmbH, Weinheim 1977, beschrieben.

Die vorliegende Erfindung betrifft auch ein Verfahren zur Herstellung der erfindungsgemäßen Mischung durch Vermischen des mindestens einen Kunststoffes K mit mindestens einer Verbindung A, und gegebenenfalls weiteren Additiven, sofern diese in der erfindungsgemäßen Mischung vorliegen.

Das Mischen kann nach allen dem Fachmann bekannten Verfahren erfolgen, beispielsweise in Intensivmischern oder durch Co-Extrusion der Komponenten.

Geeignete Vorrichtungen zum Mischen sind: Intensivmischer, wie sie z.B. in "Wolfgang Pietsch: Agglomeration Processes-Phenomena, Technologies, Equipment, Wiley-VCH, Weinheim 2002, Kapitel 7.4.2: High Shear Mixers, Seiten 171-187" beschrieben sind.

Geeignete Umfangsgeschwindigkeiten der Mischwerkzeuge liegen zwischen 0,5 m/s und 15 m/s, vorzugsweise zwischen 1 m/s und 10 m/s.

Die Verweilzeit im Mischer beträgt üblicherweise von 1 bis 60 min, vorzugsweise von 2 bis 30 min.

Die Temperatur im Mischer beträgt in der Regel von 10 bis 120 °C, vorzugsweise von 20 bis 100 °C.

Der Druck beträgt üblicherweise von 0,5 bis 1,1 bar, vorzugsweise von 0,9 bis 1,1 bar.

Verfahren zur Co-Extrusion zur Herstellung der erfindungsgemäßen Mischung sind dem Fachmann bekannt, und beispielsweise in DE 10 2005 032 700 beschrieben. Das Mischen zur Herstellung der erfindungsgemäßen Mischung kann auch durch Spritzguss erfolgen.

Die vorliegende Erfindung wird durch die folgenden Beispiele näher erläutert:

### Beispiele

### 1. Borophosphate, Borat-Phosphate und Metalloborophosphate in Polyamid 66

Die folgenden Beispiele sind von einem flammgeschützten PA66 abgeleitet, welches neben Glasfasern und Al-Stearat ein Flammschutzmittel Exolit OP1312® (Mischung aus Alkylphosphinaten + Melaminpolyphosphat + Zn Borat) von Clariant, sowie ein Antioxidationsmittel Irganox 1098® von Ciba, enthält.

Die flammgeschützten Zusammensetzungen in den Beispielen 1.1a-f, 1.2a-f und 1.3a-f enthalten jeweils eine Verbindung BPO aus der Gruppe Zn[BPO₄(OH)₂], Ca[BPO₅], Na₂[B₇P₃O₁₉]·H₂O (WO9525066), Mg₃BPO₇, Zn₃BPO₇, Al[B₂P₂O₇(OH)₅].

**Vergleichsbeispiel 1:**

| **Gew. %** | **Komponente** |
|---|---|
| 54,45 | Polyamid 66 |
| 25 | Glasfasern |
| 20 | Exolit OP1312 (Clariant) |
| 0,35 | Irganox 1098 (Ciba) |
| 0,2 | Al-Stearat |

**Beispiele 1.1a-f**

| **Beispiel** | **1.1a** | **1.1b** | **1.1c** | **1.1d** | **1.1e** | **1.1f** |
|---|---|---|---|---|---|---|
| **Komponente** | **Gew.%** | **Gew.%** | **Gew.%** | **Gew.%** | **Gew.%** | **Gew.%** |
| **Polyamid 66** | 54,45 | 54,45 | 54,45 | 54,45 | 54,45 | 54,45 |
| **Glasfasern** | 25 | 25 | 25 | 25 | 25 | 25 |
| **Exolit OP1312 (Clariant)** | 10 | 10 | 10 | 10 | 10 | 10 |
| **Irganox 1098 (Ciba)** | 0,35 | 0,35 | 0,35 | 0,35 | 0,35 | 0,35 |
| **Al-Stearat** | 0,2 | 0,2 | 0,2 | 0,2 | 0,2 | 0,2 |
| **Zn[BPO₄(OH)₂]** | 10 | - | - | - | - | - |
| **Ca[BPO₅]** | - | 10 | - | - | - | - |
| **Na₂[B₇P₃O₁₉]·H₂O** | - | - | 10 | - | - | - |
| **Mg₃BPO₇** | - | - | - | 10 | - | - |
| **Zn₃BPO₇** | - | - | - | - | 10 | - |
| **Al[B₂P₂O₇(OH)₅]** | - | - | - | - | - | 10 |

**Beispiele 1.2a-f**

| **Komponente** | **Beispiel** | | | | | |
|---|---|---|---|---|---|---|
| | **1.2a** | **1.2b** | **1.2c** | **1.2d** | **1.2e** | **1.2f** |
| | **Gew.%** | **Gew.%** | **Gew.%** | **Gew.%** | **Gew.%** | **Gew.%** |
| **Polyamid 66** | 54,45 | 54,45 | 54,45 | 54,45 | 54,45 | 54,45 |
| **Glasfasern** | 25 | 25 | 25 | 25 | 25 | 25 |
| **Exolit OP1312 (Clariant)** | - | - | - | - | - | - |
| **Irganox 1098 (Ciba)** | 0,35 | 0,35 | 0,35 | 0,35 | 0,35 | 0,35 |
| **Al-Stearat** | 0,2 | 0,2 | 0,2 | 0,2 | 0,2 | 0,2 |
| **Zn[BPO₄(OH)₂]** | 20 | - | - | - | - | - |
| **Ca[BPO₅]** | - | 20 | - | - | - | - |
| **Na₂[B₇P₃O₁₉]·H₂O** | - | - | 20 | - | - | - |
| **Mg₃BPO₇** | - | - | - | 20 | - | - |
| **Zn₃BPO₇** | - | - | - | - | 20 | - |
| **Al[B₂P₂O₇(OH)₅]** | - | - | - | - | - | 20 |

**Beispiele 1.3a-f**

| **Komponente** | **Beispiel** | | | | | |
|---|---|---|---|---|---|---|
| | **1.3a** | **1.4b** | **1.3c** | **1.3d** | **1.3e** | **1.3f** |
| | **Gew.%** | **Gew.%** | **Gew.%** | **Gew.%** | **Gew.%** | **Gew.%** |
| **Polyamid 66** | 54,45 | 54,45 | 54,45 | 54,45 | 54,45 | 54,45 |
| **Glasfasern** | 25 | 25 | 25 | 25 | 25 | 25 |
| **Exolit OP1312 (Clariant)** | - | - | - | - | - | - |
| **Irganox 1098 (Ciba)** | 0,35 | 0,35 | 0,35 | 0,35 | 0,35 | 0,35 |
| **Al-Stearat** | 0,2 | 0,2 | 0,2 | 0,2 | 0,2 | 0,2 |
| **Zn[BPO₄(OH)₂]** | 10 | - | - | - | - | - |
| **Ca[BPO₅]** | - | 10 | - | - | - | - |
| **Na₂[B₇P₃O₁₉]·H₂O** | - | - | 10 | - | - | - |
| **Mg₃BPO₇** | - | - | - | 10 | - | - |
| **Zn₃BPO₇** | - | - | - | - | 10 | - |
| **Al[B₂P₂O₇(OH)₅]** | - | - | - | - | - | 10 |

Die folgenden Beispiele sind von einem flammgeschützten PA66 abgeleitet, welches neben Glasfasern und Ca-Stearat roten Phosphor (Italmatch S.r.l. oder Exolit RP601B©) als Flammschutzmittel enthält. Die flammgeschützten Zusammensetzungen in den Beispielen 2.1a-f und 2.2a-f enthalten jeweils Verbindungen BPO aus der Gruppe Zn[BPO₄(OH)₂], Ca[BPO₅], Na₂[B₇P₃O₁₉]·H₂O (WO9525066), Mg₃BPO₇, Zn₃BPO₇, Al[B₂P₂O₇(OH)₅]

**Vergleichsbeispiel 2**

| **Gew. %** | **Komponente** |
|---|---|
| 62,51 | **Polyamid 66** |
| 25 | **Glasfasern** |
| 7,0 | **Exolit RP601B©** |
| 5 | **Lupolen** |
| 0,14 | **CuI/Kl 1:4** |
| 0,35 | **Ca-Stearat** |

**Beispiele 2.1a-f**

| **Komponente** | **Beispiel** | | | | | |
|---|---|---|---|---|---|---|
| | **2.1a** | **2.1b** | **2.1c** | **2.1d** | **2.1e** | **2.1f** |
| | **Gew.%** | **Gew.%** | **Gew.%** | **Gew.%** | **Gew.%** | **Gew.%** |
| **Polyamid 66** | 62,51 | 62,51 | 62,51 | 62,51 | 62,51 | 62,51 |
| **Glasfasern** | 25 | 25 | 25 | 25 | 25 | 25 |
| **Exolit RP601B**© | 3,5 | 3,5 | 3,5 | 3,5 | 3,5 | 3,5 |
| **Lupolen** | 5 | 5 | 5 | 5 | 5 | 5 |
| **CuI/Kl 1:4** | 0,14 | 0,14 | 0,14 | 0,14 | 0,14 | 0,14 |
| **Ca-Stearat** | 0,35 | 0,35 | 0,35 | 0,35 | 0,35 | 0,35 |
| **Zn[BPO₄(OH)₂]** | 3,5 | - | - | - | - | - |
| **Ca[BPO₅]** | - | 3,5 | - | - | - | - |
| **Na₂[B₇P₃O₁₉]·H₂O** | - | - | 3,5 | - | - | - |
| **Mg₃BPO₇** | - | - | - | 3,5 | - | - |
| **Zn₃BPO₇** | - | - | - | - | 3,5 | - |
| **Al[B₂P₂O₇(OH)₅]** | - | - | - | - | - | 3,5 |

**Beispiele 2.2a-f**

| **Komponente** | **Beispiel** | | | | | |
|---|---|---|---|---|---|---|
| | **2.2a** | **2.2b** | **2.2c** | **2.2d** | **2.2e** | **2.2f** |
| | **Gew.%** | **Gew.%** | **Gew.%** | **Gew.%** | **Gew.%** | **Gew.%** |
| **Polyamid 66** | 62,51 | 62,51 | 62,51 | 62,51 | 62,51 | 62,51 |
| **Glasfasern** | 25 | 25 | 25 | 25 | 25 | 25 |
| **Exolit RP601B**© | - | - | - | - | - | - |
| **Lupolen** | 5 | 5 | 5 | 5 | 5 | 5 |
| **CuI/Kl 1:4** | 0,14 | 0,14 | 0,14 | 0,14 | 0,14 | 0,14 |
| **Ca-Stearat** | 0,35 | 0,35 | 0,35 | 0,35 | 0,35 | 0,35 |
| **Zn[BPO₄(OH)₂]** | 7,0 | - | - | - | - | - |
| **Ca[BPO₅]** | - | 7,0 | - | - | - | - |
| **Na₂[B₇P₃O₁₉]·H₂O** | - | - | 7,0 | - | - | - |
| **Mg₃BPO₇** | - | - | - | 7,0 | - | - |
| **Zn₃BPO₇** | - | - | - | - | 7,0 | - |
| **Al[B₂P₂O₇(OH)₅]** | - | - | - | - | - | 7,0 |

### 2. Borophosphate, Borat-Phosphate und Metalloborophosphate in Polybutylen-terephthalat (PBT)

Die folgenden Beispiele sind von einem flammgeschützten PBT abgeleitet (Vergleichsbeispiel 3), welches neben Glasfasern ein Flammschutzmittel Exolit OP1200® von Clariant (2:1-Mischung aus Aluminiumdiethylphosphinat und Melamincyanurat) enthält. Die Beispiele 3.1a-f, 3.2a-f und 3.3a-f enthalten jeweils eine Verbindung BPO aus der Gruppe Zn[BPO₄(OH)₂], Ca[BPO₅], Na₂[B₇P₃O₁₉]·H₂O (WO9525066), Mg₃BPO₇, Zn₃BPO₇, Al[B₂P₂O₇(OH)₅].

**Vergleichsbeispiel 3:**

| **Gew. %** | **Komponente** |
|---|---|
| 55 | Polybutylenterephthalat |
| 20 | Exolit OP1200® |
| 25 | Glasfasern |

**Beispiele 3.1a-f:**

| **Komponente** | **Beispiel** | | | | | |
|---|---|---|---|---|---|---|
| | **3.1a** | **3.1b** | **3.1c** | **3.1d** | **3.1e** | **3.1f** |
| | **Gew.%** | **Gew.%** | **Gew.%** | **Gew.%** | **Gew.%** | **Gew.%** |
| **Polybutylenterephthalat** | 55 | 55 | 55 | 55 | 55 | 55 |
| **Exolit OP1200**® | 10 | 10 | 10 | 10 | 10 | 10 |
| **Glasfasern** | 25 | 25 | 25 | 25 | 25 | 25 |
| **Zn[BPO₄(OH)₂]** | 10 | - | - | - | - | - |
| **Ca[BPO₅]** | - | 10 | - | - | - | - |
| **Na₂[B₇P₃O₁₉]·H₂O** | - | - | 10 | - | - | - |
| **Mg₃BPO₇** | - | - | - | 10 | - | - |
| **Zn₃BPO₇** | - | - | - | - | 10 | - |
| **Al[B₂P₂O₇(OH)₅]** | - | - | - | - | - | 10 |

**Beispiele 3.2a-f:**

| **Komponente** | **Beispiel** | | | | | |
|---|---|---|---|---|---|---|
| | **3.2a** | **3.2b** | **3.2c** | **3.2d** | **3.2e** | **3.2f** |
| | **Gew.%** | **Gew.%** | **Gew.%** | **Gew.%** | **Gew.%** | **Gew.%** |
| **Polybutylenterephthalat** | 55 | 55 | 55 | 55 | 55 | 55 |
| **Exolit OP1200®** | - | - | - | - | - | - |
| **Glasfasern** | 25 | 25 | 25 | 25 | 25 | 25 |
| **Zn[BPO₄(OH)₂]** | 20 | - | - | - | - | - |
| **Ca[BPO₅]** | - | 20 | - | - | - | - |
| **Na₂[B₇P₃O₁₉]·H₂O** | - | - | 20 | - | - | - |
| **Mg₃BPO₇** | - | - | - | 20 | - | - |
| **Zn₃BPO₇** | - | - | - | - | 20 | - |
| **Al[B₂P₂O₇(OH)₅]** | - | - | - | - | - | 20 |

**Beispiele 3.3a-f:**

| **Komponente** | **Beispiel** | | | | | |
|---|---|---|---|---|---|---|
| | **3.3a** | **3.3b** | **3.3c** | **3.3d** | **3.3e** | **3.3f** |
| | **Gew.%** | **Gew.%** | **Gew.%** | **Gew.%** | **Gew.%** | **Gew.%** |
| **Polybutylenterephthalat** | 61,875 | 61,875 | 61,875 | 61,875 | 61,875 | 61,875 |
| **Exolit OP1200®** | | | | | | |
| **Glasfasern** | 28,125 | 28,125 | 28,125 | 28,125 | 28,125 | 28,125 |
| **Zn[BPO₄(OH)₂]** | 10 | - | - | - | - | - |
| **Ca[BPO₅]** | - | 10 | - | - | - | - |
| **Na₂[B₇P₃O₁₉]·H₂O** | - | - | 10 | - | - | - |
| **Mg₃BPO₇** | - | - | - | 10 | - | - |
| **Zn₃BPO₇** | - | - | - | - | 10 | - |
| **Al[B₂P₂O₇(OH)₅]** | - | - | - | - | - | 10 |

### 3. Borophosphate, Borat-Phosphate und Metalloborophosphate in Poly-(Acrylnitril-butadien-styrol) (ABS)

Als Polymer (Komponente A, a-I) wird ein handelsübliches Acrylnitril-Butadien-StyrolCopolymer (ABS), Terluran® der BASF SE, enthaltend eine Styrol-Acrylnitril-Copolymer-Hartphase und einen partikelförmigen Butadien-Pfropfkautschuk, eingesetzt.

Die folgenden Beispiele sind von einem flammgeschützten ABS abgeleitet (Vergleichsbeispiel 4), welches neben Blähgraphit und Polytetrafluorethylen Disflamol® TP, ein Triphenylphosphat der Lanxess Aktiengesellschaft enthält. Die Beispiele 4.1a-f, und 4.2a-f enthalten jeweils eine Verbindung BPO aus der Gruppe Zn[BPO₄(OH)₂], Ca[BPO₅], Na₂[B₇P₃O₁₉]·H₂O (WO9525066), Mg₃BPO₇, Zn₃BPO₇, Al[B₂P₂O₇(OH)₅]aus der Gruppe Fe[BP₂O₇(OH)₅], Zn[BPO₄(OH)₂], Ca[BPO₅], Na₂[B₇P₃O₁₉]·H₂O (WO9525066), Mg₃BPO₇, Zn₃BPO₇, Fe[B₂P₂O₇(OH)₅].

Als Flammschutzmittel (Komponente B, b-I) wird Blähgraphit Nord-Min® 503 der Firma Nordmann, Rassmann, GmbH, mit einer mittleren Teilchengröße D50 von 465 µm, einer freien Expansion (beginnend bei ca. 300°C) von mindestens 150 ml/g und einer Schüttdichte von 0,5 g/ml bei 20°C eingesetzt.

Als Komponente B2) wird eingesetzt:
b2-I: Disflamol® TP, ein Triphenylphosphat der Lanxess Aktiengesellschaft.

Als Komponente B3) wird eingesetzt:
b3-I: Polytetrafluorethylen PTFE TE-3893, Teflon® Dispersion der Fa. C. H. Erbslöh mit einem PTFE-Gehalt von 60 Gew.-% (bezogen auf das Gesamtgewicht der Dispersion)

Als weitere Komponente BPO wird eingesetzt eine Verbindung aus der Gruppe Zn[BPO₄(OH)₂], Ca[BPO₅], Na₂[B₇P₃O₁₉]·H₂O (WO9525066), Mg₃BPO₇, Zn₃BPO₇, Fe[B₂P₂O₇(OH)₅].

**Beispiele 4.1a-f**

| **Komponente** | **Beispiel** | | | | | |
|---|---|---|---|---|---|---|
| | **4.1a** | **4.1b** | **4.1c** | **4.1d** | **4.1e** | **4.1f** |
| | **Gew.%** | **Gew.%** | **Gew.%** | **Gew.%** | **Gew.%** | **Gew.%** |
| **a-I** | 77,6 | 77,6 | 77,6 | 77,6 | 77,6 | 77,6 |
| **b1-I** | 12 | 12 | 12 | 12 | 12 | 12 |
| **b2-I** | - | - | - | - | - | - |
| **b3-I** | 0,4 | 0,4 | 0,4 | 0,4 | 0,4 | 0,4 |
| **Zn[BPO₄(OH)₂]** | 10 | - | - | - | - | - |
| **Ca[BPO₅]** | - | 10 | - | - | - | - |
| **Na₂[B₇P₃O₁₉]·H₂O** | - | - | 10 | - | - | - |
| **Mg₃BPO₇** | - | - | - | 10 | - | - |
| **Zn₃BPO₇** | - | - | - | - | 10 | - |
| **Fe[B₂P₂O₇(OH)₅]** | - | - | - | - | - | 10 |

**Beispiele 4.2a-f**

| **Komponente** | **Beispiel** | | | | | |
|---|---|---|---|---|---|---|
| | **4.2a** | **4.2b** | **4.2c** | **4.2d** | **4.2e** | **4.2f** |
| | **Gew.%** | **Gew.%** | **Gew.%** | **Gew.%** | **Gew.%** | **Gew.%** |
| **a-I** | 81,6 | 81,6 | 81,6 | 81,6 | 81,6 | 81,6 |
| **b1-I** | 12 | 12 | 12 | 12 | 12 | 12 |
| **b2-I** | - | - | - | - | - | - |
| **b3-I** | 0,4 | 0,4 | 0,4 | 0,4 | 0,4 | 0,4 |
| **Zn[BPO₄(OH)₂]** | 6 | - | - | - | - | - |
| **Ca[BPO₅]** | - | 6 | - | - | - | - |
| **Na₂[B₇P₃O₁₉]·H₂O** | - | - | 6 | - | - | - |
| **Mg₃BPO₇** | - | - | - | 6 | - | - |
| **Zn₃BPO₇** | - | - | - | - | 6 | - |
| **Fe[B₂P₂O₇(OH)₅]** | - | - | - | - | - | 6 |

Zur Bestimmung der in Tabelle 1 genannten Brandeigenschaften werden die Komponenten A) bis D) (jeweilige Gew.-teile s. Tabelle 1) auf einem DSM Midiextruder homogenisiert und mit einem Spritzgussaufsatz bei 240°C Schmelzetemperatur und 80°C Werkzeugoberflächentemperatur zu Prüfkörpern gemäß UL 94, vertical burning standard, mit einer Dicke von 1,6 mm extrudiert.

**Tabelle 1: Brandeigenschaften mit BPO = Fe[BP₂O₇(OH)₅] im Vergleich**

| **Beispiel** | **Vergleichsbeispiel 4** | **Beispiel 4.1f** | **Beispiel 4.2f** |
|---|---|---|---|
| **Zusammensetzung** | **[Gew. %]** | **[Gew. %]** | **[Gew. %]** |
| **a-I** | 77,6 | 77,6 | 81,6 |
| **b1-I** | 12 | 12 | 12 |
| **b2-I** | 10 | - | - |
| **BPO** | - | 10 | 6 |
| **b3-I** | 0,4 | 0,4 | 0,4 |
| **Nachbrennzeit t₁ [s]** | 8,7 | 2,1 | 1,9 |
| **Nachbrennzeit t₂ [s]** | >50 | 6,4 | 11,4 |
| **Nachbrennzeit t₃ [s]** | >50 | 8,5 | 13,3 |

### Nachbrennzeit t_{N} [s]:

Im Brandtest in Anlehnung an UL 94, vertical burning standard, wird an Stäben mit einer Dicke von 1,6 mm nach einer ersten Beflammungsdauer von 10 Sekunden die erste Nachbrennzeit t1 gemessen. Nach einer sich an das Verlöschen der Flammen nach 2 Sekunden anschließenden zweiten Beflammungsdauer von 10 Sekunden wird die zweite Nachbrennzeit t2 gemessen. Die Summe der Nachbrennzeiten t1 und t2 ergibt die Nachbrennzeit t_{N} (angegeben wird jeweils der Mittelwert der an zwei Stäben bestimmten Nachbrennzeiten).

### 4. Borophosphate in Polyamid (PA) oder Polybutylenterephthalat (PBT)

### PA- und PBT-Formulierungen, Entflammbarkeitstest-Verfahren

Die Borophosphate (BPO) Mg₃[BO₃][PO₄] (MgBPO) und Zn₃[BO₃][PO₄] (ZnBPO) werden als Flammschutzmittel sowohl in PA66-, als auch in PBT-Systemen getestet.

Die Zusammensetzungen der weiteren in den Systemen enthaltenen Flammschutzadditive und die entsprechenden Polymere sind in Tabelle 2 wiedergegeben.

**Tabelle 2: In den Versuchen verwendete flammschützende Additive und Polymere**

| Verbindung | Zusammensetzung | Anwendung |
|---|---|---|
| Exolit OP 1200 | 2:1 Mischung von Aluminum-diethylphosphinat und Melamin-Cyanurat | Flammschutzmittel für PBT |
| Exolit OP 1312 | 2:1 Mischung von Aluminum-diethylphosphinat und Melamin-Cyanurat, zusätzlich 5% Zink-borat | Flammschutzmittel für PA66 |
| Exolit OP 1240 | Aluminum-diethylphosphinat | Flammschutzmittel |
| Melapur P200 | Melamin-polyphosphat | Synergist |
| B4300 G6 | PBT mit 30% Glas-Fasern | Polymer matrix |
| A3WG5 | PA66 mit 25% Glas-Fasern | Polymer matrix |

Die erfindungsgemäßen BPO-Verbindungen werden verwendet, um bis zu 25 Gew.-% der Exolit-Menge zu ersetzen, und werden zusätzlich als alleinige Synergisten für Exolite OP 1240 oder in Kombination mit einem zweiten Synergist eingesetzt. Die Materialien werden in einem 17 mL Miniextruder vermischt, anschließend werden durch Spritzguss zwei 0,8 mm dicke Test-Barren hergestellt. Die Verfahrens-Bedingungen sind in Tabelle 3 zusammen gefasst.

**Tabelle 3: Mischungs-Parameter für PA66 und PBT.**

| | Extrusions-Temp. [°C] | Extrusionsdauer [min] | Schraubengeschwindigkeit [rpm] | Spritzguss-Temp. [°C] | Schmelz-Temp. [°C] |
|---|---|---|---|---|---|
| PA66 | 285 | 3 | 80 | 290 | 160 |
| PBT | 260 | 3 | 80 | 260 | 160 |

Ein vertikaler UL94 Test wird verwendet, um die flammschützende Wirkung der Zusammensetzungen zu ermitteln. Streifenförmige Proben mit verschiedenen Dicken werden entzündet und bezüglich ihres Brandverhaltens bewertet. V0 bei 0,8 mm beschreibt eine kurze Branddauer ohne Tropfen und wird im Rahmen dieser Untersuchung als Bezugspunkt gesetzt. V1 beschreibt eine Branddauer von mehr als 10 s, V2 beschreibt das Abtropfen von brennendem Polymer. PA- oder PBT-Matrizen ohne flammschützende Additive verbrennen vollständig, und werden als V- klassifiziert.

### Resultate und Bewertung

Die beiden eingesetzten Verbindungen MgBPO und ZnBPO zeigen eine gute Matrix-Kompatibilität mit PA66 und PBT.

Die Zusammensetzungen enthaltend PA oder PBT und die entsprechenden UL94 Test-Resultate werden in den Tabellen 4 und 5 gezeigt. Alle Mengenangaben sind in Gew.-%.

**Tabelle 4: PBT-Formulierungen und Resultate der Flamm-Tests.**

| | 1 | 2 | 3 | 4 | 5 | 6 | 7 | 8 | 9 |
|---|---|---|---|---|---|---|---|---|---|
| B4300 G6 | 77,5 | 77,5 | 77,5 | 77,5 | 77,5 | 77,5 | 77,5 | 77,5 | 77,5 |
| Exolit OP 1200 | 22,5 | 20 | 15 | - | - | 20 | 15 | - | - |
| Exolit OP 1240 | - | - | - | 15 | 10 | - | - | 15 | 10 |
| MgBPO | - | 2,5 | 7,5 | 7,5 | 7,5 | - | - | - | - |
| ZnBPO | - | - | - | - | - | 2,5 | 7,5 | 7,5 | 7,5 |
| Melapur P200 | - | - | - | - | 5 | - | - | - | 5 |
| UL94 rating | V0 | V0 | V1 | V1 | V0 | V1 | V1 | V1 | V0 |

**Tabelle 5: PBT-Formulierungen und Resultate der Flammtests.**

| | 1 | 2 | 3 | 4 | 5 | 6 | 7 |
|---|---|---|---|---|---|---|---|
| A3WG5 | 80 | 80 | 80 | 80 | 80 | 80 | 80 |
| Exolit OP 1312 | 20 | 17,5 | 15 | - | 17,5 | 15 | - |
| Exolit OP 1240 | - | - | - | 13,4 | - | - | 13,4 |
| MgBPO | - | 2,5 | 5 | 6,7 | - | - | - |
| ZnBPO | - | - | - | - | 2,5 | 5 | 6,7 |
| UL94 rating | V0 | V0 | V0 | V1 | V0 | V0 | V1 |

## Patentansprüche

1. Mischung, enthaltend mindestens einen Kunststoff K und 1,0 bis 30 Gew.-%, bezogen auf die gesamte Mischung, mindestens einer Verbindung A, ausgewählt aus der Gruppe bestehend aus Borophosphaten, Borat-Phosphaten, Metalloborophosphaten und Mischungen davon.

2. Mischung nach Anspruch 1, **dadurch gekennzeichnet, dass** die mindestens eine Verbindung A ein Borophosphat ist, ausgewählt aus der Gruppe bestehend aus Mg₃(H₂O)₆[{BPO₄(OH)₃}₂], Mn[BPO₄(OH)₂], Fe[BPO₄(OH)₂], Co[BPO₄(OH)₂], Fe[B₂P₂O₇(OH)₅], Fe[B₂P₂O₇(OH)₅]H₂O, Ga[B₂P₂O₇(OH)₅], Al[B₂P₂O₇(OH)₅]·H₂O, Al[B₂P₂O₇(OH)₅], Ca[BPO₅], Sr[BPO₅], Ba[BPO₅], Li₃[B₆PO₁₃], Li₃[BP₂O₈], Na₃[B₆PO₁₃], Na₃[BP₂O₈], K₃[B₆PO₁₃], K₃[BP₂O₈], Rb₃[B₆PO₁₃], Cs₃[BP₂O₈], Pb[BPO₅], Mg(H₂O)₂[BPO₄(OH)₂], (Mg₁₋ₓNiₓ)(H₂O)₂[BPO₄(OH)₂] (x = 0 - 1), Cu(H₂O)₂[B₂P₂O₈(OH)₂], Mg(H₂O)₂[B₂P₂O₈(OH)₂]·H₂O, (Mg₁₋ₓCOₓ)(H₂O)₂[B₂P₂O₈(OH)₂]·H₂O mit (x = 0 - 1), [Co(en)₃][B₂P₃O₁₁(OH)₂] (en = Ethylendiamin), Rb₂Co₃(H₂O)₂[B₄P₉O₂₄(OH)₂], (C₂H₁₆N₃)Mg[B₂P₃O₁₂(OH)], (C₄N₂H₁₂)Mn[B₂P₃O₁₂(OH)], (C₂H₁₀N₂)(*M*)[B₂P₃O₁₂(OH)] (*M* = Mn, Fe, Co, Ni, Cu, Zn, Mg, Ca, Cd), (C₂H₁₀N₂)Cd[B₂P₃O₁₂(OH)], (C₄H₁₆N₃)Cd[B₃P₃O₁₃(OH)]Cl, Na₃[B₃P₃O₁₃], Sr₆BP₅O₂₀, Ca₆BP₅O₂₀, Mg₆BP₅O₂₀, Ba₆BP₅O₂₀, Ca₆[BP₄O₁₆][PO₄], Sr₆[BP₄O₁₈][PO₄], Mg₆[BP₄O₁₆][PO₄], Ba₆[BP₄O₁₆][PO₄] Mn(C₃H₁₂N₂)[B₂P₃O₁₂(OH)], Mn(O₄H₁₂N₂)[B₂P₃O₁₂(OPH)], Co(C₄H₁₂N₂)[B₂P₃O₁₂(OH)], Zn(C₄H₁₂N₂)[B₂P₃O₁₂(OH)], Mn(C₆H₁₄N₂)_{0.5}(C₄H₁₂N₂)[B₂P₃O₁₂(C)H)], Rb₃[B₂P₃O₁₁(OH)₂], (NH₄)₂(C₃H₁₂N₃)₈[V₂P₂BO₁₂]₆·15H₂O, [TETA]₄H[(NH₄)(VO)₁₂{BP₂O₁₀}₆·14H₂O (TETA = Triethylentetraamin), [TETA]₄H[(NH₄)(VO)₁₂{BP₂₀O₁₀}₆]·16H₂O (TETA = Triethylentetraamin), [TETA]₄H[K(VO)₁₂{BP₂O₁₀}₆]·14H₂O (TETA = Triethylentetraamin), [TETA]₄H[K(VO)₁₂(BP₂O₁₀}6]·16H₂O (TETA = Triethylentetraamin), (NH₄)ₓ(CₙH₂ₙ₊₁NH₃)_{y}[(NH₄)V₂P₂BO₁₂]₆ (n = 1, 2, 3, 4, 5, 6, 7, 8, 9, 10, 11, 12, 13, 14, 15, 16, 17, 18, 19, 20), (C₄H₁₂N₂)₆[(VO)₂BP₂O₁₀]₄ · zH₂O (z = 1, 2, 3, 4, 5, 6, 7, 8, 9, 10, 11, 12, 13, 14, 15, 16, 17, 18, 19, 20), Na₁₄[Na{(VO)₂BP₂O₁₀}₅] · nH₂O (n = 1, 2, 3, 4, 5, 6, 7, 8, 9, 10, 11, 12, 13, 14, 15, 16, 17, 18, 19, 20), (NH₄)₁₇[(NH₄), {(VO)₂BP₂O₁₀}₆]·nH₂O (n = 1, 2, 3, 4, 5, 6, 7, 8, 9, 10, 11, 12, 13, 14, 15, 16, 17, 18, 19, 20), (A)₁₇[(A) {(VO)₃BP₂O₁₆}₆]·nH₂O (A = NH₄, Li, Na, K, Cs, Rb, Ag, Tl) (n = 1, 2, 3, 4, 5, 6, 7, 8, 9, 10, 11, 12, 13, 14, 15, 16, 17, 18, 19, 20), [C₂H₁₀N₂]₂[(VO)₅(H₂O){BP₂O₁₀}₂]·1.5H₂O, Na₂[VB₃P₃O₁₂(OH)]·2.92H₂O, (NH₄)₂(C₂H₁₀N₂)₆[Sr(H₂O)₅]₂[V₂BP₂O₁₂]₆·10H₂O, (NH₄)₂(C₃H₁₂N₂)₆[Sr(H₂O)₄]₂[V₂BP₂O₁₂]₆·17H₂O, (NH₄)₂(C₃H₁₂N₃)₆[V₂P₂BO₁₂]₆·15H₂O, [TETA]₄H[(NH₄)(VO)₁₂{BP₂O₁₀}₆]·14H₂O (TETA = Triethylentetraamin), [TETA]₄H[(NH₄)(VO)₁₂{BP₂O₁₀}₆]·16H₂O (TETA = Triethylentetraamin), [TETA]₄H[K(VO)₁₂{BP₂O₁₀}₆]·14H₂O (TETA= Triethylentetraamin), [TETA]₄H[K(VO)₁₂{BP₂O₁₀}₆]·16H₂O (TETA = Triethylentetraamin), (NH₄)ₓ(CₙH₂ₙ₊₁NH₃)_{y}[(NH₄)V₂P₂BO₁₂]₆ (n = 1, 2, 3, 4, 5, 6, 7, 8, 9, 10, 11, 12, 13, 14, 15, 16, 17, 18, 19, 20), (C₄H₁₂N₂)₆[(VO)₂BP₂O₁₀]₄·zH₂O (z = 2, 6, 14), (NH₄)₁₇[(NH₄){(VO)₂BP₂O₁₀}₆]·nH₂O (n = 1, 2, 3, 4, 5, 6, 7, 8, 9, 10, 11, 12, 13, 14, 15, 16, 17, 18, 19, 20), [C₂H₁₀N₂]₂[(VO)₅(H₂O){BP₂O₁₀}₂]·1.5H₂O, (C₂H₁₀N₂)₂[B₂P₄O₁₄(OH)₂], (N₂C₃H₅)_{3.8}(H₃O)_{1.2}[(VO)₄B₂P₅O₂₂]·0.3H₂O, (C₆H₁₄N₂)₂[VOB₂P₅O₁₆(OH)₅]·H₂O·H₃PO₄, (NH₄)₅[V₃BP₃O₁₉]·H₂O, (C₃N₂H₅)₈[MO₁₂B₂P₈O₅₉(OH)₃]·4H₂O, [C₆H₁₄N₃]₂[VOB₃P₄O₁₅(OH)₅]·4H₂O, (ImH₂)[Mo^{V}₅Mo^{VI}₇O₃₀(BPO₄)₂(O₃P-Ph)₆] (Im = Imidazol, Ph = Phenyl), Na₂[VB₃P₂O₁₂(OH)]·2.92H₂O, (NH₄)₃(C₄H₁₄N₂)_{4.5}[Sr(H₂O)₅]₂[Sr(H₂O)₄][V₂BP₂O₁₂]₆·10H₂O, (NH₄)ₓ(CₙH₂ₙ₊₁NH₃)_{y}[(NH₄)V₂P₂BO₁₂]₆ (x = 1, 2, 3, 4, 5, 6, 7, 8, 9, 10, 11, 12, 13, 14, 15, 16, 17, 18, 19, 20) (n = 1, 2, 3, 4, 5, 6, 7, 8, 9, 10, 11, 12, 13, 14, 15, 16, 17, 18, 19, 20), (C₂H₁₀N₂)₂[Na(VO)₁₀{BP₂O₈(OH)₂}₅]·22.5H₂O, CsV₃(H₂O)₂[B₂P₄O₁₆(OH)₄], LiCu₂[BP₂O₈(OH)₂], (C₃H₁₂N₂)Fe^{III}₆[B₄P₈O₃₂(OH)₈], K₅{W₄O₁₀[BP₂O₈(OH)₂][HPO₄]₂}·0-5H₂O, Mg₂[BP₂O₇(OH)₃], NaAl[BP₂O₇(OH)₃], NaV[BP₂O₇(OH)₃], NaFe[BP₂O₇(OH)₃], NaGa[BP₂O₇(OH)₃], NaIn[BP₂O₇(OH)₃], CaNi[BP₂O₇(OH)₃], NH₄V[BP₂O₈(OH)], NH₄Fe[BP₂O₈(OH)], NH₄(Fe₁₋ₓVₓ)[BP₂O₈(OH)] (x = 0.1, 0.2, 0.3, 0.4, 0.47, 0.5, 0.53, 0.6, 0.7, 0.8, 0.9), NH₄Al[BP₃O₆(OH)], NH₄Ga[BP₂O₈(OH)], RbV[BP₂O₈(OH)], RbFe[BP₂O₈(OH)], Rb(Fe₁₋ₓVₓ)[BP₂O₈(OH)] (x = 0.1, 0.2, 0.3, 0.4, 0.47, 0.5, 0.53, 0.6, 0.7, 0.8, 0.9), RbAl[BP₂O₆(OH)], RbGa[BP₂O₈(OH)], CsV[BP₃O₆(OH)], CsFe[BP₂O₈(OH)], Cs(Fe₁₋ₓVₓ)[BP₂O₈(OH)] (x = 0.1, 0.2, 0.3, 0.4, 0.47, 0.5, 0.53, 0.6, 0.7, 0.8, 0.9), CsAl[BP₂O₈(OH)], CsGa[BP₂O₈(OH)], Pb₂[BP₂O₈(OH)], NH₄Sc[BP₂O₈(OH)], NH₄Fe[BP₂O₈(OH)], NH₄In[BP₂O₈(OH)], KSc[BP₂O₈(OH)], RbSc[B₂P₃O₁₁(OH)₃], CsSc[B₂P₃O₁₁(OH)₃], KFe[BP₂O₈(OH)], Kln[BP₂O₈(OH)], RbSc[BP₂O₈(OH)], RbSc[BP₂O₈(OH)], CsFe[BP₃O₈(OH)], Rbln[BP₂O₈(OH)], PbCo[BP₂O₈(OH)], PbZn[BP₂O₈(OH)], Sc(H₂O)₂[BP₂O₈]·H₂O, Fe(H₂O)₂[BP₂O₈]·H₂O, In(H₂O)₂[BP₂O₈]·H₂O, Sc(H₂O)₂[BP₂O₈], In(H₂O)₂[BP₂O₈], In[BP₂O₈]·0-8H₂O, NH₄Mg(H₂O)₂[BP₂O₈]·H₂O, NH₄(*M*)(H₂O)₂[BP₂O₈]·H₂O (*M* = Mn, Fe, Co, Ni, Cu, Zn, Mg, Ca, Cd), (Li-K)Mg(H₂O)₂[BP₂O₈]·H₂O, (A)(Mn-Zn)(H₂O)₂[BP₂O₈]·H₂O A = NH₄, Li, Na, K, Rb, Cs, Ag, Tl), (NH₄)(*M*)(H₂O)₂[BP₂O₈]·H₂O (*M* = Mn, Fe, Co, Ni, Cu, Zn, Mg, Ca, Cd), NH₄Mg(H₂O)₂[BP₂O₈]·H₂O, (H₃O)Zn(H₂O)₂[BP₂O₈]·H₂O, NaCd(H₂O)₂[BP₂O₈]·0.8H₂O, (NH₄)Cd(H₂O)₂[BP₂O₈]·0.72H₂O, (NH₄)Cd(H₂O)₂[BP₂O₈]·H₂O, KFe(H₂O)₂[BP₂O₈]·0.5H₂O, KFe(H₂O)₂[BP₂O₈]·H₂O, Rb₃₋₂ₓMgₓ(H₂O)₂[BP₂O₈]·zH₂O (z= 0-1) (x = 0-1.5), Rb₃₋₂ₓMnₓ(H₂O)₂[BP₂O₈]·zH₂O (z= 0-1) (x = 0-1.5), Rb₃₋₂ₓCoₓ(H₂O)₂[BP₂Oₛ]·zH₂O (z= 0-1) (x = 0-1), Rb₃₋₂ₓFeₓ(H₂O)₂[BP₂O₈]·zH₂O (z = 0-1) (x = 0-1.5), Cs₃₋₂ₓMgₓ(H₂O)₂[BP₂O₈]·zH₂O (z= 0-1) (x = 0-1), Cs₃₋₂ₓMnₓ(H₂O)₂[BP₂O₈]·zH₂O (z= 0-1) (x = 0-1.5), Cs₃₋₂ₓCOₓ(H₂O)₂[BP₂O₈]·zH₂O (z= 0-1) (x = 0-1.5), Cs₃₋₂ₓFeₓ(H₂O)₂[BP₂O₈)·zH₂O (z = 0-1) (x = 0-1), (H₃O)_{0.5}Co_{1.25}(H₂O)[BP₂O₈]·H₂O, (H₃O)_{0.5}Mn_{1.25}(H₂O)[BP₂O₈]·H₂O, (NH₄)_{0.4}Fe^{II}_{0.55}Fe^{III}_{0.5}(H₂O)₂[BP₂O₈]·0.6H₂O, (NH₄)_{0.5}Fe^{II}_{0.5}Fe^{III}_{0.5}(H₂O)₂[BP₂O₈]·0.5H₂O, {(NH₄)₃₋₂ₓCoₓ}(H₂O)₂[BP₂O₈]·zH₂O mit (x = 0-1.5) (z = 0-1), Ca_{0.5}Ni(H₂O)₂[BP₂O₈]·H₂O, (Mg₁₋ₓ(Mg-Ba)ₓ)_{1.5}(H₂O)₂[BP₂O₈]·zH₂O (x = 0-1) (z = 0-1), (Mg₁₋ₓMnₓ)_{1.5}(H₂O)₂[BP₂O₈]·zH₂O (x = 0-1) (z = 0-1), (Mg₁₋ₓFeₓ)_{1.5}(H₂O)₂[BP₂O₈]·zH₂O (x = 0-1) (z = 0-1), (Mg₁₋ₓCOₓ)_{1.5}(H₂O)₂[BP₂O₈]·zH₂O (x = 0-1) (z = 0-1), (Mg₁₋ₓZnₓ)_{1.5}(H₂O)₂[BP₂O₈]·zH₂O (x = 0-1) (z = 0-1), Na₃[BP₂O₆], (C₂H₁₀N₂)₂[B₂P₄O₁₄(OH)₂], K₆Cu₂[B₄P₈O₂₈(OH)₆], Zn₃(C₆H₁₄N₂)₄[B₆P₁₂O₃₉(OH)₁₂][HPO₄], Na₄Cu₃[B₂P₄O₁₅(OH)₂]·2HPO₄, (C₄H₁₂N₂)₃Fe^{III}₆(H₂O)₄[B₆P₁₂O₅₀(OH)₂]·2H₂O, Na₂[BP₂O₇(OH)], (Na_{1,89}Ag_{0,11})₂[BP₂O₇(OH)], (N₂C₃H₅)_{3.8}(H₃O)_{1.2}[(VO)₄B₂P₅O₂₂]·0.3H₂O, (C₆H₁₄N₂)₂[VOB₂P₅O₁₆(OH)₅]·H₂O·H₃PO₄, (NH₄)₅[V₃BP₃O₁₉]·H₂O, [Co(en)₃][enH₂][V₃BP₃O₁₉]·4.5H₂O (en = Ethylendiamin), (NH₄)₄Mn₉[BP₃O₁₁(OH)₂]₂[HPO₄]₂[PO₄]₂, [CO(en)₃][V₃BP₃O₁₉][H₂PO₄]·4H₂O (en = Ethylendiamin), Mg₂(H₂O)[BP₃O₉(OH)₄], Ba₃[BP₃O₁₂], Pb₃[BP₃O₁₂], K₃[BP₃O₉(OH)₃], Pb₆[BP₄O₁₆][PO₄], Sr₆[BP₄O₁₆][PO₄], (C₃N₂H₅)₈[Mo₁₂B₂P₈O₅₉(OH)₃]·4H₂O, Co₅[BPO₆][PO₄]₂, Cr₂[BP₃O₁₂], Fe₂[BP₃O₁₂], V₂[BP₃O₁₂], [C₆H₁₄N₂]₂[VOB₃P₄O₁₅(OH)₅]·4H₂O, Na₂Cu[B₃P₂O₁₁(OH)]·0.6H₂O, Na₂Mg[B₃P₂O₁₁(OH)]·0.67H₂O, Na₂(Mn-Zn)[B₃P₂O₁₁(OH)]·0.67H₂O, Na₅(H₃O)Mg₃[B₃P₂O₁₁(OH)]₃·2H₂O, Na₅(H₃O)(Mn-Zn)₃[B₃P₂O₁₁(OH)]₃·2H₂O, (NH₄)₂[B₃PO₇(OH)₂], (NH₄)[B₃PO₆(OH)₃]0.5H₂O, Li[B₃PO₆(OH)₃], K₃[B₅PO₁₀(OH)₃], K[B₆PO₁₆(OH)₄], Na₃[B₆PO₁₃], (C₂H₁₀N₂)[BPO₄F₂], (NH₄)[BPO₄F], (ImH₂)[MO^{V}₅Mo^{VI}₇O₃₀(BPO₄)₂(O₃P-Ph)₆] (Im = Imidazol, Ph = Phenyl), Zn[BPO₄(OH)₂], Ni[BPO₄(OH)₂], und Mischungen davon.

3. Mischung nach Anspruch 1, **dadurch gekennzeichnet, dass** die mindestens eine Verbindung A ein Borat-Phosphat ist, ausgewählt aus der Gruppe bestehend aus Zn₃[BO₃][PO₄], Mg₃[BO₃][PO₄], Co₃[BO₃][PO₄], La₇O₆(BO₃)(PO₄)₂, Pr₇O₆[BO₃][PO₄]₂, Nd₇O₆[BO₃][PO₄]₂, Sm₇O₆[BO₃][PO₄]₂, Gd₇O₆[BO₃][PO₄]₂, Dy₇O₆[BO₃][PO₄]₂, Mn₃(OH)₂[B(OH)₄][PO₄] und Mischungen davon.

4. Mischung nach Anspruch 1, **dadurch gekennzeichnet, dass** das Metalloborophosphat ein Metall ausgewählt aus der Gruppe Be, Zn, Co und Mischungen davon, im anionischen Teil enthält.

5. Mischung nach Anspruch 1 oder 4, **dadurch gekennzeichnet, dass** die mindestens eine Verbindung A ein Metalloborophosphat ist, ausgewählt aus der Gruppe bestehend aus NH₄[ZnBP₂O₈], Rb[ZnBP₂O₆], Cs[ZnBP₂O₈], NH₄[(Zn₁₋ₓCoₓ)BP₂O₈] (x = 0, 0.1, 0.2, 0.3, 0.4, 0.5, 0.6, 0.7, 0.8, 0.9, 1.0), Na[ZnBP₂O₈]·H₂O, (C₄N₃H₁₆)[Zn₃B₃P₆O₂₄]·H₂O, (C₆N₄H₂₂)_{1.5}[Zn₆B₆P₁₂O₄₈]·1.5H₂O, NH₄[ZnBP₂O₈], K[ZnBP₂O₈], Na[BeBP₂O₈]·xH₂O (x = 0-1) K[BeBP₂O₈]·xH₂O (x = 0-1), NH₄[BeBP₂O₈]·xH₂O (x = 0-1), [*M*BP₂O₈] (*M* = B, Al, Ga) und Mischungen davon.

6. Mischung nach einem der Ansprüche 1 bis 5, **dadurch gekennzeichnet, dass** der mindestens eine Kunststoff K ausgewählt ist aus der Gruppe bestehend aus Polyoxymethylenhomo- oder -copolymerisaten, Polycarbonaten, Polyestern, Polyolefinen, Poly(meth)acrylaten, Polyamiden, vinylaromatischen Polymeren, Polyarylenethern, Epoxy-Harzen und Mischungen davon.

7. Mischung nach einem der Ansprüche 1 bis 6, **dadurch gekennzeichnet, dass** zusätzlich mindestens ein Flammschutzmittel vorliegt, ausgewählt aus der Gruppe bestehend aus Phosphor enthaltenden Verbindungen, Stickstoff enthaltenden Verbindungen, Metallhydroxiden, Metalloxiden, Bor enthaltenden Verbindungen, Silicaten, Silziumdioxid, Sulfaten, Carbonaten und Mischungen davon.

8. Mischung nach Anspruch 7, **dadurch gekennzeichnet, dass** das mindestens eine zusätzliche Flammschutzmittel ausgewählt ist aus der Gruppe bestehend aus Triphenylphosphinoxid, Aluminiumtriethylphosphinat, Zinkdiethylphosphinat, Melaimncyanurat, Melaminphosphat, Melaminpolyphosphat, Melaminpyrophosphat, Melaminammoniumpolyphosphat, Melaminammoniumpyrophosphat, Melaminborat, Triphenylphosphat, Resorcinol-bis-(diphenylphosphat), Bis-phenol-A-bis-(diphenylphosphat), Resorcinal-bis-(2,6-dixylylenylphosphat), Aluminiumhydroxid, Aluminiumoxidhydroxid, Magnesiumdihydroxid, Zinkoxid, Molybdäntrioxid, Antimonoxid, Aluminiumtrihydroxid, Zinkborat, Calciumsilicat, Magnesiumsilicat, Calciumsulfat, Magnesiumcarbonat, Dihydrooxaphosphaphenantren, Dihydrooxaphosphaphenantren-hydrochinon, Kalium-diphenylsulphonsulphonat, Polymethylphenylsiloxan, Kalium-butylperfluorosulfonat und Mischungen davon.

9. Mischung nach einem der Ansprüche 1 bis 8, **dadurch gekennzeichnet, dass** ein Antitropfmittel vorliegt.

10. Verwendung einer Verbindung ausgewählt aus der Gruppe bestehend aus Borophosphaten, Borat-Phosphaten, Metalloborophosphaten und Mischungen davon als Flammschutzmittel in Kunststoffen, wobei diese Verbindung in einer Menge von 1,0 bis 30 Gew.-%, bezogen auf die gesamte Mischung, vorliegt.

11. Verwendung nach Anspruch 10, **dadurch gekennzeichnet, dass** zusätzlich mindestens ein Flammschutzmittel vorliegt, ausgewählt aus der Gruppe bestehend aus Phosphor enthaltenden Verbindungen, Stickstoff enthaltenden Verbindungen, Metallhydroxiden, Metalloxiden, Bor enthaltenden Verbindungen, Silicaten, Silziumdioxid, Sulfaten, Carbonaten und Mischungen davon.

12. Verwendung nach Anspruch 11, **dadurch gekennzeichnet, dass** das mindestens eine zusätzliche Flammschutzmittel ausgewählt ist aus der Gruppe bestehend aus Triphenylphosphinoxid, Aluminiumtriethylphosphinat, Zinkdiethylphosphinat, Melamincyanurat, Melaminphosphat, Melaminpolyphosphat, Melaminpyrophosphat, Melaminammoniumpolyphosphat, Melaminammoniumpyrophosphat, Melaminborat, Triphenylphosphat, Resorcinol-bis-(diphenylphosphat), Bis-phenol-A-bis-(diphenylphosphat), Resorcinal-bis-(2,6-dixylylenylphosphat), Aluminiumhydroxid, Aluminiumoxidhydroxid, Magnesiumdihydroxid, Zinkoxid, Molybdäntrioxid, Antimonoxid, Aluminiumtrihydroxid, Zinkborat, Calciumsilicat, Magnesiumsilicat, Calciumsulfat, Magnesiumcarbonat, Dihydrooxaphosphaphenantren, Dihydrooxaphosphaphenantren-hydrochinon, Kalium-diphenylsulphonsulphonat, Polymethylphenylsiloxan, Kalium-butylperfluorosulfonat und Mischungen davon.

13. Verfahren zur Herstellung einer Mischung gemäß einem der Ansprüche 1 bis 9 durch Vermischen des mindestens einen Kunststoffes K mit mindestens einer Verbindung A.

## Claims

1. A mixture comprising at least one plastic K and from 1.0 to 30% by weight, based on the entire mixture, of at least one compound A selected from the group consisting of borophosphates, borate phosphates, metalloborophosphates, and mixtures thereof.

2. The mixture according to claim 1, wherein the at least one compound A is a borophosphate selected from the group consisting of Mg₃(H₂O)₆[{BPO₄(OH)₃}₂], Mn[BPO₄(OH)₂], Fe[BPO₄(OH)₂], Co[BPO₄(OH)₂], Fe[B₂P₂O₇(OH)₅], Fe[B₂P₂O₇(OH)₅]·H₂O, Ga[B₂P₂O₇(OH)₅], Al[B₂P₂O₇(OH)₅]·H₂O, Al[B₂P₂O₇(OH)₅], Ca[BPO₅], Sr[BPO₅], Ba[BPO₅], Li₃[B₆PO₁₃], Li₃[BP₂O₈], Na₃[B₆PO₁₃], Na₃[BP₂O₈], K₃[B₆PO₁₃], K₃[BP₂O₈], Rb₃[B₆PO₁₃], Cs₃[BP₂O₈], Pb[BPO₅], Mg(H₂O)₂[BPO₄(OH)₂], (Mg₁₋ₓNiₓ)(H₂O)₂[BPO₄(OH)₂] (x = 0 - 1), Cu(H₂O)₂[B₂P₂O₈(OH)₂], Mg(H₂O)₂[B₂P₂O₈(OH)₂]·H₂O, (Mg₁₋ₓCoₓ)(H₂O)₂[B₂P₂O₈(OH)₂]·H₂O, where (x = 0 - 1), [Co(en)₃][B₂P₃O₁₁(OH)₂] (en = ethylenediamine), Rb₂Co₃(H₂O)₂[B₄P₆O₂₄(OH)₂], (C₂H₁₀N₂)Mg[B₂P₃O₁₂(OH)], (C₄N₂H₁₂)Mn[B₂P₃O₁₂(OH)], (C₂H₁₀N₂)(*M*)[B₂P₃O₁₂(OH)] (*M* = Mn, Fe, Co, Ni, Cu, Zn, Mg, Ca, Cd), (C₂H₁₀N₂)Cd[B₂P₃O₁₂(OH)], (C₄H₁₆N₃)Cd[B₂P₃O₁₂(OH)]Cl, Na₅[B₂P₃O₁₃], Sr₆BP₅O₂₀, Ca₆BP₅O₂₀, Mg₆BP₅O₂₀, BB₆BP₅O₂₀, Ca₆[BP₄O₁₆][PO_{4]}, Sr₆[BP₄O₁₆][PO₄], Mg₆[BP₄O₁₆][PO₄], Ba₆[BP₄O₁₆][PO₄] Mn(C₃H₁₂N₂)[B₂P₃O₁₂(OH)], Mn(C₄H₁₂N₂)[B₂P₃O₁₂(OH)], Co(C₄H₁₂N₂)[B₂P₃O₁₂(OH)], Zn(C₄H₁₂N₂)[B₂P₃O₁₂(OH)], Mn(C₆H₁₄N₂)_{0.5}(C₄H₁₂N₂)[B₂P₃O₁₂(OH)], Rb₃[B₂P₃O₁₁(OH)₂], (NH₄)₂(C₃H₁₂N₃)₈[V₂P₂BO₁₂]₆·15H₂O, [TETA]₄H[(NH₄)(VO)₁₂{BP₂O₁₀}₆]·14H₂O (TETA= triethylenetetramine), [TETA]₄H[(NH₄)(VO)₁₂{BP₂O₁₀}₆]·16H₂O (TETA= triethylenetetramine), [TETA]₄H[K(VO)₁₂{BP₂O₁₀}₆]-14H₂O (TETA = triethylenetetramine), [TETA]₄H[K(VO)₁₂{BP₂O₁₀}₆]·16H₂O (TETA = triethylenetetramine), (NH₄)ₓ(CₙH₂ₙ₊₁NH₃)_{y}[(NH₄)V₂P-₂BO₁₂]₆ (n = 1, 2, 3, 4, 5, 6, 7, 8, 9, 10, 11, 12, 13, 14, 15, 16, 17, 18, 19, 20), (C₄H₁₂N₂)₆[(VO)₂BP₂O₁₀]₄ · zH₂O (z = 1, 2, 3, 4, 5, 6, 7, 8, 9, 10, 11, 12, 13, 14, 15, 16, 17, 18, 19, 20), Na₁₄[Na{(VO)₂BP₂O₁₀}₅] ·nH₂O (n = 1, 2, 3, 4, 5, 6, 7, 8, 9, 10, 11, 12, 13, 14, 15, 16, 17, 18, 19, 20), (NH₄)₁₇[(NH₄), {(VO)₂BP₂O₁₀}₆]·nH₂O (n = 1, 2, 3, 4, 5, 6, 7, 8, 9, 10, 11, 12, 13, 14, 15, 16, 17, 18, 19, 20), (A)₁₇[(A) {(VO)₂BP₂O₁₀}₆]·nH₂O (A = NH₄, Li, Na, K, Cs, Rb, Ag, Tl) (n = 1, 2, 3, 4, 5, 6, 7, 8, 9, 10, 11, 12, 13, 14, 15, 16, 17, 18, 19, 20), [C₂H₁₀N₂]₂[(VO)₅(H₂O){BP₂O₁₀}₂] ·1.5H₂O, Na₂[VB₃P₂O₁₂(OH)] ·2.92H₂O, (NH₄)₂(C₂H₁₀N₂)₆[Sr(H₂O)₅]₂[V₂BP₂O₁₂]₆·10H₂O, (NH₄)₂(C₃H₁₂N₂)₆[Sr(H₂O)₄]₂[V₂BP₂O₁₂]₆·17H₂O, (NH₄)₂(C₃H₁₂N₃)₈[V₂P₂BO₁₂]₆·15H₂O, [TETA]₄H[(NH₄)(VO)₁₂{BP₂O_{10}6}]·14H₂O (TETA = triethylenetetramine), [TETA]₄H[(NH₄)(VO)₁₂{BP₂O₁₀}₆]·16H₂O (TETA = triethylenetetramine), [TETA]₄H[K(VO)₁₂{BP₂O₁₀}₆]·14H₂O (TETA = triethylenetetramine), [TETA]₄H[K(VO)₁₂{BP₂O₁₀}₆]·16H₂O (TETA = triethylenetetramine), (NH₄)ₓ(CₙH₂ₙ₊₁NH₃)_{y}[(NH₄)V₂P-₂BO₁₂]₆ (n = 1, 2, 3, 4, 5, 6, 7, 8, 9, 10, 11, 12, 13, 14, 15, 16, 17, 18, 19, 20), (C₄H₁₂N₂)₆[(VO)₂BP₂O₁₀]₄·zH₂O (z = 2, 6, 14), (NH₄)₁₇[(NH₄){(VO)₂BP₂O₁₀}₆]·nH₂O (n = 1, 2, 3, 4, 5, 6, 7, 8, 9, 10, 11, 12, 13, 14, 15, 16, 17, 18, 19, 20), [C₂H₁₀N₂]₂[(VO)₅(H₂O){BP₂O₁₀}₂] ·1.5H₂O, (C₂H₁₀N₂)₂[B₂P₄O₁₄(OH)₂], (N₂C₃H₅)_{3.8}(H₃O)_{1.2}[(VO)₄B₂P₅O₂₂]·0.3H₂O, (C₆H₁₄N₂)₂[VOB₂P₅O₁₆(OH)₅]·H₂O·H₃PO₄, (NH₄)₅[V₃BP₃O₁₉]·H₂O, (C₃N₂H₅)₈[MO₁₂B₂P₈O₅(OH)₃]·4H₂O, [C₆H₁₄N₂]₂[VOB₃P₄O₁₅(OH)₅]·4H₂O, (ImH₂) [Mo^{V}₅Mo^{VI}₇O₃₀(BPO₄)₂(O₃P-Ph)₆] (Im = imidazole, Ph = phenyl), Na₂[VB₃P₂O₁₂(OH)]·2.92H₂O, (NH₄)₃(C₄H₁₄N₂)_{4.5}[Sr(H₂O)₅]₂[Sr(H₂O)₄][V₂BP₂O₁₂]₆·10H₂O, (NH₄)ₓ(CₙH₂ₙ₊₁NH₃)_{y}[(NH₄)V₂P₂BO₁₂]₆ (x = 1, 2, 3, 4, 5, 6, 7, 8, 9, 10, 11, 12, 13, 14, 15, 16, 17, 18, 19, 20) (n = 1, 2, 3, 4, 5, 6, 7, 8, 9, 10, 11, 12, 13, 14, 15, 16, 17, 18, 19, 20), (C₂H₁₀N₂)₂[Na(VO)₁₀{BP₂O₈(OH)₂}₅]·22.5H₂O, CsV₃(H₂O)₂[B₂P₄O₁₆(OH)₄], LiCu₂[BP₂O₈(OH)₂], (C₃H₁₂N₂)Fe^{III}₆[B₄P₈O₃₂(OH)₈], K₅{W₄O₁₀[BP₂O₈(OH)_{2]}[HPO₄]₂}·0.5H₂O, Mg₂[BP₂O₇(OH)₃], NaAl[BP₂O₇(OH)₃], NaV[BP₂O₇(OH)₃], NaFe[BP₂O₇(OH)₃], NaGa[BP₂O₇(OH)₃], NaIn[BP₂O₇(OH)₃], CaNi[BP₂O₇(OH)₃], NH₄V[BP₂O₈(OH)], NH₄Fe[BP₂O₈(OH)], NH₄(Fe₁₋ₓVₓ)[BP₂O₈(OH)] (x = 0.1, 0.2, 0.3, 0.4, 0.47, 0.5, 0.53, 0.6, 0.7, 0.8, 0.9), NH₄Al[BP₂O₈(OH)], NH₄Ga[BP₂O₈(OH)], RbV[BP₂O₈(OH)], RbFe[BP₂O₈(OH)], Rb(Fe₁₋ₓVₓ) [BP₂O₈(OH)] (x = 0.1, 0.2, 0.3, 0.4, 0.47, 0.5, 0.53, 0.6, 0.7, 0.8, 0.9), RbAl[BP₂O₈(OH)], RbGa[BP₂O₈(OH)], CsV[BP₂O₈(OH)], CsFe[BP₂O₈(OH)], Cs(Fe₁₋ₓVₓ)[BP₂O₈(OH)] (x = 0.1, 0.2, 0.3, 0.4, 0.47, 0.5, 0.53, 0.6, 0.7, 0.8, 0.9), CsAl[BP₂O₈(OH)], CsGa[BP₂O₈(OH)], Pb₂[BP₂O₈(OH)], NH₄Sc[BP₂O₈(OH)], NH₄Fe[BP₂O₈(OH)], NH₄In[BP₂O₈(OH)], KSc[BP₂O₈(OH)], RbSc[B₂P₃O₁₁(OH)₃], CsSc[B₂P₃O₁₁(OH)₃], KFe [BP₂O₈(OH)], KIn[BP₂O₈(OH)], RbSc[BP₂O₈(OH)], RbSc[BP₂O₈(OH)], CsFe[BP₂O₈(OH)], RbIn[BP₂O₈(OH)], PbCo [BP₂O₈(OH)], PbZn[BP₂O₈(OH)], Sc(H₂O)₂[BP₂O₈]·H₂O, Fe(H₂O)₂[BP₂O₈]·H₂O, In(H₂O)₂[BP₂O₈]·H₂O, Sc(H₂O)₂[BP₂O₈], In(H₂O)₂[BP₂O₈], In[BP₂O₈]·0.8H₂O, NH₄Mg(H₂O)₂[BP₂O₈]·H₂O, NH₄(*M*)(H₂O)₂[BP₂O₈]·H₂O(*M* = Mn, Fe, Co, Ni, Cu, Zn, Mg, Ca, Cd), (Li-K) Mg (H₂O)₂[BP₂O₈]·H₂O, (A) (Mn-Zn) (H₂O)₂[BP₂O₈]·H₂O A = NH₄, Li, Na, K, Rb, Cs, Ag, Tl), (NH₄)(*M*)(H₂O)₂[BP₂O₈]·H₂O (M = Mn, Fe, Co, Ni, Cu, Zn, Mg, Ca, Cd), NH₄Mg (H₂O)₂[BP₂O₈]·H₂O, (H₃O)Zn(H₂O)₂[BP₂O₈]·H₂O, NaCd(H₂O)₂[BP₂O₈]·0.8H₂O, (NH₄)Cd(H₂O)₂[BP₂O₈]·0.72H₂O, (NH₄) Cd(H₂O)₂LBP₂O₈]·H₂O, KFe(H₂O)₂[BP₂O₈]·0.5H₂O, KFe(H₂O)₂[BP₂O₈]·H₂O, Rb₃₋₂ₓMgₓ(H₂O)₂LBP₂O₈]·zH₂O (z= 0-1) (x = 0-1.5), Rb₃₋₂ₓMnₓ(H₂O)₂[BP₂O₈]·zH₂O (z = 0-1) (x = 0-1.5), Rb₃₋₂ₓCoₓ(H₂O)₂[BP₂O₈]·zH₂O (z = 0-1) (x = 0-1), Rb₃₋₂ₓFeₓ(H₂O)₂[BP₂O₈]·zH₂O (z = 0-1) (x = 0-1.5), Cs₃₋₂ₓMgₓ(H₂O)₂LBP₂O₈]·zH₂O (z = 0-1) (x = 0-1), Cs₃₋₂ₓMnₓ(H₂O)₂[BP₂O₈]·zH₂O (z = 0-1) (x = 0-1.5), Cs₃₋₂ₓCox(H₂O)₂[BP₂O₈]·zH₂O (z = 0-1) (x = 0-1.5), Cs₃₋₂ₓFeₓ(H₂O)₂[BP₂O₈]·zH₂O (z = 0-1) (x = 0-1), (H₃O)_{0.5}Co_{1.25}(H₂O)[BP₂O₈]·H₂O, (H₃O)_{0.5}Mn_{1.25}(H₂O)[BP₂O₈]·H₂O, (NH₄)_{0.4}Fe^{II}_{0.55}Fe^{III}_{0.5}(H₂O)₂[BP₂O₈]·0.6H₂O, (NH₄)_{0.5}Fe^{II}_{0.5}Fe^{III}_{0.5}(H₂O)₂[BP₂O₈]·0.5H₂O, {(NH₄)₃₋₂ₓCOₓ}(H₂O)₂[BP₂O₈]·zH₂O, where (x = 0-1.5) (z = 0-1), Ca_{0.5}Ni(H₂O)₂[BP₂O₈]·H₂O, (Mg₁₋ₓ(Mg-Ba)ₓ)_{1.5}(H₂O)₂[BP₂O₈]·zH₂O (x = 0-1) (z = 0-1), (Mg₁₋ₓMnₓ)_{1.5}(H₂O)₂[BP₂O₈]·zH₂O (x = 0-1) (z = 0-1), (Mg₁₋ₓFeₓ)_{1.5}(H₂O)₂[BP₂O₈]·zH₂O (x = 0-1) (z = 0-1), (Mg₁₋ₓCoₓ)_{1.5}(H₂O)₂[BP₂O₈]·zH₂O (x = 0-1) (z = 0-1), (Mg₁₋ₓZnₓ)_{1.5}(H₂O)₂[BP₂O₈]·zH₂O (x = 0-1) (z = 0-1), Na₃[BP₂O₈], (C₂H₁₀N₂)₂[B₂P₄O₁₄(OH)₂], K₆Cu₂[B₄P₈O₂₈(OH)₆], Zn₃(C₆H₁₄N₂)₄[B₆P₁₂O₃₉(OH)₁₂][HPO₄], Na₄Cu₃[B₂P₄O₁₅(OH)₂]·2HPO₄, (C₄H₁₂N₂)₃Fe^{III}₆(H₂O)₄[B₆P₁₂O₅₀(OH)₂]·2H₂O, Na₂[BP₂O₇(OH)], (Na_{1.89}Ag_{0.11})₂[BP₂O₇(OH)], (N₂C₃H₅)_{3.8}(H₃O)₁.₂[(VO)₄B₂P₅O₂₂]·0.3H₂O, (C₆H₁₄N₂)₂[VOB₂P₅O₁₆(OH)₅]·H₂O·H₃PO₄, (NH₄) ₅[V₃BP₃O₁₉]·H₂O, [Co(en)₃][enH₂][V₃BP₃O₁₉]·4.5H₂O (en= ethylenediamine), (NH₄)₄Mn₉[BP₃O₁₁(OH)₂]₂[HPO₄]₂[PO₄]₂, [Co(en)₃][V₃BP₃O₁₉][H₂PO₄]·4H₂O (en= ethylenediamine), Mg₂(H₂O)[BP₃O₉(OH)₄], Ba₃[BP₃O₁₂], Pb₃[BP₃O₁₂], K₃[BP₃O₉(OH)₃], Pb₆[BP₄O₁₆][PO₄], Sr₆[BP₄O₁₆][PO₄], (C₃N₂H₅)₈[Mo₁₂B₂P₈O₅₉(OH)₃]·4H₂O, Co₅[BPO₆][PO₄]₂, Cr₂[BP₃O₁₂], Fe₂[BP₃O₁₂], V₂[BP₃O₁₂], [C₆H₁₄N₂]₂[VOB₃P₄O₁₅(OH)₅]·4H₂O, Na₂Cu[B₃P₂O₁₁(OH)]·0.67H₂O, Na₂Mg[B₃P₂O₁₁(OH)]·0.67H₂O, Na₂(Mn-Zn)[B₃P₂O₁₁(OH)]·0.67H₂O, Na₅(H₃O)Mg₃[B₃P₂O₁₁(OH)]₃·2H₂O, Na₅(H₃O)(Mn-Zn)₃[B₃P₂O₁₁(OH)]₃·2H₂O, (NH₄)₂[B₃PO₇(OH)₂], (NH₄)[B₃PO₆(OH)₃]·0.5H₂O, Li[B₃PO₆(OH)₃], K₃[B₅PO₁₀(OH)₃], K[B₆PO₁₀(OH)₄], Na₃[B₆PO₁₃], (C₂H₁₀N₂)[BPO₄F₂], (NH₄) [BPO₄F], (ImH₂)[Mo^{V}₅Mo^{VI}₇O₃₀(BPO₄)₂(O₃P-Ph)₆](Im = imidazole, Ph = phenyl), Zn[BPO₄(OH)₂], Ni[BPO₄(OH)₂], and mixtures thereof.

3. The mixture according to claim 1, wherein the at least one compound A is a borate phosphate selected from the group consisting of Zn₃[BO₃][PO₄], Mg₃[BO₃][PO₄], CO₃[BO₃][PO₄], La₇O₆(BO₃)(PO₄)₂, Pr₇O₆[BO₃]PO₄]₂, Nd₇O₆[BO₃]PO₄]₂, Sm₇O₆[BO₃][PO₄]₂, Gd₇O₆[BO₃][PO₄]₂, Dy₇O₆[BO₃][PO₄]₂, Mn₃ (OH)₂[B(OH)₄][PO₄], and mixtures thereof.

4. The mixture according to claim 1, wherein the metalloborophosphate comprises a metal selected from the group of Be, Zn, Co, and mixtures thereof, in the anionic moiety.

5. The mixture according to claim 1 or 4, wherein the at least one compound A is a metalloborophosphate selected from the group consisting of NH₄[ZnBP₂O₈], Rb[ZnBP₂O₈], Cs[ZnBP₂O₈], NH₄[(Zn₁₋ₓCoₓ)BP₂O] (x = 0, 0.1, 0.2, 0.3, 0.4, 0.5, 0.6, 0.7, 0.8, 0.9, 1.0), Na[ZnBP₂O₈]·H₂O, (C₄N₃H₁₆)[Zn₃B₃P₆O₂₄]·H₂O, (C₆N₄H₂₂)_{1.5}[Zn₆B₆P₁₂O₄₈]·1.5H₂O, NH₄[ZnBP₂O₈], K[ZnBP₂O₈], Na[BeBP₂O₈]·xH₂O (x = 0-1) K[BeBP₂O₈]·xH₂O (x = 0-1), NH₄[BeBP₂O₈]·xH₂O (x = 0-1), [*M*BP₂O₈] (M = B, Al, Ga), and mixtures thereof.

6. The mixture according to any of claims 1 to 5, wherein the at least one plastic K is selected from the group consisting of polyoxymethylene homo- or copolymers, polycarbonates, polyesters, polyolefins, poly(meth)acrylates, polyamides, vinylaromatic polymers, polyarylene ethers, epoxy resins and mixtures thereof.

7. The mixture according to any of claims 1 to 6, wherein at least one flame retardant is also present, selected from the group consisting of phosphorus-containing compounds, nitrogen-containing compounds, metal hydroxides, metal oxides, boron-containing compounds, silicates, silicon dioxide, sulfates, carbonates and mixtures thereof.

8. The mixture according to claim 7, wherein the at least one additional flame retardant is selected from the group consisting of triphenylphosphine oxide, aluminium triethylphosphinate, zinc diethylphosphinate, melamine cyanurate, melamine phosphate, melamine polyphosphate, melamine pyrophosphate, melamine ammonium polyphosphate, melamine ammonium pyrophosphate, melamine borate, triphenyl phosphate, resorcinol bis(diphenyl phosphate), bisphenol A bis(diphenyl phosphate), resorcinol bis(2,6-dixylylenyl phosphate), aluminium hydroxide, aluminium oxide hydroxide, magnesium dihydroxide, zinc oxide, molybdenum trioxide, antimony oxide, aluminium trihydroxide, zinc borate, calcium silicate, magnesium silicate, calcium sulfate, magnesium carbonate, dihydrooxaphosphaphenanthrene, dihydrooxaphosphaphenanthrenehydroquinone, potassium diphenyl sulfone sulfonate, polymethylphenylsiloxane, potassium butylperfluorosulfonate and mixtures thereof.

9. The mixture according to any of claims 1 to 8, wherein an anti dripping agent is present.

10. The use of a compound selected from the group consisting of borophosphates, borate phosphates, metalloborophosphates, and mixtures thereof, as flame retardant in plastics, where the amount present of said compound is from 1.0 to 30% by weight, based on the entire mixture.

11. The use according to claim 10, wherein at least one flame retardant is also present, selected from the group consisting of phosphorus-containing compounds, nitrogen-containing compounds, metal hydroxides, metal oxides, boron-containing compounds, silicates, silicon dioxide, sulfates, carbonates and mixtures thereof.

12. The use according to claim 11, wherein the at least one additional flame retardant is selected from the group consisting of triphenylphosphine oxide, aluminium triethylphosphinate, zinc diethylphosphinate, melamine cyanurate, melamine phosphate, melamine polyphosphate, melamine pyrophosphate, melamine ammonium polyphosphate, melamine ammonium pyrophosphate, melamine borate, triphenyl phosphate, resorcinol bis(diphenyl phosphate), bisphenol A bis(diphenyl phosphate), resorcinol bis(2,6-dixylylenyl phosphate), aluminium hydroxide, aluminium oxide hydroxide, magnesium dihydroxide, zinc oxide, molybdenum trioxide, antimony oxide, aluminium trihydroxide, zinc borate, calcium silicate, magnesium silicate, calcium sulfate, magnesium carbonate, dihydrooxaphosphaphenanthrene, dihydrooxaphosphaphenanthrenehydroquinone, potassium diphenyl sulfone sulfonate, polymethylphenylsiloxane, potassium butylperfluorosulfonate and mixtures thereof.

13. A process for the production of a mixture according to any of claims 1 to 9 via mixing of the at least one plastic K with at least one compound A.

## Revendications

1. Mélange, contenant au moins un plastique K et 1,0 à 30 % en poids, par rapport à l'ensemble du mélange, d'au moins un composé A, choisi dans le groupe constitué par les borophosphates, les borates-phosphates, les métalloborophosphates et les mélanges de ceux-ci.

2. Mélange selon la revendication 1, **caractérisé en ce que** ledit au moins un composé A est un borophosphate, choisi dans le groupe constitué par Mg₃(H₂O)₆[{BPO₄(OH)₃}₂], Mn[BPO₄(OH)₂], Fe[BPO₄(OH)₂], Co[BPO₄(OH)₂], Fe[B₂P₂O7(OH))₅], Fe[B₂P₂O₇(OH)₅]·H₂O, Ga[B₂P₂O₇(OH)₅], Al[B₂P₂O₇(OH)₅]·H₂O, Al[B₂P₂O₇(OH)₅], Ca[BPO₅], Sr[BPO₅], Ba[BPO₅], Li₃[B₆PO₁₃], Li₃[BP₂O₈], Na₃[B₆PO₁₃], Na₃[BP₂O₈], K₃[B₆PO₁₃], K₃[BP₂O₈], Rb₃[B₈PO₁₃], Cs₃[BP₂O₈], Pb[BPO₅], Mg(H₂O)₂[BPO₄(OH)₂], (Mg₁₋ₓNiₓ) (H₂O)₂[BPO₄(OH)₂](x = 0 à 1), Cu(H₂O)₂[B₂P₂O₈(OH)₂], Mg(H₂O)₂[B₂P₂O₈(OH)₂]·H₂O, (Mg₁₋ₓCoₓ)(H₂O)₂[B₂P₂O₈(OH)₂]·H₂O avec (x = 0 à 1), [Co(en)₃[B₂P₃O₁₁(OH)₂] (en = éthylène diamine), Rb₂Co₃(H₂O)₂[B₄P₆O₂₄(OH)₂], (C₂H₁₀N₂)Mg[B₂P₃O₁₂(OH)], (C₄N₂H₁₂)Mn[B₂P₃O₁₂(OH)], (C₂H₁₀N₂)(*M*)[B₂P₃O₁₂(OH)](*M* = Mn, Fe, Co, Ni, Cu, Zn, Mg, Ca, Cd), (C₂H₁₀N₂)Cd [B₂P₃O₁₂(OH)], (C₄H₁₆N₃)Cd[B₂P₃O₁₂(OH)]Cl, Na₅[B₂P₃O₁₃], Sr₆BP₅O₂₀, Ca₆BP₅O₂₀, Mg₆BP₅O₂₀, Ba₆BP₅O₂₀, Ca₆[BP₄O₁₆][PO₄], Sr₆[BP₄O₁₆][PO₄], Mg₆[BP₄O₆][PO₄], Ba₆[BP₄O₆][PO₄]Mn (C₃H₁₂N₂)[B₂P₃O₁₂(OH)], Mn(C₄H₁₂N₂)[B₂P₃O₁₂(OH)], Co(C₄H₁₂N₂)[B₂P₃O₁₂(OH)], Zn(C₄H₁₂N₂)[B₂P₃O₁₂(OH)], Mn(C₆H₁₄N₂)_{0,5}(C₄H₁₂N₂)[B₂P₃O₁₂(OH)], Rb₃[B₂P₃O₁₁(OH)₂], (NH₄)₂(C₃H₁₂N₃)₈[V₂P₂BO₁₂]₆·15H₂O, [TETA]₄H[₁.₂[(NH₄)(VO)₁₂{BP₂O₁₀}₆]·14H₂O (TETA = triéthylène tétraamine), [TETA]₄H[(NH₄)(VO)₁₂{BP₂O₁₀}₆]·16H₂O (TETA = triéthylène tétraamine), [TETA]₄H[[K(VO)₁₂{BP₂O₁₀}₆]·14H₂O (TETA = triéthylène tétraamine), [TETA]₄H[K(VO)₁₂{BP₂O₁₀}₆]·16H₂O (TETA = triéthylène tétraamine), (NH₄)ₓ(CₙH₂ₙ₊₁NH₃)_{y}[(NH₄)V₂P₂BO₁₂]₆·(n = 1, 2, 3, 4, 5, 6, 7, 8, 9, 10, 11, 12, 13, 14, 15, 16, 17, 18, 19, 20), (C₄H₁₂N₂)₆[(VO)₂BP₂O₁₀]₄·zH₂O (z = 1, 2, 3, 4, 5, 6, 7, 8, 9, 10, 11, 12, 13, 14, 15, 16, 17, 18, 19, 20), Na₁₄[Na{(VO)₂BP₂O₁₀}₅]·nH₂O (n = 1, 2, 3, 4, 5, 6, 7, 8, 9, 10, 11, 12, 13, 14, 15, 16, 17, 18, 19, 20), (NH₄)₁₇[(NH₄), {(VO)₂BP₂O₁₀}₆]·nH₂O (n = 1, 2, 3, 4, 5, 6, 7, 8, 9, 10, 11, 12, 13, 14, 15, 16, 17, 18, 19, 20), (A)₁₇[(A){(VO)₂BP₂O₁₀}₆]·nH₂O (A = NH₄, Li, Na, K, Cs, Rb, Ag, Tl) (n = 1, 2, 3, 4, 5, 6, 7, 8, 9, 10, 11, 12. 13, 14, 15, 16, 17, 18, 19, 20), [C₂H₁₀N₂]₂[(VO)₅(H₂O){BP₂O₁₀}₂]·1,5H₂O, Na₂[VB₃P₂O₁₂(OH)]·2,92H₂O, (NH₄)₂(C₂H₁₀N₂)₆[Sr(H₂O)₅]₂[V₂BP₂O₁₂]₆·10H₂O, (NH₄)₂(C₃H₁₂N₂)₆[Sr(H₂O)₄]₂[V₂BP₂O₁₂]₆·17H₂O, (NH₄)₂(C₃H₁₂N₃)₈[V₂P₂BO₁₂]₆·15H₂O, [TETA]₄H[₁.₂[(NH₄)(VO)₁₂{BP₂O₁₀}₆]·14H₂O (TETA = triéthylène tétraamine), [TETA]₄H[(NH₄)(VO)₁₂{BP₂O₁₀}₆]·16H₂O (TETA = triéthylène tétraamine), [TETA]₄H[[K(VO)₁₂{BP₂O₁₀}₆]·14H₂O (TETA = triéthylène tétraamine), [TETA]₄H[[K(VO)₁₂{BP₂O₁₀}₆]·16H₂O (TETA = triéthylène tétraamine), (NH₄)ₓ(CₙH₂ₙ₊₁NH₃)_{y}[(NH₄)V₂P₂BO₁₂]₈(n = 1, 2, 3, 4, 5, 6, 7, 8. 9, 10, 11, 12, 13, 14, 15, 16, 17, 18, 19, 20), (C₄H₁₂N₂)₆[(VO)₂BP₂O₁₀]₄·zH₂O (z = 2, 6, 14), (NH₄)₁₇[(NH₄){(VO)₂BP₂O₁₀}₆]·nH₂O (n = 1, 2, 3, 4, 5, 6, 7, 8, 9, 10, 11, 12, 13, 14, 15, 16, 17, 18, 19, 20), [C₂H₁₀N₂]₂[(VO)₅(H₂O){BP₂O₁₀}₂·1,5H₂O, (C₂H₁₀N₂)₂[B₂P₄O₁₄(OH)₂], (N₂C₃H₅)_{3,8}(H₃O)_{1,2}[(VO)₄B₂P₅O₂₂]·0,3H₂O, (C₆H₁₄N₂)₂[VOB₂P₅O₁₆(OH)₅]·H₂O·H₃PO₄, (NH₄)₅[V₃BP₃O₁₉]·H₂O, (C₃N₂H₅)₈[Mo₁₂B₂P₈O₅₉(OH)₃]·4H₂O, [C₆H₁₄N₂]₂[VOB₃P₄O₁₅(OH)₅]·4H₂O, (ImH₂)[Mo^{V}₅Mo^{VI}₇O₃₀ (BPO₄)₂(O₃P-Ph)₆](Im = imidazole, Ph = phényle), Na₂[VB₃P₂O₁₂(OH)]·2,92H₂O, (NH₄)₃(C₄H₁₄N₂)_{4,5}[Sr(H₂O)₅]₂[Sr(H₂O)₄][V₂BP₂O₁₂]₆·10H₂O, (NH₄)ₓ(CₙH₂ₙ₊₁NH₃)_{y}[(NH₄)V₂P₂BO₁₂]₆(= 1, 2, 3, 4, 5, 6, 7, 8, 9, 10, 11, 12, 13, 14, 15, 16, 17, 18, 19, 20) (n = 1, 2, 3, 4, 5, 6, 7, 8, 9, 10, 11, 12, 13, 14, 15, 16, 17, 18, 19, 20), (C₂H₁₀N₂)₂[Na(VO)₁₀{BP₂O₈(OH)₂}₅]·22,5 H₂O, CsV₃(H₂O)₂[B₂P₄O₁₆(OH)₄], LiCu₂[BP₂O₈(OH)₂], (C₃H₁₂N₂)Fe^{III}₆[B₄P₈O₃₂(OH)₈], K₅{W₄O₁₀[BP₂O₈(OH)₂][HPO₄]₂}·0,5H₂O, Mg₂[BP₂O₇(OH)₃], NaAl[BP₂O₇(OH)₃], NaV[BP₂O₇(OH)₃], NaFe[BP₂O₇(OH)₃], NaGa[BP₂O₇(OH)₃], NaIn[BP₂O₇(OH)₃], CaNi[BP₂O₇(OH)₃], NH₄V[BP₂O₈(OH)], NH₄Fe[BP₂O₈(OH)], NH₄(Fe₁₋ₓVₓ)[BP₂O₈(OH)] (x = 0,1, 0,2, 0,3, 0,4, 0,47, 0,5, 0,53, 0,6, 0,7, 0,8, 0.9), NH₄Al[BP₂O₈(OH)], NH₄Ga [BP₂O₈(OH)], RbV[BP₂O₈(OH)], RbFe[BP₂O₈(OH)], Rb(Fe₁₋ₓVₓ)[BP₂O₈(OH)] (x = 0,1, 0,2, 0,3, 0,4, 0,47, 0,5, 0,53, 0,6, 0,7, 0,8, 0,9), RbAl[BP₂O₈(OH)], RbGa[BP₂O₈(OH)], CsV[BP₂O₈(OH)], CsFe[BP₂O₈(OH)], Cs(Fe₁₋ₓVₓ)[BP₂O₈(OH)] (x = 0,1, 0,2, 0,3, 0,4, 0,47, 0,5, 0,53, 0,6, 0,7, 0,8, 0,9), CsAl[BP₂O₈(OH)], CsGa[BP₂O₈(OH)], Pb₂[BP₂O₈(OH)], NH₄Sc[BP₂O₈(OH)], NH₄Fe[BP₂O₈(OH)], NH₄In[BP₂O₈(OH)], KSc[BP₂O₈(OH)], RbSc[B₂P₃O₁₁(OH)₃], CsSc(B₂P₃O₁₁(OH)], KFe[BP₂O₈(OH)], KIn [BP₂O₈(OH)], RbSc[BP₂O₈(OH)], RbSc[BP₂O₈(OH)], CsFe[BP₂O₈(OH)], RbIn[BP₂O₈(OH)], PbCo[BP₂O₈(OH)], PbZn[BP₂O₈(OH)], Sc(H₂O)₂[BP₂O₈]·H₂O, Fe(H₂O)₂[BP₂O₈]·H₂O, In(H₂O)₂[BP₂O₈]·H₂O, Sc(H₂O)₂[BP₂O₈], In(H₂O)₂[BP₂O₈], In[BP₂O₈]·0,8H₂O, NH₄Mg (H₂O)₂[BP₂O₈]H₂O, NH₄(*M*)(H₂O)₂[BP₂O₈]·H₂O (M = Mn, Fe, Co, Ni, Cu, Zn, Mg, Ca, Cd), (Li-K)Mg(H₂O)₂[BP₂O₈]·H₂O, (A) (Mn-Zn)(H₂O)₂[BP₂O₈]·H₂O A = NH₄, Li, Na, K, Rb, Cs, Ag, Tl), (NH₄)(*M*)(H₂O)₂[BP₂O₈]·H₂O (M = Mn, Fe, Co, Ni, Cu, Zn, Mg, Ca, Cd), NH₄Mg(H₂O)₂[BP₂O₈]·H₂O, (H₃O)Zn(H₂O)₂[BP₂O₈]·H₂O, NaCd(H₂O)₂[BP₂O₈]·0,8 H₂O, (NH₄)Cd(H₂O)₂[BP₂O₈]·0,72H₂O, (NH₄)Cd(H₂O)₂[BP₂O₈]·H₂O, KFe(H₂O)₂[BP₂O₈]·0,5H₂O, KFe(H₂O)₂[BP₂O₈]·H₂O, Rb₃₋₂ₓMgₓ(H₂O)₂[BP₂O₈]·zH₂O (z= 0 à 1) (x = 0 à 1, 5), Rb₃₋₂ₓMnₓ(H₂O)₂[BP₂O₈]·zH₂O (z= 0 à 1) (x = 0 à 1, 5), Rb₃₋₂ₓCOₓ (H₂O)₂(BP₂O₈]·zH₂O (z= 0 à 1) (x = 0 à 1), Rb₃₋₂ₓFeₓ(H₂O)₂[BP₂O₈]·zH₂O (z = 0 à 1) (x = 0 à 1, 5), Cs₃₋₂ₓMgₓ(H₂O)₂[BP₂O₈]·zH₂O (z = 0 à 1) (x = 0 à 1), Cs₃₋₂ₓMnₓ(H₂O)₂[BP₂O₈]·zH₂O (z = 0 à 1) (x = 0 à 1, 5), Cs₃₋₂ₓCOₓ(H₂O)₂[BP₂O₈]·zH₂O (z = 0 à 1) (x = 0 à 1, 5), Cs₃₋₂ₓFeₓ(H₂O)₂[BP₂O₈]·zH₂O (z = 0 à 1) (x = 0 à 1), (H₃O)_{0,5}Co_{1,25}(H₂O)[BP₂O₈]·H₂O, (H₃O)_{0,5}Mn_{1,25}(H₂O)[BP₂O₈]·H₂O, (NH₄)_{0,4}Fe^{II}_{0,55}Fe^{III}_{0,5}(H₂O)₂[BP₂O₈]·0,6H₂O, (NH₄)_{0,5}Fe^{II}_{0,5}Fe^{III}_{0,5}(H₂O)₂[BP₂O₈]·0,5H₂O, {(NH₄)₃₋₂ₓCOₓ}(H₂O)₂[BP₂O₈]·zH₂O avec (x = 0 à 1, 5) (z = 0 à 1), Ca_{0,5}Ni(H₂O)₂[BP₂O₈]·H₂O, (Mg₁₋ₓ(Mg-Ba)ₓ)_{1,5}(H₂O)₂[BP₂O₈]·zH₂O (x = 0 à 1) (z = 0 à 1), (Mg₁₋ₓMnₓ)_{1,5}(H₂O)₂[BP₂O₈]·zH₂O (x = 0 à 1) (z = 0 à 1), (Mg₁₋ₓFeₓ)_{1,5}(H₂O)₂[BP₂O₈]·zH₂O (x = 0 à 1) (z = 0 à 1), (Mg₁₋ₓCoₓ)_{1,5}(H₂O)₂[BP₂O₈]·zH₂O (x = 0 à 1) (z = 0 à 1), (Mg₁₋ₓZnₓ)_{1,5}(H₂O)₂[BP₂O₈]·zH₂O (x = 0 à 1) (z = 0 à 1), Na₃[BP₂O₈], (C₂H₁₀N₂)₂[B₂P₄O₁₄(OH)₂], K₆Cu₂[B₄P₈O₂₈(OH)₆], Zn₃(C₆H₁₄N₂)₄[B₆P₁₂O₃₉(OH)₁₂][HPO₄], Na₄Cu₃[B₂P₄O₁₅(OH)₂]·2HPO₄, (C₄H₁₂N₂)₃Fe^{III}₆(H₂O)₄(B₆P₁₂O₅₀(OH)₂]·2H₂O, Na₂[BP₂O₇(OH)], (Na_{1,89}Ag_{0,11})₂[BP₂O₇(OH)], (N₂C₃H₅)_{3,8}(H₃O)_{1,2}[(VO)₄B₂P₅O₂₂]·0,3H₂O, (C₆H₁₄N₂)₂[VOB₂P₅O₁₆(OH)₅]·H₂O·H₃PO₄, (NH₄)₅[V₃BP₃O₁₉]·H₂O, [Co(en)₃][enH₂][V₃BP₃O₁₉]·4,5H₂O (en = éthylène diamine), (NH₄)₄Mn₉[BP₃O₁₁(OH)₂]₂[HPO₄]₂[PO₄]₂, [Co(en)₃][V₃BP₃O₁₉][H₂PO₄]·4H₂O (en = éthylène diamine), Mg₂(H₂O)[BP₃O₉(OH)₄], Ba₃[BP₃O₁₂], Pb₃[BP₃O₁₂], K₃[BP₃O₉(OH)₃], Pb₆[BP₄O₁₆][PO₄], Sr₆[BP₄O₁₆)[PO₄], (C₃N₂H₅)₈[MO₁₂B₂P₈O₅₉(OH)₃]·4H₂O, Co₅[BPO₆][PO₄]₂, Cr₂[BP₃O₁₂], Fe₂[BP₃O₁₂], V₂[BP₃O₁₂], [C₆H₁₄N₂]₂[VOB₃P₄O₁₅(OH)₅]·4H₂O, Na₂Cu[B₃P₂O₁₁(OH)]·0,67H₂O, Na₂Mg[B₃P₂O₁₁(OH)]·0,67H₂O, Na₂(Mn-Zn)[B₃P₂O₁₁(OH)]·0,67H₂O, Na₅(H₃O)Mg₃[B₃P₂O₁₁(OH)]₃·2H₂O, Na₅(H₃O)(Mn-Zn)₃[B₃P₂O₁₁(OH)]₃·2H₂O, (NH₄)₂(B₃PO₇(OH)₂], (NH₄)[B₃PO₆(OH))₃]·0,5H₂O, Li[B₃PO₆(OH)₃], K₃(B₅PO₁₀(OH)₃], K[B₆PO₁₀(OH)₄], Na₃[B₆PO₁₃], (C₂H₁₀N₂)[BPO₄F₂], (NH₄)[BPO₄F], (ImH₂)[Mo^{V}₅Mo^{VI}₇O₃₀(BPO₄)₂(O₃P-Ph)₆] (Im = imidazole, Ph = phényle), Zn[BPO₄(OH)₂], Ni[BPO₄(OH)₂], et les mélanges de ceux-ci.

3. Mélange selon la revendication 1, **caractérisé en ce que** ledit au moins un composé A est un borate-phosphate, choisi dans le groupe constitué par Zn₃[BO₃][PO_{4]}, Mg₃[BO₃][PO₄], Co₃[BO₃][PO₄], La₇O₆(BO₃)(PO₄)₂, Pr₇O₆[BO₃][PO₄]₂, Nd₇O₆[BO₃][PO₄]₂, Sm₇O₆[BO₃][PO₄]₂, Gd₇O₆[BO₃][PO₄]₂, Dy₇O₆[BO₃][PO₄]₂, Mn₃(OH)₂[B(OH)₄][PO₄] et les mélanges de ceux-ci.

4. Mélange selon la revendication 1, **caractérisé en ce que** le métalloborophosphate contient un métal choisi dans le groupe constitué par Be, Zn, Co et les mélanges de ceux-ci, dans la partie anionique.

5. Mélange selon la revendication 1 ou 4, **caractérisé en ce que** ledit au moins un composé A est un métalloborophosphate, choisi dans le groupe constitué par NH₄[ZnBP₂O₈], Rb[ZnBP₂O₈], Cs[ZnBP₂O₈], NH₄[(Zn₁₋ₓCoₓ)BP₂O₈] (x = 0, 0,1, 0,2, 0,3, 0,4, 0,5, 0,6, 0,7, 0,8, 0,9, 1,0), Na[ZnBP₂O₈]·H₂O, (C₄N₃H₁₆)[Zn₃B₃P₆O₂₄]·H₂O, (C₆N₄H₂₂)_{1,5}[Zn₆B₆P₁₂O₄₈]·1,5H₂O, NH₄[ZnBP₂O₈], K[ZnBP₂O₈], Na[BeBP₂O₈]·xH₂O (x = 0 à 1), K[BeBP₂O₈]·xH₂O (x = 0 à 1), NH₄[BeBP₂O₈]·xH₂O (x = 0 à 1), [*M*BP₂O₈] (M = B, Al, Ga) et les mélanges de ceux-ci.

6. Mélange selon l'une quelconque des revendications 1 à 5, **caractérisé en ce que** ledit au moins un plastique K est choisi dans le groupe constitué par les homo- ou copolymères de polyoxyméthylène, les polycarbonates, les polyesters, les polyoléfines, les poly(méth)acrylates, les polyamides, les polymères aromatiques de vinyle, les éthers de polyarylène, les résines époxy et les mélanges de ceux-ci.

7. Mélange selon l'une quelconque des revendications 1 à 6, **caractérisé en ce qu'**au moins un agent ignifuge est en outre présent, choisi dans le groupe constitué par les composés contenant du phosphore, les composés contenant de l'azote, les hydroxydes métalliques, les oxydes métalliques, les composés contenant du bore, les silicates, le dioxyde de silicium, les sulfates, les carbonates et les mélanges de ceux-ci.

8. Mélange selon la revendication 7, **caractérisé en ce que** ledit au moins un agent ignifuge supplémentaire est choisi dans le groupe constitué par l'oxyde de triphénylphosphine, le triéthylphosphinate d'aluminium, le diéthylphosphinate de zinc, le cyanurate de mélamine, le phosphate de mélamine, le polyphosphate de mélamine, le pyrophosphate de mélamine, le polyphosphate de mélamine-ammonium, le pyrophosphate de mélamine-ammonium, le borate de mélamine, le phosphate de triphényle, le bis-(diphénylphosphate) de résorcinol, le bis-(diphénylphosphate) de bisphénol A, le bis-(2,6-dixylylénylphosphate) de résorcinal, l'hydroxyde d'aluminium, l'oxyhydroxyde d'aluminium, le dihydroxyde de magnésium, l'oxyde de zinc, le trioxyde de molybdène, l'oxyde d'antimoine, le trihydroxyde d'aluminium, le borate de zinc, le silicate de calcium, le silicate de magnésium, le sulfate de calcium, le carbonate de magnésium, le dihydrooxaphosphaphénantrène, la dihydrooxaphosphaphénantrène-hydroquinone, le diphénylsulfone-sulfonate de potassium, le polyméthylphénylsiloxane, le butylperfluorosulfonate de potassium et les mélanges de ceux-ci.

9. Mélange selon l'une quelconque des revendications 1 à 8, **caractérisé en ce qu'**un agent anti-égouttement est présent.

10. Utilisation d'un composé choisi dans le groupe constitué par les borophosphates, les borates-phosphates, les métalloborophosphates et les mélanges de ceux-ci en tant qu'agent ignifuge dans des plastiques, ce composé étant présent en une quantité de 1,0 à 30 % en poids, par rapport à l'ensemble du mélange.

11. Utilisation selon la revendication 10, **caractérisée en ce qu'**au moins un agent ignifuge est en outre présent, choisi dans le groupe constitué par les composés contenant du phosphore, les composés contenant de l'azote, les hydroxydes métalliques, les oxydes métalliques, les composés contenant du bore, les silicates, le dioxyde de silicium, les sulfates, les carbonates et les mélanges de ceux-ci.

12. Utilisation selon la revendication 11, **caractérisée en ce que** ledit au moins un agent ignifuge supplémentaire est choisi dans le groupe constitué par l'oxyde de triphénylphosphine, le triéthylphosphinate d'aluminium, le diéthylphosphinate de zinc, le cyanurate de mélamine, le phosphate de mélamine, le polyphosphate de mélamine, le pyrophosphate de mélamine, le polyphosphate de mélamine-ammonium, le pyrophosphate de mélamine-ammonium, le borate de mélamine, le phosphate de triphényle, le bis-(diphénylphosphate) de résorcinol, le bis-(diphénylphosphate) de bisphénol A, le bis-(2,6-dixylylénylphosphate) de résorcinal, l'hydroxyde d'aluminium, l'oxyhydroxyde d'aluminium, le dihydroxyde de magnésium, l'oxyde de zinc, le trioxyde de molybdène, l'oxyde d'antimoine, le trihydroxyde d'aluminium, le borate de zinc, le silicate de calcium, le silicate de magnésium, le sulfate de calcium, le carbonate de magnésium, le dihydrooxaphosphaphénantrène, la dihydrooxaphosphaphénantrène-hydroquinone, le diphénylsulfone-sulfonate de potassium, le polyméthylphénylsiloxane, le butylperfluorosulfonate de potassium et les mélanges de ceux-ci.

13. Procédé de fabrication d'un mélange selon l'une quelconque des revendications 1 à 9 par mélange dudit au moins un plastique K avec au moins un composé A.
